# EUROPEAN PATENT APPLICATION

(11) **EP 4 836 258 A1**
(43) Date of publication of application: **04.11.2026**
(21) Application number: 24911397.8
(22) Date of filing: 27.12.2024
(51) Int. Cl.: H02K 11/22, B60G 17/019, H02K 41/03, F16F 15/03

(54) **ELECTROMAGNETIC ACTUATOR, VIBRATION REDUCTION APPARATUS, SUSPENSION SYSTEM, AND VEHICLE**

(30) Priority: 29.12.2023 CN 202311868498
(71) Applicant: BYD Company Limited, Shenzhen, Guangdong 518118 (CN)
(72) Inventor: LIAO, Yinsheng, Shenzhen, Guangdong 518118 (CN); SUN, Xianmeng, Shenzhen, Guangdong 518118 (CN); ZHOU, Keyu, Shenzhen, Guangdong 518118 (CN); ZHANG, Feng, Shenzhen, Guangdong 518118 (CN); LI, Song, Shenzhen, Guangdong 518118 (CN)
(74) Representative: Mathys & Squire
(86) International application number: PCT/CN2024/142978
(87) International publication number: WO 2025/140476

(57) **Abstract**

An electromagnetic actuator (1000), a vibration-damping apparatus (5000), a suspension system (10000), and a vehicle (20000) are provided. The electromagnetic actuator includes a first component (220), a second component (210), and a detection module (900). The second component is coupled to the first component, so that the first component and the second component are movable relative to each other. The detection module is configured to detect relative displacement between the first component and the second component.

## Description

### CROSS-REFERENCES TO RELATED APPLICATIONS

This application claims priority to Chinese Patent Application No. 202311868498.9, filed on December 29, 2023 and entitled "ELECTROMAGNETIC ACTUATOR, VIBRATION-DAMPING APPARATUS, SUSPENSION SYSTEM, AND VEHICLE", which is incorporated herein by reference in its entirety.

### TECHNICAL FIELD

This application pertains to the field of vehicle technologies, and specifically relates to an electromagnetic actuator, a vibration-damping apparatus, a suspension system, and a vehicle.

### BACKGROUND

An electromagnetic actuator is a motor that directly generates linear movement by using an electromagnetic force, and usually includes a stator component and a mover component. The stator component includes a winding coil wound around an iron core shaft, and the winding coil is electrically connected to a power supply and can generate a magnetic field when energized, to generate a magnetic force with the mover component and drive the mover component to move along a straight line.

However, an existing electromagnetic actuator cannot effectively detect the location of the mover component, which affects working performance of the electromagnetic actuator.

### SUMMARY

In view of this, this application provides an electromagnetic actuator. The electromagnetic actuator can effectively detect the location of a mover component, which resolves a technical problem in conventional technologies that an electromagnetic actuator cannot effectively detect the location of a mover component and working performance of the electromagnetic actuator is affected.

The electromagnetic actuator according to an embodiment of this application includes: a first component; a second component, the second component and the first component being coupled so that the first component and the second component are movable relative to each other; and a detection module, the detection module being configured to detect relative displacement between the first component and the second component.

In the electromagnetic actuator according to this embodiment of this application, the detection module is disposed to detect relative displacement between the first component and the second component, so as to accurately determine a relative location between the first component and the second component, facilitate control of movement of the first component and the second component, ensure stability of relative movement between the first component and the second component, and ensure working performance of the electromagnetic actuator.

Optionally, the electromagnetic actuator further includes a housing. An accommodation cavity is formed in the housing. Both the first component and the second component are disposed in the accommodation cavity. One of the first component and the second component is connected to the housing, and the first component and the second component are coupled so that the one of the first component and the second component moves along an axis with the housing.

Optionally, the detection module includes a laser sensor, and the laser sensor is disposed at a top or a bottom of the accommodation cavity.

Optionally, the housing is configured to be fastened to an axle, and the electromagnetic actuator further includes a mounting bracket. The mounting bracket is mounted on an outer side of the housing and configured to connect the axle and the housing. The laser sensor is disposed in the mounting bracket, and a bottom wall of the accommodation cavity is provided with a clearance hole for providing clearance for an optical path of the laser sensor.

Optionally, the electromagnetic actuator further includes a center rod. The center rod is connected to the other one of the first component and the second component. The detection module includes a first detection member and a second detection member coupled to the first detection member. The first detection member is disposed on one of the housing and the center rod, and the second detection member is disposed on the other one of the housing and the center rod.

Optionally, the housing is configured to be fastened to an axle. The center rod passes through a top wall of the housing to be connected to a vehicle body. The first detection member is disposed on the housing, and the second detection member is disposed on the center rod.

Optionally, the first detection member is disposed on an outer side of the housing.

Optionally, a bearing is disposed between the center rod and the housing, and a part of a projection of the first detection member in a radial direction that overlaps the housing partially overlaps a projection of the bearing in the radial direction.

Optionally, a bearing is disposed between the center rod and the housing, and the first detection member is spaced apart from the bearing.

Optionally, a mounting bracket is disposed at a bottom of the housing, and a clearance channel communicating with the accommodation cavity is provided in the mounting bracket. At least a part of the second detection member is located in the clearance channel, and the first detection member is capable of moving into the clearance channel to be coupled to the second detection member.

Optionally, the second detection member forms an arc shape.

A vibration-damping apparatus according to an embodiment of this application includes the foregoing electromagnetic actuator, wherein the electromagnetic actuator is configured to be connected between a wheel and a vehicle body.

In the vibration-damping apparatus according to this embodiment of this application, the foregoing electromagnetic actuator is used to ensure working performance of the vibration-damping apparatus.

A suspension system according to an embodiment of this application includes the foregoing vibration-damping apparatus.

In the suspension system according to this embodiment of this application, the foregoing vibration-damping apparatus is used to ensure working performance of the suspension system.

A vehicle according to an embodiment of this application includes the foregoing suspension system.

In the vehicle according to this embodiment of this application, the foregoing suspension system is used to ensure working performance of the vehicle and improve comfort of the vehicle.

Additional aspects and advantages of this application will become clear in the following description or will be understood from the practice of this application.

### DESCRIPTION OF DRAWINGS

The above and/or additional aspects and advantages of this application will become clear and readily understood from the description of embodiments with reference to the following accompanying drawings.
FIG. 1 is a diagram of an electromagnetic actuator according to some embodiments of a first aspect of this application;
FIG. 2 is a sectional view of an electromagnetic actuator according to some embodiments of a first aspect of this application;
FIG. 3 is an exploded view of an electromagnetic actuator according to some embodiments of a first aspect of this application;
FIG. 4 is an enlarged view of a partial structure of the electromagnetic actuator in FIG. 2;
FIG. 5 is a diagram of an electromagnetic actuator according to some embodiments of a second aspect of this application;
FIG. 6 is an exploded view of an electromagnetic actuator according to some embodiments of a second aspect of this application;
FIG. 7 is a sectional view of an electromagnetic actuator according to some embodiments of a second aspect of this application;
FIG. 8 is an exploded view of an electromagnetic actuator according to some other embodiments of a second aspect of this application;
FIG. 9 is a diagram of a first sub-housing according to some embodiments of a second aspect of this application;
FIG. 10 is a diagram of a first sub-housing from another angle according to some embodiments of a second aspect of this application;
FIG. 11 is a diagram of a second sub-housing according to some embodiments of a second aspect of this application;
FIG. 12 is a diagram of a second sub-housing from another angle according to some embodiments of a second aspect of this application;
FIG. 13 is a diagram of a guide rod according to some embodiments of a second aspect of this application;
FIG. 14 is a diagram of cooperation between a center rod and a second component according to some embodiments of a second aspect of this application;
FIG. 15 is a main view of a bearing according to some embodiments of a second aspect of this application;
FIG. 16 is a diagram of a bearing according to some embodiments of a second aspect of this application;
FIG. 17 is a sectional view of an electromagnetic actuator according to some embodiments of a third aspect of this application;
FIG. 18 is a locally enlarged view of a region A in FIG. 17;
FIG. 19 is a top view of an electromagnetic actuator according to some embodiments of a third aspect of this application;
FIG. 20 is a sectional view of an electromagnetic actuator according to some other embodiments of a third aspect of this application;
FIG. 21 is a diagram of an electromagnetic actuator according to some embodiments of a fourth aspect of this application;
FIG. 22 is a sectional view of an electromagnetic actuator according to some embodiments of a fourth aspect of this application;
FIG. 23 is a diagram of a partial structure of the electromagnetic actuator in FIG. 22;
FIG. 24 is a diagram of an electromagnetic actuator with a partial structure omitted according to some embodiments of a fourth aspect of this application;
FIG. 25 is a main view of a center rod according to some embodiments of a fourth aspect of this application;
FIG. 26 is a diagram of a wire lead-out apparatus and a connection wire according to some embodiments of a fourth aspect of this application;
FIG. 27 is a sectional view of an electromagnetic actuator according to some embodiments of a fifth aspect of this application;
FIG. 28 is a diagram of a center rod and a second part according to some embodiments of a fifth aspect of this application;
FIG. 29 is a sectional view of a partial structure of an electromagnetic actuator according to some embodiments of a fifth aspect of this application;
FIG. 30 is a top view of a partial structure of an electromagnetic actuator according to some embodiments of a fifth aspect of this application;
FIG. 31 is a diagram of a second component according to some embodiments of a fifth aspect of this application;
FIG. 32 is a sectional view of a center rod and a second part according to some other embodiments of a fifth aspect of this application;
FIG. 33 is a diagram of a second component according to some other embodiments of a fifth aspect of this application;
FIG. 34 is a diagram of a partial structure of an electromagnetic actuator according to still some other embodiments of a fifth aspect of this application;
FIG. 35 is a diagram of a partial structure of a second component according to still some other embodiments of a fifth aspect of this application;
FIG. 36 is a sectional view of an electromagnetic actuator according to some embodiments of a sixth aspect of this application;
FIG. 37 is a sectional view of a center rod according to some embodiments of a sixth aspect of this application;
FIG. 38 is a top view of a partial structure of an electromagnetic actuator according to some embodiments of a sixth aspect of this application;
FIG. 39 is a sectional view of a partial structure of an electromagnetic actuator according to some embodiments of a sixth aspect of this application;
FIG. 40 is a sectional view of a center rod according to some other embodiments of a sixth aspect of this application;
FIG. 41 is a diagram of some embodiments of a first aspect of a stator magnetic core of this application;
FIG. 42 is a diagram of the stator magnetic core in FIG. 41 with a partial structure cut off;
FIG. 43 is a diagram of some embodiments of a second aspect of a stator magnetic core of this application;
FIG. 44 is a diagram of the stator magnetic core in FIG. 43 with a partial structure cut off;
FIG. 45 is a diagram of some embodiments of a third aspect of a stator magnetic core of this application;
FIG. 46 is a diagram of the stator magnetic core in FIG. 45 with a partial structure cut off;
FIG. 47 is a diagram of some embodiments of a fourth aspect of a stator magnetic core of this application;
FIG. 48 is a diagram of the stator magnetic core in FIG. 47 with a partial structure cut off;
FIG. 49 is a diagram of some embodiments of a fifth aspect of a stator magnetic core of this application;
FIG. 50 is an exploded view of some embodiments of a fifth aspect of a stator magnetic core of this application;
FIG. 51 is an exploded view of some embodiments of a fifth aspect of a stator magnetic core of this application;
FIG. 52 is a diagram of some embodiments of a sixth aspect of a stator magnetic core of this application;
FIG. 53 is an exploded view of some embodiments of a sixth aspect of a stator magnetic core of this application;
FIG. 54 is a diagram of some embodiments of a seventh aspect of a stator magnetic core of this application;
FIG. 55 is a top view of a stator yoke portion of FIG. 54;
FIG. 56 is a sectional view of FIG. 55 along a line A-A;
FIG. 57 is a diagram of a stator tooth portion of FIG. 54;
FIG. 58 is a locally enlarged view of cooperation between a stator tooth portion and a stator yoke portion in FIG. 54;
FIG. 59 is a diagram of an electromagnetic actuator according to some embodiments of a seventh aspect of this application;
FIG. 60 is a diagram of a second component in FIG. 59;
FIG. 61 is a sectional view of the second component in FIG. 60;
FIG. 62 is a locally enlarged view of a region B in FIG. 61;
FIG. 63 is a diagram of a first-type iron core according to some embodiments of a seventh aspect of this application;
FIG. 64 is a diagram of an insulating framework according to some embodiments of a seventh aspect of this application;
FIG. 65 is a diagram of a coil according to some embodiments of a seventh aspect of this application;
FIG. 66 is a diagram of cooperation between a second-type iron core and a coil according to some embodiments of a seventh aspect of this application;
FIG. 67 is a diagram of a third-type iron core according to some embodiments of this application;
FIG. 68 is a sectional view of a third-type iron core according to some embodiments of this application;
FIG. 69 is a diagram of a support iron core according to some embodiments of this application;
FIG. 70 is a diagram of a support frame according to some embodiments of this application;
FIG. 71 is a sectional view of cooperation between a third-type iron core and a coil according to some embodiments of this application;
FIG. 72 is a diagram of an electromagnetic actuator according to some embodiments of an eighth aspect of this application;
FIG. 73 is a sectional view of an electromagnetic actuator according to some embodiments of an eighth aspect of this application;
FIG. 74 is a sectional view of a housing according to some embodiments of an eighth aspect of this application;
FIG. 75 is a diagram of a center rod according to some embodiments of an eighth aspect of this application;
FIG. 76 is a diagram of a center rod from another angle according to some embodiments of an eighth aspect of this application;
FIG. 77 is an exploded view of a center rod according to some embodiments of an eighth aspect of this application;
FIG. 78 is a diagram of a first wiring component according to some embodiments of an eighth aspect of this application;
FIG. 79 is a main view of a first wiring component according to some embodiments of an eighth aspect of this application;
FIG. 80 is an exploded view of a first wiring component according to some embodiments of an eighth aspect of this application;
FIG. 81 is a diagram of a second wiring component according to some embodiments of an eighth aspect of this application;
FIG. 82 is a main view of a second wiring component according to some embodiments of an eighth aspect of this application;
FIG. 83 is an exploded view of a second wiring component according to some embodiments of an eighth aspect of this application;
FIG. 84 is a diagram of a third wiring component according to some embodiments of an eighth aspect of this application;
FIG. 85 is a main view of a third wiring component according to some embodiments of an eighth aspect of this application;
FIG. 86 is an exploded view of a third wiring component according to some embodiments of an eighth aspect of this application;
FIG. 87 is a diagram of a first iron core unit according to some embodiments of an eighth aspect of this application;
FIG. 88 is a top view of a first iron core unit according to some embodiments of an eighth aspect of this application;
FIG. 89 is an exploded view of a first iron core unit according to some embodiments of an eighth aspect of this application;
FIG. 90 is an exploded view of an inner wire lead-out apparatus according to some embodiments of an eighth aspect of this application;
FIG. 91 is a diagram of a coil according to some embodiments of an eighth aspect of this application;
FIG. 92 is a top view of a coil according to some embodiments of an eighth aspect of this application;
FIG. 93 is a diagram of a second-type iron core according to some embodiments of an eighth aspect of this application;
FIG. 94 is a sectional view of a second-type iron core according to some embodiments of an eighth aspect of this application;
FIG. 95 is a diagram of a second-type iron core with a coil omitted according to some embodiments of an eighth aspect of this application;
FIG. 96 is a diagram of an inner wiring apparatus according to some embodiments of an eighth aspect of this application;
FIG. 97 is an exploded view of an inner wiring apparatus according to some embodiments of an eighth aspect of this application;
FIG. 98 is a diagram of a second iron core unit according to some embodiments of an eighth aspect of this application;
FIG. 99 is a top view of a second iron core unit according to some embodiments of an eighth aspect of this application;
FIG. 100 is a diagram of a second iron core unit with a coil omitted according to some embodiments of an eighth aspect of this application;
FIG. 101 is a diagram of a bottom wiring apparatus according to some embodiments of an eighth aspect of this application;
FIG. 102 is an exploded view of a bottom wiring apparatus according to some embodiments of an eighth aspect of this application;
FIG. 103 is a diagram of a first wire lead-out component according to some embodiments of an eighth aspect of this application;
FIG. 104 is an exploded view of a first wire lead-out component according to some embodiments of an eighth aspect of this application;
FIG. 105 is a diagram of a second wire lead-out component according to some embodiments of an eighth aspect of this application;
FIG. 106 is an exploded view of a second wire lead-out component according to some embodiments of an eighth aspect of this application;
FIG. 107 is a diagram of connection of a first-phase lead wire of an electromagnetic actuator according to some embodiments of an eighth aspect of this application;
FIG. 108 is a side view of FIG. 107;
FIG. 109 is a sectional view of FIG. 108 along a line B-B;
FIG. 110 is a top view of FIG. 107;
FIG. 111 is a diagram of connection of a second-phase lead wire of an electromagnetic actuator according to some embodiments of an eighth aspect of this application;
FIG. 112 is a side view of FIG. 111;
FIG. 113 is a sectional view of FIG. 112 along a line C-C;
FIG. 114 is a top view of FIG. 111;
FIG. 115 is a diagram of connection of a third-phase lead wire of an electromagnetic actuator according to some embodiments of an eighth aspect of this application;
FIG. 116 is a side view of FIG. 115;
FIG. 117 is a sectional view of FIG. 116 along a line D-D;
FIG. 118 is a top view of FIG. 115;
FIG. 119 is a diagram of an electromagnetic actuator according to some embodiments of a ninth aspect of this application;
FIG. 120 is a diagram of a partial structure of an electromagnetic actuator according to some embodiments of a ninth aspect of this application;
FIG. 121 is a sectional view of a partial structure of an electromagnetic actuator according to some embodiments of a ninth aspect of this application;
FIG. 122 is an exploded view of a partial structure of an electromagnetic actuator according to some embodiments of a ninth aspect of this application;
FIG. 123 is a top view of an insulating framework according to some embodiments of this application;
FIG. 124 is a side view of an insulating framework according to some embodiments of this application;
FIG. 125 is a diagram of an insulating framework according to some embodiments of this application;
FIG. 126 is a diagram of an insulating framework from another angle according to some embodiments of this application;
FIG. 127 is a diagram of cooperation between an insulating framework and an iron core assembly according to some embodiments of this application;
FIG. 128 is a sectional view of a partial structure of an electromagnetic actuator according to some embodiments of a tenth aspect of this application;
FIG. 129 is an enlarged view of a partial structure in FIG. 128;
FIG. 130 is a partial sectional view of a partial structure of an electromagnetic actuator according to some embodiments of a tenth aspect of this application;
FIG. 131 is a diagram of a partial structure of an electromagnetic actuator according to some embodiments of a tenth aspect of this application;
FIG. 132 is a sectional view of an electromagnetic actuator according to some embodiments of an eleventh aspect of this application;
FIG. 133 is a locally enlarged view of a region C in FIG. 132;
FIG. 134 is a locally enlarged view of a region D in FIG. 132;
FIG. 135 is a sectional view of an electromagnetic actuator according to some other embodiments of an eleventh aspect of this application;
FIG. 136 is a locally enlarged view of a region E in FIG. 135;
FIG. 137 is a sectional view of an electromagnetic actuator according to some embodiments of a twelfth aspect of this application;
FIG. 138 is a diagram of a partial structure of an electromagnetic actuator according to some embodiments of a twelfth aspect of this application;
FIG. 139 is a partial sectional view of the electromagnetic actuator in FIG. 138;
FIG. 140 is a sectional view of the electromagnetic actuator in FIG. 139 in another direction;
FIG. 141 is a diagram of an electromagnetic actuator according to some embodiments of a thirteenth aspect of this application;
FIG. 142 is a sectional view of an electromagnetic actuator according to some embodiments of a thirteenth aspect of this application;
FIG. 143 is a diagram of a laser sensor according to some embodiments of a thirteenth aspect of this application;
FIG. 144 is a diagram of a housing moving upward according to some embodiments of a thirteenth aspect of this application;
FIG. 145 is a diagram of a housing moving downward according to some embodiments of a thirteenth aspect of this application;
FIG. 146 is a diagram of cooperation between a laser sensor and a second component according to some embodiments of a thirteenth aspect of this application;
FIG. 147 is a bottom view of an electromagnetic actuator according to some embodiments of a fourteenth aspect of this application;
FIG. 148 is a sectional view of an electromagnetic actuator according to some embodiments of a fourteenth aspect of this application;
FIG. 149 is a sectional view of FIG. 148 along a line E-E;
FIG. 150 is a diagram of a partial structure of an electromagnetic actuator according to some embodiments of a fourteenth aspect of this application;
FIG. 151 is a sectional view of an electromagnetic actuator according to some embodiments of a fifteenth aspect of this application;
FIG. 152 is a diagram of a partial structure of an electromagnetic actuator according to some embodiments of a fifteenth aspect of this application;
FIG. 153 is a first diagram of partial magnetic field distribution of an electromagnetic actuator according to some embodiments of a fifteenth aspect of this application;
FIG. 154 is a second diagram of partial magnetic field distribution of an electromagnetic actuator according to some embodiments of a fifteenth aspect of this application;
FIG. 155 is a diagram of a linear relationship between magnetic field strength of a second detection member and a stroke of a center rod according to some embodiments of a fifteenth aspect of this application;
FIG. 156 is a diagram of a linear relationship between an electrical signal of a first detection member and a stroke of a center rod according to some embodiments of a fifteenth aspect of this application;
FIG. 157 is a first diagram of a structure of a second detection member and a first detection member according to some embodiments of a fifteenth aspect of this application;
FIG. 158 is a second diagram of a structure of a second detection member and a first detection member according to some embodiments of a fifteenth aspect of this application;
FIG. 159 is a sectional view of an electromagnetic actuator according to some embodiments of a sixteenth aspect of this application;
FIG. 160 is a locally enlarged view of a region F in FIG. 159;
FIG. 161 is a diagram of a first detection member according to some embodiments of a sixteenth aspect of this application;
FIG. 162 is a diagram of a housing moving upward according to some embodiments of a sixteenth aspect of this application;
FIG. 163 is a diagram of a housing moving downward according to some embodiments of a sixteenth aspect of this application;
FIG. 164 is a bottom view of an electromagnetic actuator according to some embodiments of a sixteenth aspect of this application;
FIG. 165 is a diagram of a detection module according to some embodiments of a seventeenth aspect of this application;
FIG. 166 is a diagram of a detection module from another angle according to some embodiments of a seventeenth aspect of this application;
FIG. 167 is a bottom view of an electromagnetic actuator according to some embodiments of a seventeenth aspect of this application;
FIG. 168 is a diagram of an electromagnetic actuator according to some embodiments of an eighteenth aspect of this application;
FIG. 169 is a diagram of an electromagnetic actuator with a partial structure omitted according to some embodiments of an eighteenth aspect of this application;
FIG. 170 is an enlarged view of a partial structure in FIG. 169;
FIG. 171 is a sectional view of an electromagnetic actuator according to some embodiments of an eighteenth aspect of this application;
FIG. 172 is a top view of an electromagnetic actuator according to some embodiments of an eighteenth aspect of this application;
FIG. 173 is an enlarged view of a partial structure in FIG. 172;
FIG. 174 is a diagram of a suspension system according to some embodiments of this application;
FIG. 175 is a sectional view of a suspension system according to some embodiments of this application; and
FIG. 176 is a diagram of a vehicle according to some embodiments of this application.

### Reference numeral:

1000: electromagnetic actuator; 100: housing; 101: sub-housing; 1011: cylinder; 1013: clamping slot; 1012: end cover; 400: guide rod; 430: guide protrusion; 410: mounting boss; 411: through hole; 420: mounting plate; 421: fifth connection hole; 1014: extension portion; 110: first sub-housing; 115: first cavity; 111: first connection portion; 1111: first connection lug; 1112: first connection hole; 112: third connection portion; 1121: third connection hole; 113: first clearance slot; 114: third clearance slot; 120: second sub-housing; 125: second cavity; 121: second connection portion; 1211: second connection lug; 1212: second connection hole; 122: fourth connection portion; 1221: fourth connection hole; 123: second clearance slot; 124: fourth clearance slot; 150: first fastener; 160: first clearance through hole; 161: second clearance through hole; 180: sixth connection hole; 130: accommodation cavity; 131: clearance hole; 193: anti-rotation hole; 194: conducting wire slot; 195: second reinforcing rib; 191: mounting base; 220: first component; 210: second component; 211: iron core assembly; 2014: stator magnetic core; 2141: stator tooth portion; 21411: first lamination; 21412: first center hole; 21416: first connection structure; 21417: second anti-rotation protrusion; 2142: stator yoke portion; 21422: second lamination; 21421: second center hole; 21423: second connection structure; 21427: body; 21428: insertion portion; 21425: anti-rotation recess; 2133: winding slot; 21415: positioning protrusion; 21424: inclined surface; 21426: first boss structure; 2012: first reinforcing rib; 2111: first-type iron core; 21111: first annular slot; 21114: first iron core unit; 21115: second iron core unit; 21116: first internal mounting hole; 21117: third internal mounting hole; 2112: second-type iron core; 21122: second internal mounting hole; 2119: placement slot; 350: second positioning portion; 2019: notch; 2013: wire arrangement slot; 2015: wire end lead-out slot; 20111: recess; 2011: routing space; 2016: support frame; 2017: support iron core; 2110: third-type iron core; 212: winding assembly; 2121: connection wire; 21211: first-phase lead wire; 21212: second-phase lead wire; 21213: third-phase lead wire; 2018: first lead-out wire end; 214: second lead-out wire end; 2123: coil; 21231: lead-out wire; 21214: first-phase winding; 21215: second-phase winding; 21216: third-phase winding; 2122: insulating paper; 213: insulating framework; 2131: lead wire channel; 2132: wire passing slot; 2138: second annular slot; 2136: inner side wall; 2134: second boss structure; 2135: insulating portion; 2137: assembly hole; 1016: bolt; 1017: positioning pin; 140: rotation shaft; 1015: elastic limiting member; 300: center rod; 230: wire lead-out apparatus; 330: wire passing channel; 333: radial hole; 334: axial hole; 331: wire lead-out slot at a guide rod end; 332: wire lead-out slot at a winding section; 340: first positioning portion; 370: first anti-rotation portion; 320: cooling chamber; 3211: second water inlet; 3212: second water outlet; 32111: second cooling pipe; 32121: third cooling pipe; 321: first cooling chamber; 322: second cooling chamber; 3221: sub-chamber; 810: cooling structure; 310: guide hole; 311: wire lead-out port; 831: first threaded section; 851: second threaded section; 312: sealing cover; 323: filling port; 2113: wiring component; 21131: long wiring component; 21132: medium wiring component; 21133: short wiring component; 2114: conductive member; 2115: insulating layer; 21151: first limiting feature; 2116: limiting member; 2117: first connector; 2118: second connector; 860: inner wire lead-out apparatus; 861: first assembly member; 862: first insulating member; 863: first conducting wire; 870: inner wiring apparatus; 871: second assembly member; 872: second insulating member; 873: second conducting wire; 880: bottom wiring apparatus; 881: third insulating member; 882: third conducting wire; 8821: first-phase connector; 8822: second-phase connector; 8823: third-phase connector; 216: wire lead-out component; 2161: long wire lead-out component; 2162: short wire lead-out component; 2163: fourth insulating member; 2164: fourth conducting wire; 2165: second limiting feature; 2166: wire clamping recess; 360: anti-rotation rod; 380: first limiting member; 390: second limiting member; 391: first part; 392: second part; 393: piston portion; 900: detection module; 910: laser sensor; 920: first sensor mounting bracket; 930: first detection member; 931: sensor connection end; 932: connection rod; 933: sensing head; 940: second detection member; 950: assembly slot; 960: sensor mounting slot; 970: second sensor mounting bracket; 192: mounting bracket; 1921: clearance channel; 170: bearing; 171: protrusion portion; 840: guide bearing; 850: limiting nut; 500: upper support; 600: spring; 700: bushing; 800: buffer block; 830: assembly nut; 820: dust cover; 10000: suspension system; 2000: wheel; 3000: leaf spring; 4000: steering knuckle; 5000: vibration-damping apparatus; 6000: subframe; 20000: vehicle.

### DETAILED DESCRIPTION OF PREFERRED EMBODIMENTS

The following describes in detail embodiments of this application, and examples of embodiments are shown in accompanying drawings, where same or similar reference numerals throughout represent same or similar elements or elements having same or similar functions. The following embodiments described with reference to the accompanying drawings are examples, and are merely intended to explain this application, but will not be construed as a limitation on this application.

The following describes an electromagnetic actuator 1000 in an embodiment of this application with reference to the accompanying drawings of this specification.

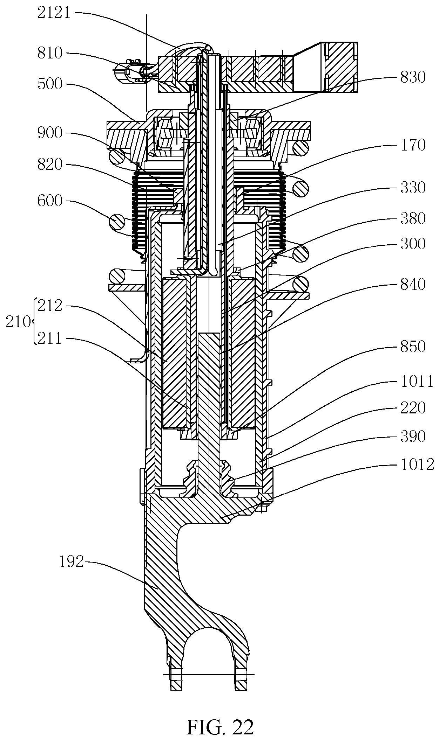

As shown in FIG. 22, the electromagnetic actuator 1000 according to this embodiment of this application includes: a first component 220, a second component 210, and a detection module 900.

The second component 210 and the first component 220 are coupled so that the first component 220 and the second component 210 are movable relative to each other.

The detection module 900 is configured to detect relative displacement between the first component 220 and the second component 210.

It will be understood from the foregoing structure that, in the electromagnetic actuator 1000 in this embodiment of this application, the detection module 900 is disposed to detect relative displacement between the first component 220 and the second component 210, so that the location of the second component 210 can be accurately determined, to facilitate control of movement of the second component 210, ensure accuracy of the location to which the second component 210 moves, and improve working performance of the electromagnetic actuator 1000.

In addition, the detection module 900 is used to detect relative displacement between the first component 220 and the second component 210, so that difficulty in detecting the location of the second component 210 can be further reduced, and accuracy of detecting the location of the second component 210 can be ensured.

It will be understood that the electromagnetic actuator 1000 of this application is different from that of conventional technologies in that the detection module 900 is disposed to ensure control accuracy of the location to which the second component 210 moves, so that a technical problem of a control accuracy defect is avoided.

In some embodiments, the detection module 900 may sense signals corresponding to different locations of the detected apparatus, and output a location signal to a controller through a wire, to detect relative displacement between the first component 220 and the second component 210.

In some embodiments, as shown in FIG. 22, the electromagnetic actuator 1000 further includes a housing 100. An accommodation cavity 130 is formed in the housing 100. Both the first component 220 and the second component 210 are disposed in the accommodation cavity 130. One of the first component 220 and the second component 210 connected to the housing 100, and the first component 220 and the second component 210 are coupled so that the one of the first component 220 and the second component 210 moves along an axis with the housing 100. In this way, working performance of the electromagnetic actuator 1000 is ensured.

In some embodiments, the first component 220 is disposed in the housing 100. Therefore, that the detection module 900 detects relative displacement between the first component 220 and the second component 210 may also be understood as that the detection module 900 detects relative displacement between the housing 100 and the second component 210.

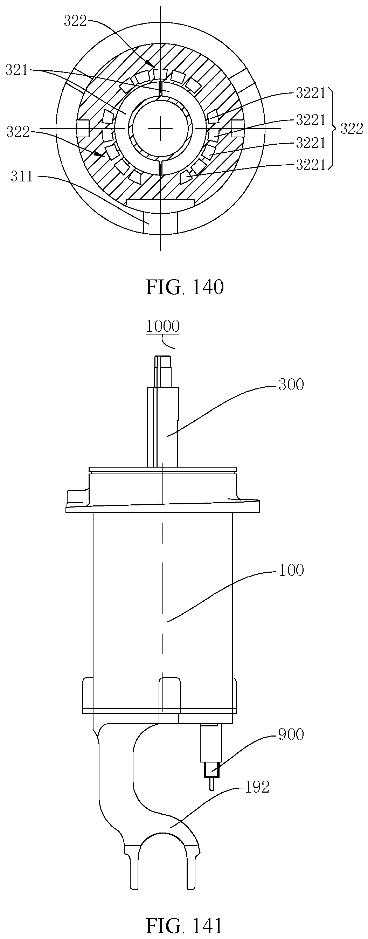

In some embodiments, as shown in FIG. 141 to FIG. 146, the detection module 900 includes a laser sensor 910, and the laser sensor 910 is disposed at a top or a bottom of the accommodation cavity 130. This facilitates use of the laser sensor 910 to detect relative displacement between the housing 100 and the second component 210, ensures accuracy of detecting relative displacement between the housing 100 and the second component 210, and reduces difficulty in detecting relative displacement between the housing 100 and the second component 210.

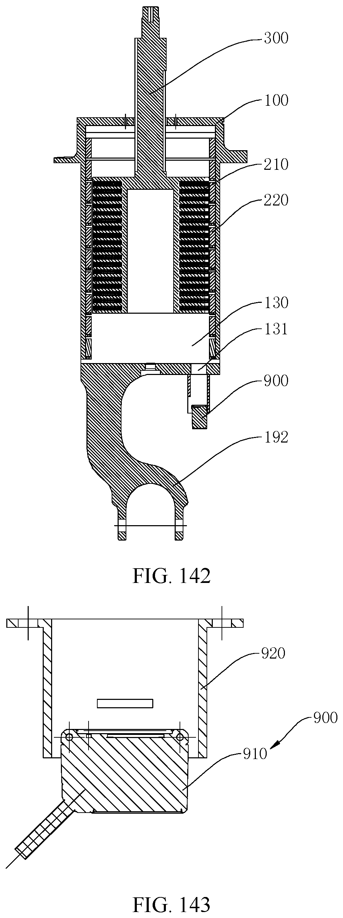

In some embodiments, as shown in FIG. 141 and FIG. 142, the housing 100 is configured to be fastened to an axle, and the electromagnetic actuator 1000 further includes a mounting bracket 192. The mounting bracket 192 is mounted to an outer side of the housing 100 and configured to connect the axle and the housing 100. The laser sensor 910 is disposed in the mounting bracket 192, and a bottom wall of the accommodation cavity 130 is provided with a clearance hole 131 for providing clearance for an optical path of the laser sensor 910. The laser sensor 910 is disposed on the mounting bracket 192, to dispose the laser sensor 910 on the housing 100. This facilitates use of the housing 100 to support the laser sensor 910, and improves location stability of the laser sensor 910. In addition, because the bottom wall of the accommodation cavity 130 is provided with the clearance hole 131 for providing clearance for the optical path of the laser sensor 910, the optical path generated by the laser sensor 910 disposed on the mounting bracket 192 can be projected to the accommodation cavity 130, to facilitate use of the laser sensor 910 to detect relative displacement between the housing 100 and the second component 210.

In some embodiments, as shown in FIG. 143, a first sensor mounting bracket 920 is disposed at one end of the mounting bracket 192, and the laser sensor 910 is disposed on the first sensor mounting bracket 920, to dispose the laser sensor 910 on the mounting bracket 192. This facilitates use of the laser sensor 910 to support the housing 100, improves location stability of the laser sensor 910, and reduces difficulty in fastening the laser sensor 910.

A means of fastening the laser sensor 910 and the first sensor mounting bracket 920 may be bolt connection.

In some embodiments, as shown in FIG. 142 to FIG. 146, in an axial direction of the electromagnetic actuator 1000, the laser sensor 910 directly faces the second component 210, so that the optical path generated by the laser sensor 910 can be projected to the second component 210, to facilitate use of the laser sensor 910 to detect relative displacement between the housing 100 and the second component 210.

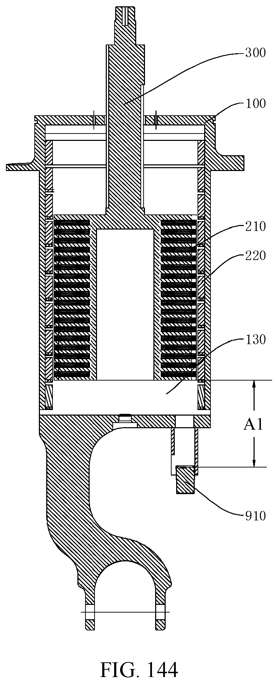

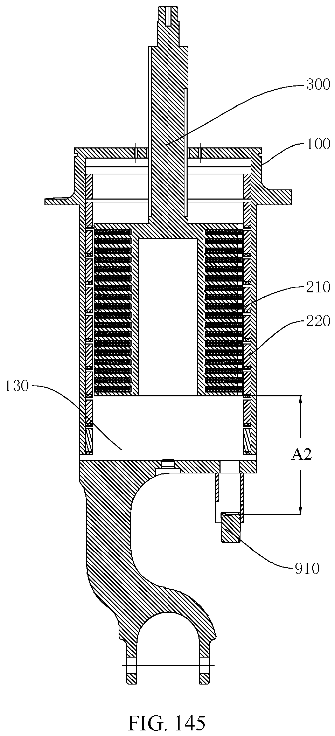

In a specific example, the laser sensor 910 determines a location mainly by sensing light reflected by an object, and outputs a displacement signal of the electromagnetic actuator 1000. A working principle of the laser sensor 910 is as follows: before the electromagnetic actuator 1000 is started, a height of the laser sensor 910 is first calibrated, and a location of the laser sensor 910 is measured. After the housing 100 moves upward relative to the second component 210 (as shown in FIG. 144), the laser sensor 910 projects a visible light spot on a surface of the second component 210, and light reflected from the light spot is imaged on a photosensitive element in the laser sensor 910 by using a light receiving system. When a distance between the laser sensor 910 and the second component 210 changes, a laser reflection angle also changes correspondingly, so that an imaging location on the photosensitive element in the laser sensor 910 changes, to measure current locations of the laser sensor 910 and the second component 210. After the housing 100 moves downward relative to the second component 210 (as shown in FIG. 145), the laser sensor 910 measures current locations of the laser sensor 910 and the second component 210 again according to the foregoing method, and may obtain relative displacement between the housing 100 and the second component 210 by analyzing a change between previous and current location values, to detect relative displacement between the housing 100 and the second component 210.

Through the foregoing arrangement, this embodiment can be formed as active measurement with high measurement frequency, a height parameter of the electromagnetic actuator 1000 can be obtained in real time, and a measurement parameter is not affected by low frequency vibration and even a stationary state of a vehicle 20000. In other words, in the stationary state of the vehicle 20000, information such as an attitude of the vehicle 20000 can still be well provided. Therefore, the laser sensor 910 in this embodiment may be configured to measure a stroke of the electromagnetic actuator 1000 and obtain a movement speed of the electromagnetic actuator 1000 based on a function relationship between a difference in strokes of the electromagnetic actuator 1000 and time. FIG. 144 and FIG. 145 are used as examples. A location of the housing 100 is changed from that in FIG. 144 to that in FIG. 145 within time of a reflection-reception cycle of the laser sensor 910. In this case, an average speed of the electromagnetic actuator 1000 in a laser reflection-reception cycle may be calculated. Because measurement frequency of the laser sensor 910 is high, this speed may reflect a real-time movement speed of the electromagnetic actuator 1000 to some extent.

In a specific example, loads of different shafts of the vehicle 20000 may be preliminarily calculated by comparing initial states of the vehicle 20000. A basic principle is as follows: heights of four wheels of the vehicle 20000 are measured when the vehicle 20000 is started or the vehicle 20000 is about to move. Because at this time the vehicle 20000 does not have relative movement and does not undergo road surface impact, it can be considered that a distance change is caused by load compression damping. Based on this, an unloaded state or a fully loaded state of the vehicle 20000 may be determined, so that a more accurate reference basis can be provided for four-wheel control.

Similarly, a change between different speeds of the electromagnetic actuator 1000 in a laser reflection-reception cycle may reflect a real-time acceleration of the electromagnetic actuator 1000 to some extent. Theoretically, a quantity of sensors disposed on the vehicle 20000 can be greatly reduced, to reduce designs.

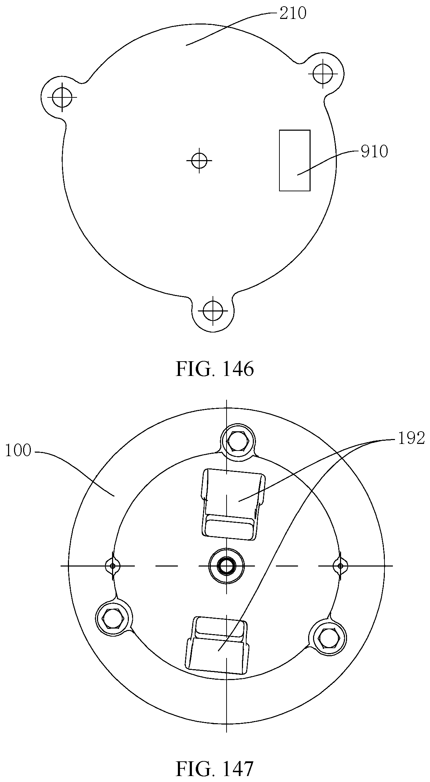

It will be further noted that, in this embodiment, the laser sensor 910 is arranged at a bottom of the electromagnetic actuator 1000, and a detected location is a bottom surface of the second component. Main movement of the housing 100 and the second component 210 is linear movement of moving up and down. However, in an actual movement scenario, the housing 100 and the second component 210 further have relative rotation around the second component 210. Through the foregoing arrangement, even if the housing 100 and the second component 210 deflect, it can be ensured that a top of the mounting bracket 192, the laser sensor 910, and the bottom surface of the second component 210 remain parallel (as shown in FIG. 146), to prevent location data detected by the laser sensor 910 from being affected by deflection of the housing 100 and the second component 210.

In addition, because the laser sensor 910 is mounted on the mounting bracket 192, a high temperature generated when the electromagnetic actuator 1000 moves can be prevented from interfering with the laser sensor 910, to ensure working performance of the laser sensor 910. In addition, the laser sensor 910 is mounted outside the electromagnetic actuator 1000, which better facilitates replacement and mounting of the laser sensor 910, and better facilitates after-sales replacement and repair.

In conclusion, in this embodiment, the mounting bracket 192 is fully used, and the laser sensor 910 with high measurement accuracy well compensates for deficiencies of a conventional sensor, which comprehensively surpasses the conventional design in terms of arrangement space, measurement accuracy, measurement content, service life, repair convenience, and the like.

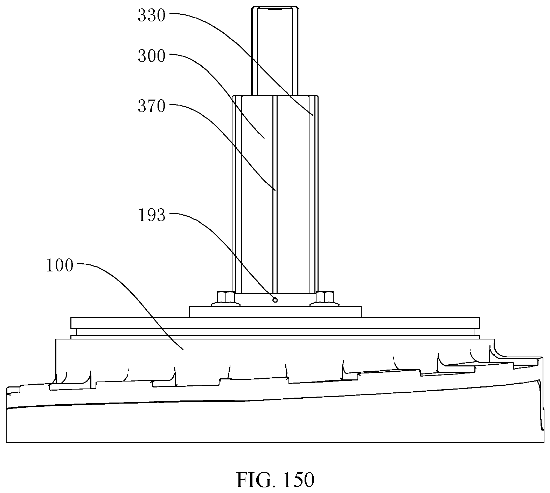

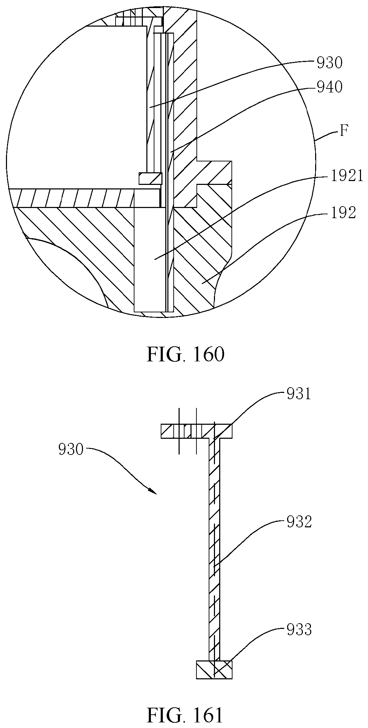

In some embodiments, as shown in FIG. 150 to FIG. 163, the electromagnetic actuator 1000 further includes a center rod 300. The center rod 300 is connected to the other one of the first component 220 and the second component 210. The detection module 900 includes a first detection member 930 and a second detection member 940. The second detection member 940 is coupled to the first detection member 930. The first detection member 930 is disposed on one of the housing 100 and the center rod 300, and the second detection member 940 is disposed on the other one of the housing 100 and the center rod 300. This facilitates detection of relative displacement between the housing 100 and the second component 210 through cooperation between the second detection member 940 and the first detection member 930, ensures accuracy of detecting the location of the second component 210, and reduces difficulty in detecting the location of the second component 210.

In some embodiments, as shown in FIG. 150 to FIG. 163, the housing 100 is configured to be fastened to the axle. The center rod 300 passes through a top wall of the housing 100 to be connected to a vehicle body. The first detection member 930 is disposed on the housing 100, and the second detection member 940 is disposed on the center rod 300, to use the housing 100 to support the first detection member 930 and use the center rod 300 to support the second detection member 940. This improves location stability of the first detection member 930 and the second detection member 940, and facilitates detection of relative displacement between the housing 100 and the second component 210 through cooperation between the second detection member 940 and the first detection member 930.

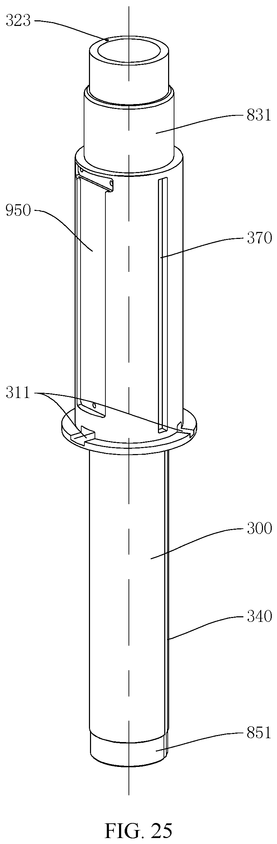

In some embodiments, as shown in FIG. 147 to FIG. 150, the center rod 300 is provided with an assembly slot 950 (for a specific structure of the assembly slot 950, refer to FIG. 25), the second detection member 940 is fastened in the assembly slot 950 of the center rod 300, the housing 100 is provided with a sensor mounting slot 960 directly facing the assembly slot 950, and the first detection member 930 is disposed in the sensor mounting slot 960, to form a complete working environment of the location sensor, and facilitate use of the second detection member 940 and the first detection member 930 to detect relative displacement between the housing 100 and the second component 210.

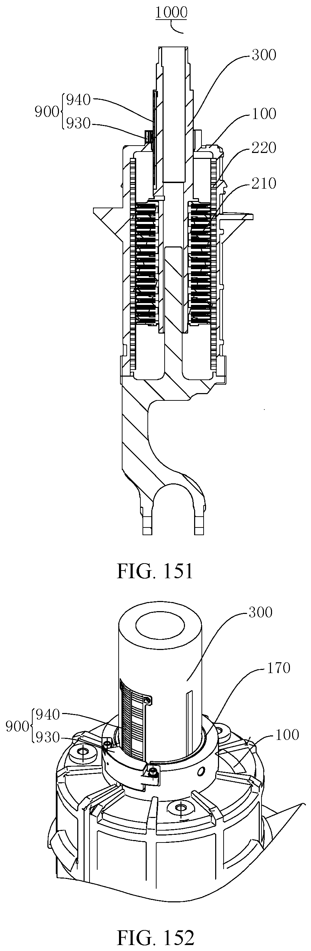

In some embodiments, as shown in FIG. 151 to FIG. 154, the first detection member 930 is disposed on the outer side of the housing 100, to reduce difficulty in mounting the first detection member 930, facilitate replacement and repair of the first detection member 930, and reduce difficulty in maintaining the first detection member 930.

In addition, the first detection member 930 is disposed on the outer side of the housing 100, so that a high-temperature region of the housing 100 can be effectively avoided, and heat dissipation can be performed on the first detection member 930 by using natural wind. In this way, the first detection member 930 is fully protected, and failure of the first detection member 930 is avoided to some extent.

In some embodiments, as shown in FIG. 152, a bearing 170 is disposed between the center rod 300 and the housing 100, and a part of a projection of the first detection member 930 in a radial direction that overlaps the housing 100 partially overlaps a projection of the bearing 170 in the radial direction. In other words, in the radial direction of the housing 100, the first detection member 930 and the bearing 170 partially overlap, so that on a premise that an extension length of the center rod 300 is fixed, an extension length of the bearing 170 is prevented from being excessively reduced due to the arrangement of the first detection member 930. In other words, the first detection member 930 and the bearing 170 partially overlap, so that the extension length of the bearing 170 can be achieved, and guiding effect of the bearing 170 can be ensured.

In some embodiments, the bearing 170 is provided with a sensor clearance slot, and the first detection member 930 is disposed in the sensor clearance slot, so that the part of the projection of the first detection member 930 in the radial direction that overlaps the housing 100 partially overlaps the projection of the bearing 170 in the radial direction. In addition, difficulty in fastening the first detection member 930 can be reduced, location stability of the first detection member 930 can be improved, and working performance of the first detection member 930 can be ensured to some extent.

In some embodiments, the bearing 170 is disposed between the center rod 300 and the housing 100, and the first detection member 930 is spaced apart from the bearing 170. In other words, it is not limited to that the part of the projection of the first detection member 930 in the radial direction that overlaps the housing 100 partially overlaps the projection of the bearing 170 in the radial direction. Alternatively, the first detection member 930 may be spaced apart from the bearing 170. The first detection member 930 and the bearing 170 are independent of each other, to ensure working performance of the first detection member 930 and the bearing 170.

"Spaced apart" herein will be understood as that the first detection member 930 and the bearing 170 are spaced apart in an axial direction of the center rod 300, so that the first detection member 930 and the bearing 170 are independent of each other.

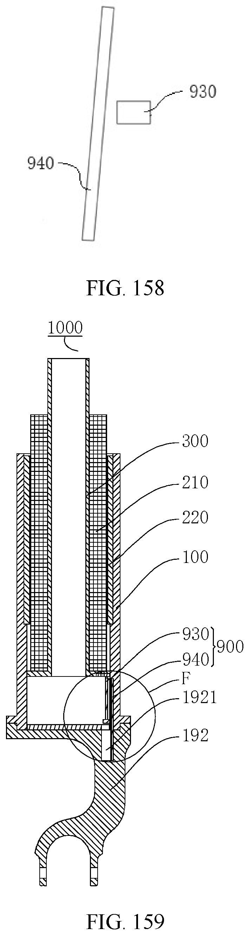

In addition, the bearing 170 is disposed between the center rod 300 and the housing 100, to limit movement of the center rod 300. In this way, the center rod 300 moves along the bearing 170, and the center rod 300 is not prone to deviation shown in FIG. 158 in a moving process of the vehicle 20000. A greater deviation angle of the center rod 300 indicates greater impact on detection accuracy of the first detection member 930 and the second detection member 940 or even failure of the first detection member 930 and the second detection member 940.

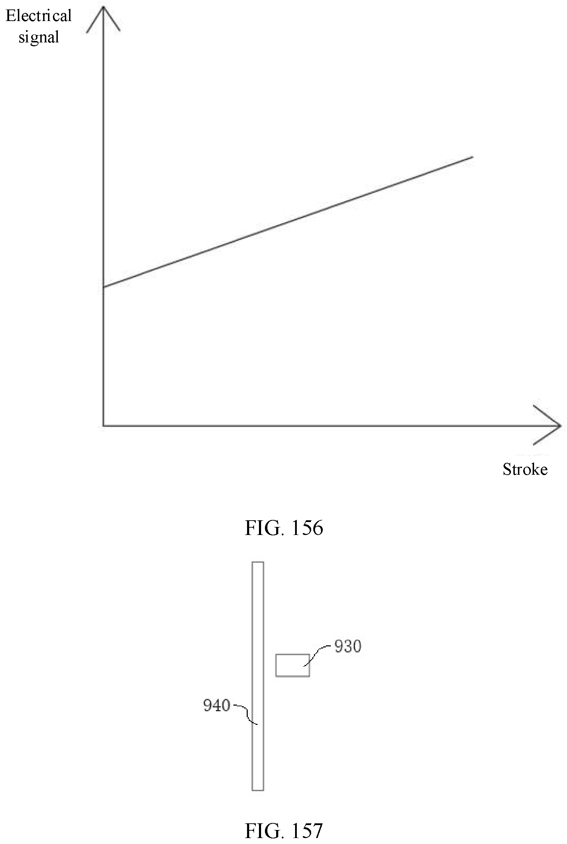

Therefore, the bearing 170 is provided, so that the first detection member 930 has good alignment with the second detection member 940 in a moving process and has high detection accuracy, to ensure that during normal working of the detection module 900, a working surface of the first detection member 930 needs to be parallel to a working surface of the second detection member 940 (as shown in FIG. 157). In this way, it can be ensured that the second detection member 940 can obtain an accurate magnetic field signal, to ensure working performance of the detection module 900.

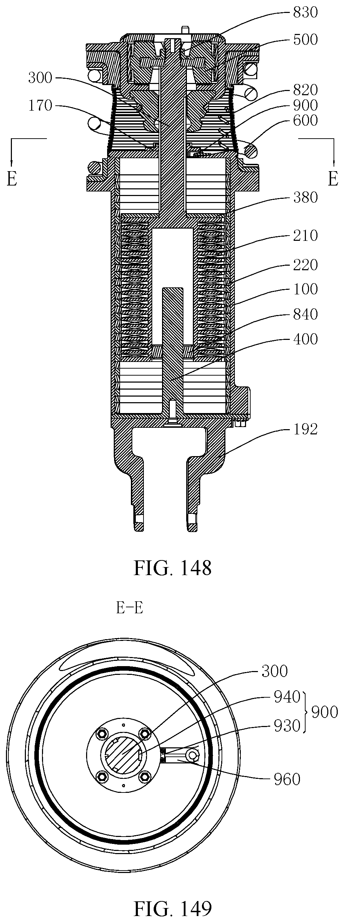

In some embodiments, as shown in FIG. 148, the bearing 170 covers the first detection member 930 from above, to protect and shield a stroke of the first detection member 930, avoid squeezing the first detection member 930 when the housing 100 moves upward, and ensure performance of the first detection member 930.

In some embodiments, as shown in FIG. 150, the center rod 300 is provided with a first anti-rotation portion 370, and the housing 100 is provided with an anti-rotation hole 193. An anti-rotation column extends into the first anti-rotation portion 370 through the anti-rotation hole 193, to limit a degree of freedom of rotation of the center rod 300, and avoid relative rotation between the center rod 300 and the housing 100. In this way, the second detection member 940 located on the center rod 300 can accurately align with the first detection member 930 located on the housing 100, to ensure detection performance of the detection module 900.

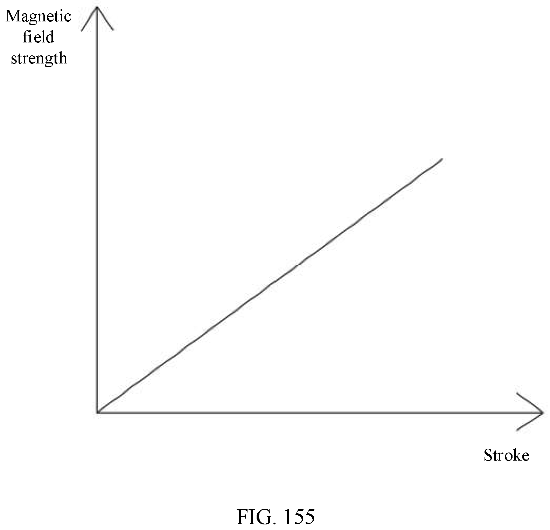

In some embodiments, the first detection member 930 is formed as a magnetic field sensing element, and the second detection member 940 is formed as a magnetic field outputting element. As shown in FIG. 155, the second detection member 940 may obtain displacement within a specific range of a stroke by sensing a magnetic field of the second detection member 940, and there is a difference, for example, a linear relationship, between magnetic field signals at any two different locations in the stroke. As shown in FIG. 156, the second detection member 940 may sense a magnetic field signal sent by the first detection member 930 and then convert the magnetic field signal into an electrical signal, and there is a difference, for example, a linear relationship, between electrical signals at any two different locations in the stroke. There are a plurality of conversion means herein, for example, a Hall principle. Finally, the sensed electrical signal (or converted into another signal, for example, a digital signal) is transmitted as an output signal, to detect relative displacement between the housing 100 and the second component 210 through cooperation between the second detection member 940 and the first detection member 930.

In conclusion, the first detection member 930 detects relative displacement between the housing 100 and the second component 210 mainly by identifying the magnetic field signal of the second detection member 940. However, magnetic field strength emitted by the first component 220 and the second component 210 in the electromagnetic actuator 1000 is excessively high, and is prone to interference with detection accuracy of the first detection member 930, resulting in decrease in accuracy of the detection module 900 and even failure of the detection module 900.

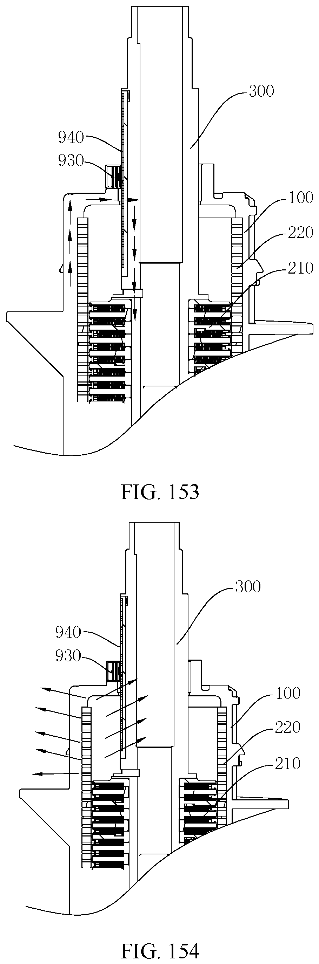

To resolve the foregoing problem, the center rod 300 and the housing 100 may be supported by a magnetically conductive material. As shown in FIG. 153, magnetic fields generated inside the electromagnetic actuator 1000 by the first component 220 and the second component 210 are distributed along the center rod 300 and the housing 100, and form a closed magnetic field loop. In this way, magnetic field strength at a location of the second detection member 940 is significantly increased, and the magnetic fields generated inside the electromagnetic actuator 1000 by the first component 220 and the second component 210 are prevented from being divergent as shown in FIG. 154.

In addition, a distance between the detection module 900 and the first component 220 and a distance between the detection module 900 and the second component 210 may be further increased to improve the magnetic field strength at the location of the second detection member 940, so that the magnetic field strength at the location of the second detection member 940 is significantly increased, and detection accuracy of the detection module 900 is ensured.

In some embodiments, as shown in FIG. 159 to FIG. 164, the mounting bracket 192 is disposed at a bottom of the housing 100, and a clearance channel 1921 communicating with the accommodation cavity 130 is provided in the mounting bracket 192. At least a part of the second detection member 940 is located in the clearance channel 1921, and the first detection member 930 is capable of moving into the clearance channel 1921 to be coupled to the second detection member 940. This facilitates detection of relative displacement between the housing 100 and the second component 210 through cooperation between the second detection member 940 and the first detection member 930, ensures accuracy of detecting the location of the second component 210, and reduces difficulty in detecting the location of the second component 210.

In addition, the at least a part of the second detection member 940 is located in the clearance channel 1921, so that space reserved by the electromagnetic actuator 1000 for the detection module 900 can be reduced, to facilitate a miniaturization design of the electromagnetic actuator 1000.

In some embodiments, as shown in FIG. 159, FIG. 160, and FIG. 161, the first detection member 930 includes a sensor connection end 931, a connection rod 932, and a sensing head 933, and the first detection member 930 is fastened to the center rod 300 through the sensor connection end 931, where a fastening means may be bolt connection. A harness of the first detection member 930 is arranged and connected to the sensing head 933 through the inside of the connection rod 932, and the sensing head 933 can sense magnetic field strength at different regions of the second detection member 940. Through analysis of different magnetic field strength sensed by the sensing head 933, relative displacement between the housing 100 and the second component 210 can be determined.

In some embodiments, at least a part of the second detection member 940 is attached in the clearance channel 1921. Herein, a binder can be used for attaching and fastening.

In some embodiments, the second detection member 940 is a magnetic scale, where the magnetic scale is an apparatus with a magnetic field. The first detection member 930 is a Hall effect sensor, where the Hall effect sensor outputs a displacement signal by sensing a change of a magnetic field on a surface of the magnetic scale, to detect relative displacement between the housing 100 and the second component 210.

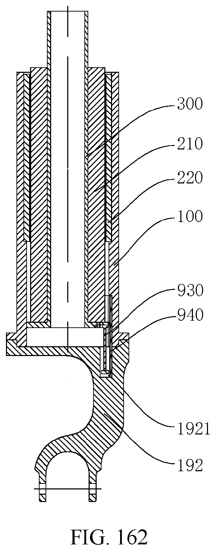

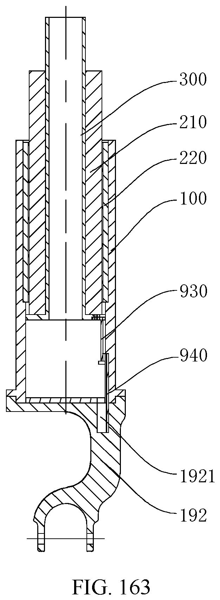

In some embodiments, both the first component 220 and the second component 210 generate the magnetic fields, and after the housing 100 moves upward, as shown in FIG. 162 and FIG. 163, the second detection member 940 is close to the first component 220 and the second component 210. Therefore, the housing 100, the center rod 300, the connection rod 932, and the mounting bracket 192 are all supported by a non-magnetically conductive material, such as an aluminum alloy material. The foregoing material may be used to well shield the magnetic fields generated by the first component 220 and the second component 210 around the first detection member 930 and the second detection member 940, to ensure detection accuracy of the detection module 900.

In some embodiments, coercivity of the second detection member 940 is higher than coercivity of the first component 220, to achieve that the second detection member 940 is not magnetized by the first component 220, and ensure performance of the second detection member 940.

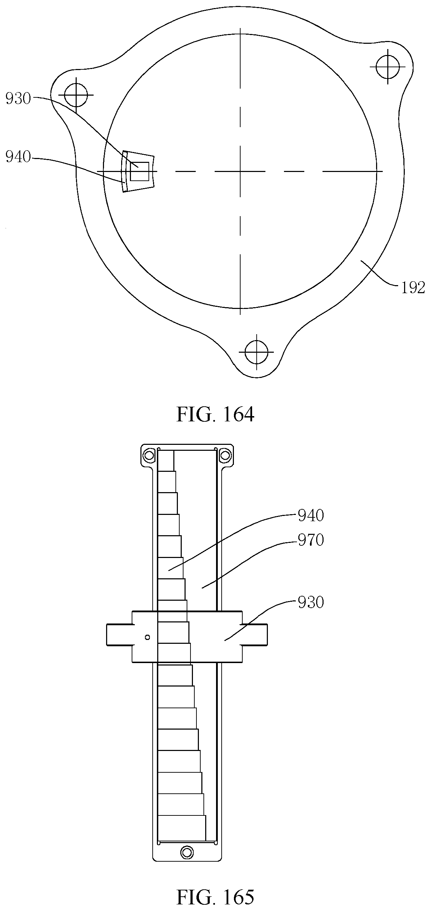

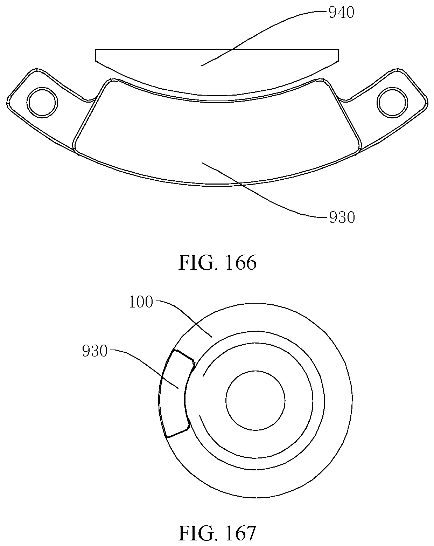

In some embodiments, as shown in FIG. 164 to FIG. 167, the second detection member 940 has an arc shape. This avoids failure in sensing between the second detection member 940 and the first detection member 930 when the first component 220 and the second component 210 rotate relative to each other, so that it is ensured that the first detection member 930 can stably sense magnetic field strength at different locations of the second detection member 940, to ensure detection accuracy of the detection module 900.

A radius of the arc shape may be adaptively adjusted based on a radius of the housing 100, and an angle of the arc shape may be determined based on a limit angle of relative rotation between the first component 220 and the second component 210.

In some embodiments, the mounting bracket 192 is provided with an arc-shaped hole, and the first detection member 930 is disposed in the arc-shaped hole, to provide space for the first detection member 930 to move up and down and rotate in a working state.

In some embodiments, as shown in FIG. 165 to FIG. 167, the detection module 900 includes the second detection member 940, the first detection member 930, and a second sensor mounting bracket 970. The second detection member 940 is a sensor magnetic scale, the first detection member 930 is a sensor reading head, and the second sensor mounting bracket 970 is configured to mount and fasten the sensor magnetic scale. The sensor magnetic scale provides a magnetic field, and the sensor reading head is configured to sense magnetic field strength at different locations of the magnetic scale, to detect relative displacement between the housing 100 and the second component 210.

In addition, the second sensor mounting bracket 970 is provided, so that the detection module 900 can be more securely fastened, which improves location stability of the detection module 900.

The magnetic scale is formed by combining magnetic stripes that are of different sizes and that are spaced apart, and is of a single code track structure, so that the second detection member 940 is formed as an encoded magnetic grating sensor for providing an aperiodic magnetic field, and the sensor reading head senses, at the same moment, that a combined magnetic field in a non-encoded region is unique in an entire stroke. In this way, an absolute location of the first detection member 930 can be determined, to ensure detection accuracy of the detection module 900.

In some embodiments, the second detection member 940 is made of a strong magnetic material such as neodymium iron boron, so that the second detection member 940 has high coercivity and can adapt to a more complex magnetic field environment and effectively avoid a demagnetization risk.

In addition, the second detection member 940 is provided as the single code track structure, which can, compared with a dual code track structure, effectively reduce a width of the second sensor mounting bracket 970 and a size of the reading head of the first detection member 930, and effectively reduce arrangement space of the first detection member 930, so that there are more selections for an arrangement location of the first detection member 930.

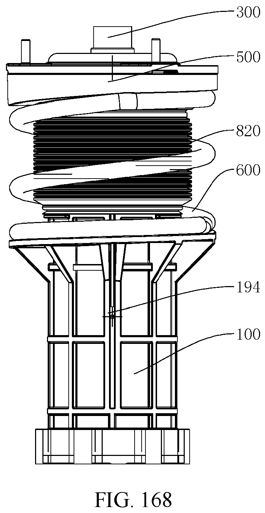

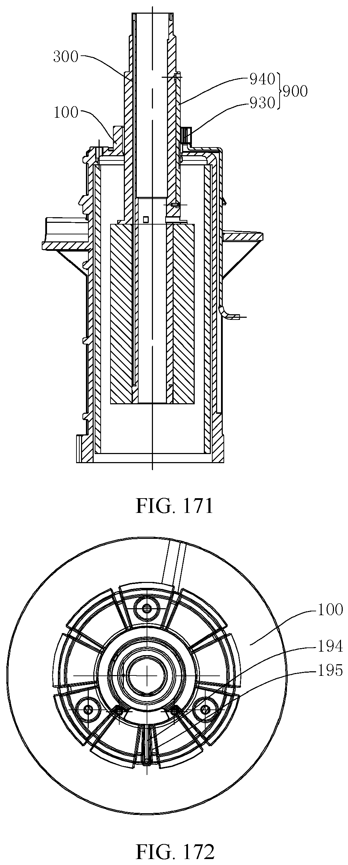

In some embodiments, as shown in FIG. 168 to FIG. 173, an outer peripheral wall of the housing 100 is provided with a conducting wire slot 194 for guiding a conducting wire of the detection module 900. The conducting wire electrically connected to the detection module 900 is provided, so that a signal detected by the detection module 900 can be transmitted to the controller through the conducting wire. The controller determines the location of the housing 100 through processing of the signal, to detect, by using the detection module 900, a location to which the housing 100 moves.

In addition, the housing 100 is provided with the conducting wire slot 194 for guiding the conducting wire, to reduce difficulty in routing the conducting wire. In addition, the conducting wire slot 194 can be used to fasten the conducting wire, to ensure location stability of the conducting wire and prevent the conducting wire from being bent along with movement of the housing 100 and affecting signal transmission. In this way, reliability of the electromagnetic actuator 1000 is improved, and the conducting wire slot 194 can be used to protect the conducting wire, to prolong service life of the conducting wire, improve use safety of the conducting wire, and improve use reliability of the conducting wire.

It will be noted that a length of the conducting wire slot 194 may be set based on a location of an external connector, and a depth of the conducting wire slot 194 may be set based on a radial dimension of the conducting wire and structural strength of the housing 210. This is not limited herein.

Optionally, the conducting wire slot 194 is integrally formed with the housing 100. In other words, the conducting wire slot 194 is integrally formed in the housing 100 to reduce difficulty in forming the conducting wire slot 194.

In some embodiments, as shown in FIG. 168, FIG. 169, and FIG. 170, a plurality of second reinforcing ribs 195 are disposed on the outer peripheral wall of the housing 100, and the conducting wire slot 194 is defined between at least two adjacent second reinforcing ribs 195. In this way, difficulty in forming the conducting wire slot 194 is reduced.

In addition, the plurality of second reinforcing ribs 195 are disposed on the outer peripheral wall of the housing 100, so that structural strength of the housing 100 can be further improved, service life of the housing 100 can be prolonged, and a wall thickness of the housing 100 can be correspondingly reduced, to achieve a lightweight design.

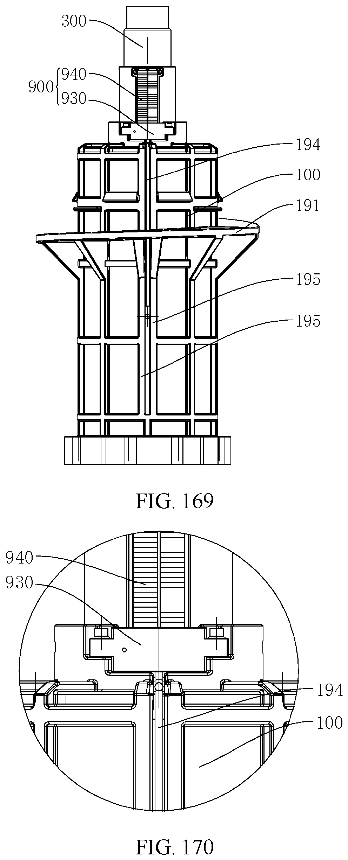

In some embodiments, as shown in FIG. 168 and FIG. 169, the plurality of second reinforcing ribs 195 are disposed on the outer peripheral wall of the housing 100, at least a part of the second reinforcing ribs 195 extend in the radial direction of the housing 100, and at least a part of the second reinforcing ribs 195 extend in an axial direction of the housing 100. In this way, the plurality of second reinforcing ribs 195 that are evenly arranged perpendicularly and horizontally are disposed on the housing 100, and this structural feature of even arrangement facilitates a design of a processing process of the housing 100.

The second reinforcing rib 195 extending in the radial direction of the housing 100 is mainly configured to enhance flexural rigidity of the housing 100, and the second reinforcing rib 195 extending in the axial direction of the housing 100 is mainly configured to enhance compressive strength of a motor housing 5.

In addition, an oblique reinforcing rib may be further disposed on the outer peripheral wall of the housing 100 to avoid stress concentration.

In some embodiments, as shown in FIG. 168 and FIG. 169, a triangular perpendicular reinforcing rib is designed at a lower end portion of the mounting base 191, and a structural stability principle of a triangle is used to make a structure of the mounting base 191 more stable, so that a greater elastic force of a spring can be withstood, and compressive strength of the mounting base 191 is improved.

In some embodiments, the second reinforcing rib 195 extending in the axial direction of the housing 100 is further disposed between two adjacent triangular perpendicular reinforcing ribs, to improve flexural rigidity of the mounting base 191.

In some embodiments, a conducting wire clearance structure is provided between the mounting base 191 and the housing 100, so that the conducting wire can pass through the mounting base 191 and be routed in the conducting wire slot 194.

In some embodiments, the conducting wire slot 194 is formed as a heat dissipation structure, to perform heat dissipation on the electromagnetic actuator 1000, and ensure performance of the electromagnetic actuator 1000.

In some embodiments, the second reinforcing rib 195 may be used to expand a heat dissipation area of the housing 100, and there is no need to add a heat dissipation cavity to assist in heat dissipation, which reduces redundancy of a mechanism, and improves a degree of freedom of a general arrangement design, to achieve a lightweight design.

A depth and a width of the second reinforcing rib 195 may be changed based on a diameter of the conducting wire and strength of the housing 100.

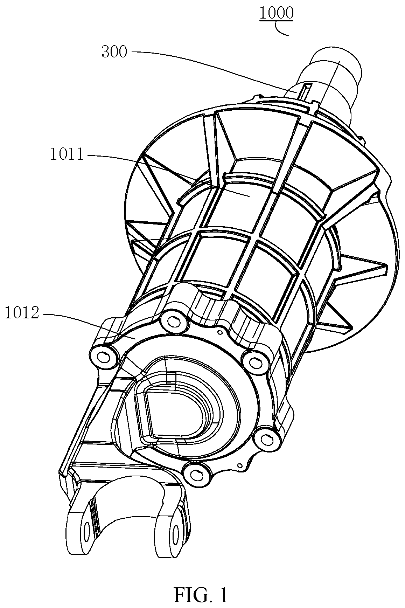

In some embodiments, as shown in FIG. 1, FIG. 2, and FIG. 3, the housing 100 includes a plurality of sub-housings 101, and the plurality of sub-housings 101 are connected to define the accommodation cavity 130.

It will be noted that, in the descriptions of this application, unless otherwise stated, "a plurality of" means two or more. In other words, the housing 100 includes at least two sub-housings 101, and the at least two sub-housings 101 are connected to define the accommodation cavity 130. In this way, difficulty in assembling the housing 100 is reduced, and difficulty in forming the accommodation cavity 130 can be further reduced, which improves repairability.

As shown in FIG. 1 to FIG. 4, the first component 220 is disposed in the accommodation cavity 130, the second component 210 is disposed in the accommodation cavity 130, and the one of the first component 220 and the second component 210 is connected to the housing 100. In other words, both the first component 220 and the second component 210 are disposed in the accommodation cavity 130. The housing 100 may be used to support the one of the first component 220 and the second component 210, to improve location stability of the one of the first component 220 and the second component 210, and ensure working performance of the first component 220 and the second component 210 to some extent. In addition, the housing 100 may be further used to protect the first component 220 and the second component 210, prolong service lives of the first component 220 and the second component 210, and reduce use costs of the first component 220 and the second component 210.

It will be understood that, that the one of the first component 220 and the second component 210 is connected to the housing 100 means that the one of the first component 220 and the second component 210 is fastened to the housing 100.

In addition, the housing 100 is set to include the plurality of sub-housings 101, so that the housing 100 includes a plurality of separate parts. In this way, when the first component 220 and the second component 210 are assembled, the first component 220 and the second component 210 may first be disposed between the plurality of sub-housings 101, and then the plurality of sub-housings 101 are connected, to reduce difficulty in assembling the first component 220 and the second component 210, improve assembly effect, and further prevent, to some extent, the first component 220 and the second component 210 from colliding with the housing 100 in an assembly process. In this way, damage to the first component 220 and the second component 210 is avoided, to prolong the service lives of the first component 220 and the second component 210, and ensure working performance of the first component 220 and the second component 210.

In addition, through the foregoing arrangement, when the first component 220 and the second component 210 need to be maintained or repaired, the housing 100 may be further directly opened, to reduce difficulty in maintaining the first component 220 and the second component 210 during use.

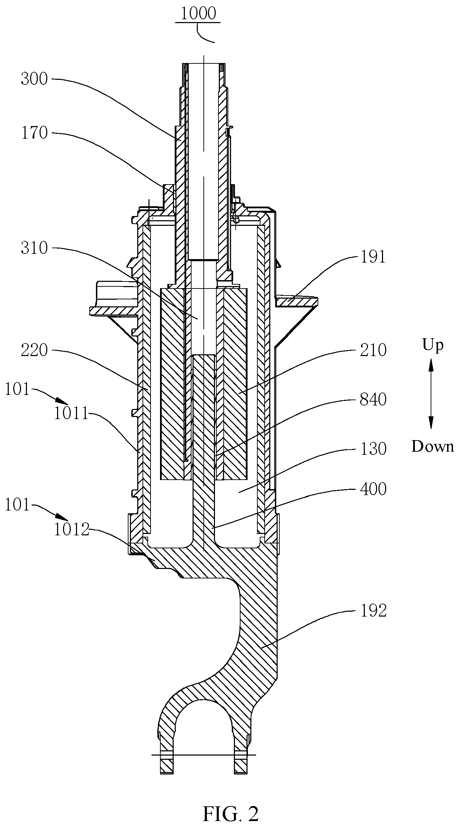

The first component 220 and the second component 210 are coupled so that the other one of the first component 220 and the second component 210 moves along the axis with the housing 100, to drive the component of the first component 220 and the second component 210 that is connected to the housing 100 to move along the axis. The axis herein will be understood as a straight line extending in the axial direction of the electromagnetic actuator 1000, namely, a straight line extending in an up-down direction in FIG. 2.

In other words, the one of the first component 220 and the second component 210 is connected to the housing 100, and when the first component 220 and the second component 210 are in coupling cooperation, the one of the first component 220 and the second component 210 moves along the axis with the housing 100, so that the housing 100 moves, to ensure working performance of the electromagnetic actuator 1000.

In some embodiments, the one of the first component 220 and the second component 210 is a permanent magnet or an electromagnet, and the other one of the first component 220 and the second component 210 is an electromagnetic coil. The electromagnetic coil cooperates with the permanent magnet, so that the first component 220 and the second component 210 can be in coupling cooperation, to ensure working performance of the electromagnetic actuator 1000. In other words, the first component 220 is a first excitation component, and the second component is a second excitation component.

It will be understood from the foregoing structure that in the electromagnetic actuator 1000 in this embodiment of this application, the housing 100 is set to include the plurality of sub-housings 101, and the plurality of sub-housings 101 are connected to define the accommodation cavity 130. In this way, difficulty in assembling the housing 100 is reduced, difficulty in assembling and maintaining the first component 220 and the second component 210 can be further reduced, and the first component 220 and the second component 210 are prevented from colliding with the housing 100 in the assembly process, to ensure working performance of the first component 220 and the second component 210.

It will be understood that this application is different from the conventional technologies in that the housing 100 is set to include the plurality of sub-housings 101, so that difficulty in assembling the first component 220 and the second component 210 that are disposed in the accommodation cavity 130 is reduced. In addition, the plurality of sub-housings 101 further help reduce difficulty in assembling the housing 100, so that the first component 220 and the second component 210 can be effectively assembled in the housing 100, and the first component 220 and the second component 210 are prevented, to some extent, from colliding with the housing 100 in the assembly process, to ensure working performance of the first component 220 and the second component 210.

In some embodiments, as shown in FIG. 1 and FIG. 2, the plurality of sub-housings 101 are arranged along the axis. In other words, the plurality of sub-housings 101 are arranged in the axial direction of the electromagnetic actuator 1000. In this way, the housing 100 can be formed as a plurality of structures arranged in the axial direction of the electromagnetic actuator 1000, to reduce difficulty in forming the housing 100, reduce difficulty in assembling the first component 220 and the second component 210 that are disposed in the housing 100, and improve assembly efficiency of the electromagnetic actuator 1000.

In some embodiments, as shown in FIG. 2, FIG. 3, and FIG. 4, the plurality of sub-housings 101 include at least one end cover 1012 and a cylinder 1011 with at least one end open, and the end cover 1012 cooperates with the cylinder 1011, to form the housing 100, and reduce difficulty in forming the housing 100.

The at least one end of the cylinder 1011 is open, so that the first component 220 and the second component 210 can be assembled into the cylinder 1011.

In addition, both inner surface accuracy of the cylinder 1011 and surface accuracy of the first component 220 need to be strictly controlled, to permit an even air gap between the first component 220 and the second component 210, and ensure working performance of the electromagnetic actuator 1000.

In some embodiments, as shown in FIG. 2, a lower end of the end cover 1012 is integrated with the mounting bracket 192. The mounting bracket 192 is configured to be connected to the axle, to simplify a connection arrangement between the electromagnetic actuator 1000 and the axle, improve structural reliability, and reduce assembly operations and assembly time of the electromagnetic actuator 1000.

The mounting bracket 192 herein will be understood as a lower fork arm of the electromagnetic actuator 1000.

In some embodiments, as shown in FIG. 2, FIG. 3, and FIG. 4, the end cover 1012 is disposed at an open location of the cylinder 1011, to ensure sealing performance of the accommodation cavity 130.

In some embodiments, as shown in FIG. 2, FIG. 3, and FIG. 4, the end cover 1012 is in insertion cooperation with the cylinder 1011. In this way, when the end cover 1012 is disposed at the open location of the cylinder 1011, the end cover 1012 and the cylinder 1011 can be fastened, to ensure structural stability of the housing 100, and reduce difficulty in forming the housing 100.

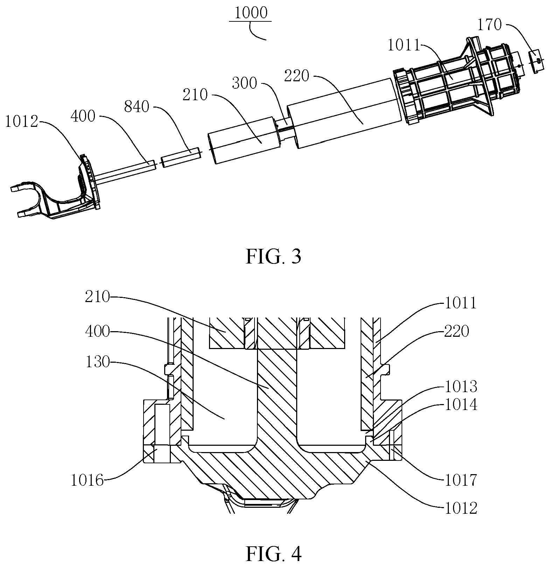

In some embodiments, as shown in FIG. 4, one of a top wall of the end cover 1012 and the lower end of the cylinder 1011 is provided with a clamping slot 1013, and the other one of the top wall of the end cover 1012 and the lower end of the cylinder 1011 is provided with an extension portion 1014. The extension portion 1014 extends into the clamping slot 1013, to implement insertion cooperation between the end cover 1012 and the cylinder 1011.

In some embodiments, as shown in FIG. 4, the end cover 1012 is connected to the cylinder 1011 through a bolt 1016, so that the end cover 1012 and the cylinder 1011 are fastened, and connection strength between the end cover 1012 and the cylinder 1011 is achieved. In addition, the end cover 1012 and the cylinder 1011 are detachably connected, to ensure structural stability and working performance of the housing 100.

In some embodiments, as shown in FIG. 4, the end cover 1012 and the cylinder 1011 are positioned by using a positioning pin 1017, to position a mounting direction of the end cover 1012, prevent misassembly, and reduce difficulty in connecting the end cover 1012 and the cylinder 1011.

In some embodiments, an end cover connection boss protruding outward in the radial direction is provided on an outer peripheral wall of the end cover 1012, a corresponding cylinder connection boss is provided on the cylinder 1011, and both the end cover connection boss and the cylinder connection boss are provided with connection holes. A fastener or a bolt passes through the connection hole, so that the end cover 1012 and the cylinder 1011 are fastened. Connection is implemented through the connection boss, so that cavities of the end cover 1012 and the cylinder 1011 can be improved, and connection stability can be improved.

It will be noted that specifications of the bolt 1016 and the positioning pin 1017 and quantities of bolts 1016 and positioning pins 1017 may be properly designed according to an actual mechanical strength requirement.

In some embodiments, as shown in FIG. 2, FIG. 3, and FIG. 4, a guide rod 400 is disposed on the end cover 1012. The guide rod 400 and the other one of the first component 220 and the second component 210 move for cooperation, to guide a moving direction of the housing 100 and the one of the first component 220 and the second component 210. In other words, the one of the first component 220 and the second component 210 is fastened to the housing 100, and the other one of the first component 220 and the second component 210 and the guide rod 400 move for cooperation, to avoid deviation of the housing 100 in a moving process, in other words, to ensure that the housing 100 can move in a predetermined direction, and ensure accuracy of movement of the housing 100.

Through the foregoing arrangement, when the electromagnetic actuator 1000 is set to be used in the vehicle 20000, a wheel 2000 can move in the predetermined direction, to ensure stability when the vehicle 20000 travels.

In some embodiments, as shown in FIG. 2, FIG. 3, and FIG. 4, a guide bearing 840 is disposed between the guide rod 400 and the other one of the first component 220 and the second component 210.

In some embodiments, the first component 220 is fastened to the housing 100, and the guide rod 400 and the second component 210 move for cooperation to guide the moving direction of the housing 100. Both perpendicularity and concentricity of a lower end of the second component 210 are determined by the guide rod 400 and the guide bearing 840.

In some embodiments, as shown in FIG. 2, an upper end of the cylinder 1011 is provided with a bearing mounting slot hole for assembling the bearing 170, and the bearing 170 serves to position an upper end of the second component 210. Both perpendicularity and concentricity of the upper end of the second component 210 are determined by a top surface of the cylinder 1011 and the bearing 170.

In conclusion, a main structure of the electromagnetic actuator 1000 in this embodiment includes the bearing 170, the cylinder 1011, the first component 220, the second component 210, the guide bearing 840, and the end cover 1012. The first component 220 is attached inside the cylinder 1011. The bearing 170, the cylinder 1011, the end cover 1012, and the first component 220 form a mover part of the electromagnetic actuator 1000. A coil winding is inside the second component 210, and a moving magnetic field is formed when three-phase electricity is supplied. The magnetic field acts on the mover part, and the second component 210 and the first component 220 generate an interaction force, so that the housing 100 moves up and down. Finally, linear movement of the electromagnetic actuator 1000 is implemented, and linear movement of the housing 100 is controlled by adjusting a magnitude and a direction of the three-phase electricity, to reach an actually required moving status. In addition, in this embodiment, through a proper design of a structure between the end cover 1012 and the cylinder 1011, problems such as mounting of the first component 220 and the second component 210, assembly of the mounting bracket 192, and movement and positioning of the housing 100 are resolved.

In a specific example, during assembly of the electromagnetic actuator 1000, a first step is to mount the first component 220 on an inner surface of the cylinder 1011 from a bottom of the cylinder 1011, a second step is to assemble the bearing 170 to the top surface of the cylinder 1011, and a third step is to place the guide bearing 840 into a mounting hole of a lower end surface of the second component 210. Then, the second component 210 is mounted from the bottom of the cylinder 1011, and the upper end of the second component 210 is inserted into the bearing 170. Finally, the end cover 1012 is mounted upward from the lower end of the cylinder 1011, the guide rod 400 is inserted into the guide bearing 840, the extension portion 1014 extends into the clamping slot 1013, and the end cover 1012 and the cylinder 1011 are connected through the bolt 1016 and the positioning pin 1017. The housing 100 is pushed and pulled to check whether the housing 100 moves smoothly. If the housing 100 does not move smoothly, whether the guide rod 400 is assembled in place and whether a machining dimension of each member exceeds a standard need to be checked. Finally, whether movement of the electromagnetic actuator 1000 is normal is checked after power-on.

It will be noted that, in the electromagnetic actuator 1000 in this embodiment, the cylinder 1011 and the end cover 1012 are of a split design structure, to facilitate mounting of the second component 210 and the first component 220. Through an integrated design of the end cover 1012, the guide rod 400, and the mounting bracket 192, a connection arrangement between members of the electromagnetic actuator 1000 is simplified, assembly operations and assembly time are reduced, structural reliability is improved, and weight is reduced. The end cover 1012 is integrated with the guide rod 400, and the extension portion 1014 is designed on the top surface of the end cover 1012 to cooperate with the inner surface of the cylinder 1011 for assembly, so that it can be ensured that a center of the guide rod 400 and a center of the cylinder 1011 coincide, to ensure an even air gap between the first component 220 and the second component 210. The positioning pin 1017 is added between the end cover 1012 and the cylinder 1011 for positioning, to position the mounting direction of the end cover 1012, and prevent mismounting.

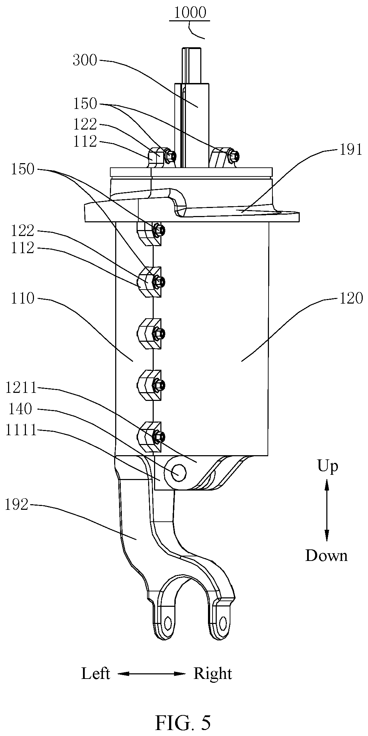

In some embodiments, as shown in FIG. 5, FIG. 6, and FIG. 8, the plurality of sub-housings 101 are arranged in a circumferential direction, and the circumferential direction is substantially perpendicular to the axis. In other words, the plurality of sub-housings 101 are not limited to being arranged along the axis of the electromagnetic actuator 1000, but may alternatively be arranged in the circumferential direction of the electromagnetic actuator 1000. In this way, difficulty in assembling the housing 100 can also be reduced, difficulty in assembling and maintaining the first component 220 and the second component 210 is reduced, and the first component 220 and the second component 210 are prevented from colliding with the housing 100 in the assembly process, to ensure working performance of the first component 220 and the second component 210.

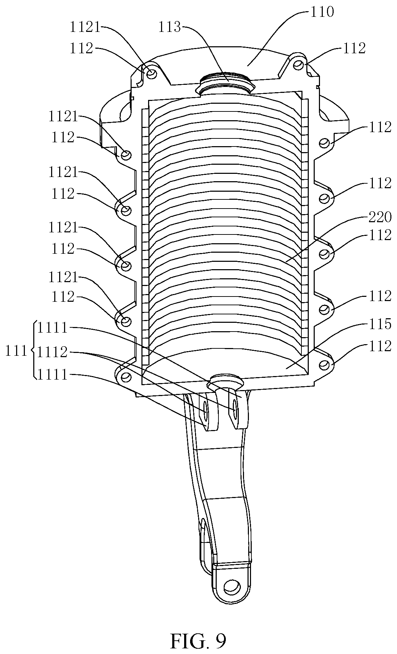

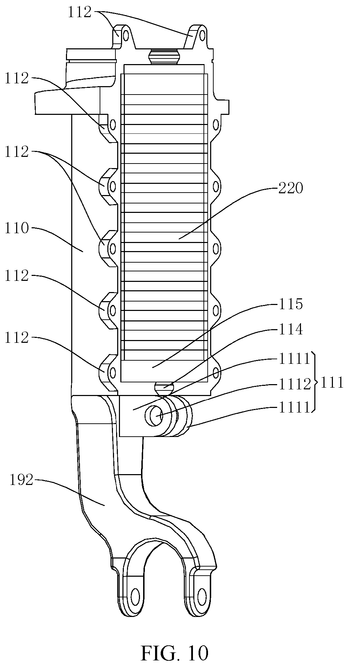

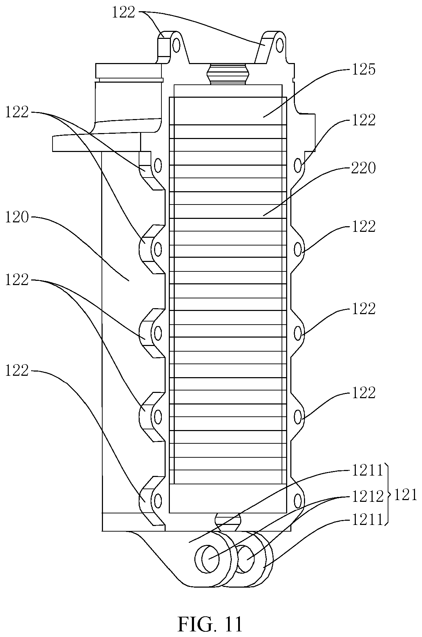

In some embodiments, as shown in FIG. 9, FIG. 10, FIG. 11, and FIG. 12, the plurality of sub-housings 101 include a first sub-housing 110 and a second sub-housing 120. A first cavity 115 is formed in the first sub-housing 110, and a second cavity 125 is formed in the second sub-housing 120. The first sub-housing 110 and the second sub-housing 120 are disposed oppositely so that the first cavity 115 and the second cavity 125 enclose and form the accommodation cavity 130, to reduce difficulty in forming the accommodation cavity 130, and facilitate the arrangement of the first component 220 and the second component 210 in the accommodation cavity 130.

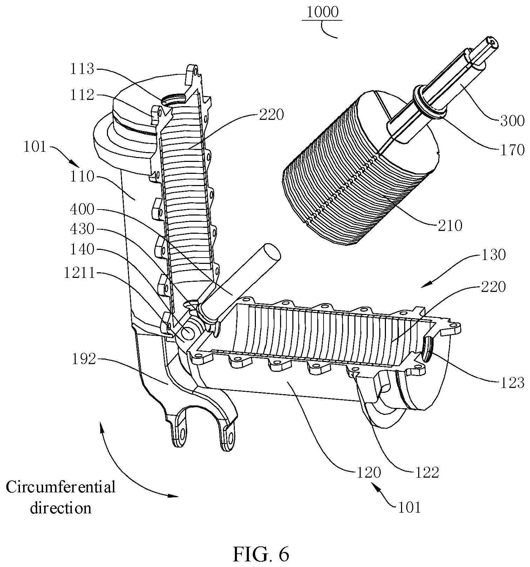

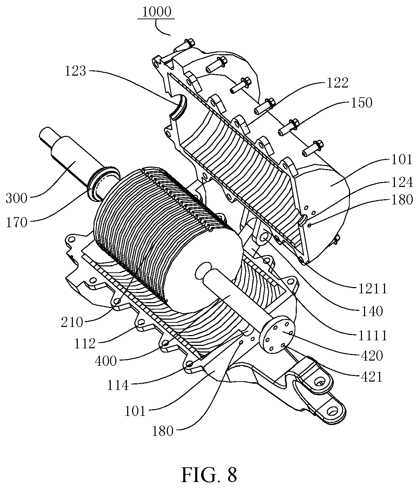

In some embodiments, as shown in FIG. 6 and FIG. 8, the first sub-housing 110 is rotatably connected to the second sub-housing 120. Herein, the first sub-housing 110 and the second sub-housing 120 are connected and may rotate relatively. In this way, in a process of assembling the first sub-housing 110 and the second sub-housing 120, the first sub-housing 110 and the second sub-housing 120 may first be rotatably connected. After the connection is in place, at least one of the first sub-housing 110 and the second sub-housing 120 is rotated to form the housing 100, so that difficulty in assembling the housing 100 is reduced.

In other words, the housing 100 in this embodiment is divided into two parts (the first sub-housing 110 and the second sub-housing 120) in a circumferential direction of the housing 100, and the two parts are rotatably connected. In this way, the first sub-housing 110 and the second sub-housing 120 can rotate around a rotational connection point to open or close the housing 100, so that difficulty in opening and closing the housing 100 is reduced.

When the first sub-housing 110 and the second sub-housing 120 rotate to completely open the inside of the housing 100, it can facilitate assembly of the first component 220 and the second component 210, and can further facilitate maintenance of the first component 220 and the second component 210. In addition, the first component 220 and the second component 210 can be further prevented, to some extent, from colliding with the housing 100 in the assembly process. When the first sub-housing 110 and the second sub-housing 120 rotate to completely close the inside of the housing 100, the housing 100 may be used to support and protect the first component 220 and the second component 210.

It will be noted that, when the housing 100 is formed as a cylindrical housing, the housing 100 may be divided into the first sub-housing 110 and the second sub-housing 120 in the radial direction of the housing 100 through the foregoing arrangement, to reduce difficulty in assembling the housing 100, and reduce difficulty in cooperation between the first component 220 and the second component 210 and the housing 100.

In some embodiments, as shown in FIG. 9, FIG. 10, FIG. 11, and FIG. 12, the first sub-housing 110 is provided with a first connection portion 111 protruding from the first sub-housing 110, the second sub-housing 120 is provided with a second connection portion 121 protruding from the second sub-housing 120, and the first connection portion 111 and the second connection portion 121 are rotatably connected. Herein, the first sub-housing 110 is provided with the first connection portion 111 and the first connection portion 111 protrudes from the first sub-housing 110, and the second sub-housing 120 is provided with the second connection portion 121 and the second connection portion 121 protrudes from the second sub-housing 120, so that the first connection portion 111 and the second connection portion 121 are rotatably connected, to reduce difficulty in connecting the first connection portion 111 and the second connection portion 121.

In addition, after the first connection portion 111 and the second connection portion 121 are rotatably connected, the first sub-housing 110 and the second sub-housing 120 may be rotatably connected. In this way, in the process of assembling the second sub-housing 120 and the first sub-housing 110, the second sub-housing 120 and the first sub-housing 110 may first be rotatably connected. After the connection is in place, at least one of the second sub-housing 120 and the first sub-housing 110 is rotated to form the housing 100, so that difficulty in assembling the housing 100 is reduced.

In some embodiments, as shown in FIG. 5 and FIG. 6, the electromagnetic actuator 1000 further includes a rotation shaft 140, both the first sub-housing 110 and the second sub-housing 120 are provided with shaft holes, and the rotation shaft 140 is disposed in the shaft holes so that the first sub-housing 110 and the second sub-housing 120 move relatively. In this way, the first sub-housing 110 and the second sub-housing 120 are rotatably connected, and difficulty in connecting the first sub-housing 110 and the second sub-housing 120 is reduced.

In some embodiments, as shown in FIG. 5 to FIG. 12, the first connection portion 111 includes a plurality of first connection lugs 1111, and the plurality of first connection lugs 1111 are spaced apart. The second connection portion 121 includes a plurality of second connection lugs 1211, and the plurality of second connection lugs 1211 are spaced apart. The plurality of first connection lugs 1111 and the plurality of second connection lugs 1211 are staggered. The first connection lug 1111 is provided with a first connection hole 1112, and the second connection lug 1211 is provided with a second connection hole 1212. The rotation shaft 140 is configured to pass through a plurality of first connection holes 1112 and a plurality of second connection holes 1212, to facilitate use of the rotation shaft 140 to implement rotatable connection between the first connection lug 1111 and the second connection lug 1211, in other words, implement rotatable connection between the first sub-housing 110 and the second sub-housing 120.

It will be noted that the foregoing "staggered" will be understood as that in a left-right direction shown in FIG. 5, the first connection lug 1111 and the second connection lug 1211 are not disposed directly facing each other, so that the plurality of first connection lugs 1111 and the plurality of second connection lugs 1211 are staggered. In this way, after the first sub-housing 110 and the second sub-housing 120 rotate to complete butting, the first connection lug 1111 and the second connection lug 1211 can be disposed directly facing each other in a front-rear direction of the housing 100, where the front-rear direction herein intersects the up-down direction and the left-right direction in FIG. 5. In this way, the rotation shaft 140 can pass through the plurality of first connection lugs 1111 and the plurality of second connection lugs 1211 at the same time, to facilitate use of the rotation shaft 140 to implement connection between the plurality of first connection lugs 1111 and the plurality of second connection lugs 1211, in other words, implement rotatable connection between the first connection portion 111 and the second connection portion 121.

The left-right direction shown in FIG. 5 may also be understood as a butting direction of the first sub-housing 110 and the second sub-housing 120. In other words, in a butting process of the first sub-housing 110 and the second sub-housing 120, the plurality of first connection lugs 1111 and the plurality of second connection lugs 1211 are staggered, so that after a docking process of the first sub-housing 110 and the second sub-housing 120, the first connection lugs 1111 and the second connection lugs 1211 can be disposed directly facing each other in the front-rear direction of the housing 100. It will be understood that in this case, the shaft holes of the first sub-housing 110 and the second sub-housing 120 are provided directly facing each other in the front-rear direction.

In conclusion, the housing 100 in this embodiment is divided into the two parts in the circumferential direction of the housing 100, and the first sub-housing 110 and the second sub-housing 120 are connected through cooperation between the rotation shaft 140, the first connection portion 111, and the second connection portion 121, so that the first sub-housing 110 and the second sub-housing 120 can rotate around the rotation shaft 140 to open or close the housing 100, and the inside of the housing 100 can be completely opened. This facilitates positioning, mounting, fastening, examination and repair, and the like of the first component 220 and the second component 210 in the housing 100, and can further prevent, compared with providing an opening in an end portion of the housing 100, the first component 220 and the second component 210 from colliding with the housing 100 in the assembly process.

In some embodiments, as shown in FIG. 6, in the axial direction of the housing 100, an end portion of the first sub-housing 110 and an end portion of the second sub-housing 120 are rotatably connected. In other words, one axial end of the first sub-housing 110 is rotatably connected to one axial end of the second sub-housing 120, to implement rotation cooperation between the first sub-housing 110 and the second sub-housing 120, and reduce difficulty in assembling the first sub-housing 110 and the second sub-housing 120.

In some embodiments, as shown in FIG. 9, FIG. 10, FIG. 11, and FIG. 12, the first connection portion 111 is disposed at the one axial end of the first sub-housing 110, and the second connection portion 121 is disposed at the one axial end of the second sub-housing 120. In this way, after the first connection portion 111 and the second connection portion 121 are rotatably connected, rotation cooperation between the first sub-housing 110 and the second sub-housing 120 can be implemented, and the end portion of the first sub-housing 110 and the end portion of the second sub-housing 120 are rotatably connected.

Through the foregoing arrangement, in a process of assembling the housing 100, the one end of the first sub-housing 110 and the one end of the second sub-housing 120 may first be rotatably connected. After the connection is in place, the first component 220 and the second component 210 are assembled between the first sub-housing 110 and the second sub-housing 120 (as shown in FIG. 6), and then the other end of the first sub-housing 110 and the other end of the second sub-housing 120 are driven to rotate toward each other, to implement cooperative connection between the first sub-housing 110 and the second sub-housing 120.

In some other embodiments, as shown in FIG. 8, in the circumferential direction of the housing 100, one side of the first sub-housing 110 and one side of the second sub-housing 120 are rotatably connected. In other words, it is not limited to that the end portion of the first sub-housing 110 and the end portion of the second sub-housing 120 are rotatably connected. Alternatively, in the circumferential direction of the housing 100, the one side of the first sub-housing 110 and the one side of the second sub-housing 120 may be rotatably connected. Herein, rotation cooperation between the first sub-housing 110 and the second sub-housing 120 may also be implemented, to reduce difficulty in assembling the first sub-housing 110 and the second sub-housing 120.

In some embodiments, as shown in FIG. 8, the first connection portion 111 is disposed on one circumferential side of the first sub-housing 110, and the second connection portion 121 is disposed on one circumferential side of the second sub-housing 120. In this way, after the first connection portion 111 and the second connection portion 121 are rotatably connected, rotation cooperation between the first sub-housing 110 and the second sub-housing 120 can be implemented, and the one side of the first sub-housing 110 and the one side of the second sub-housing 120 are rotatably connected.

Through the foregoing arrangement, as shown in FIG. 8, in the process of assembling the housing 100, the one circumferential side of the first sub-housing 110 and the one circumferential side of the second sub-housing 120 may first be rotatably connected. After the connection is in place, the first component 220 and the second component 210 are assembled between the first sub-housing 110 and the second sub-housing 120, and then the other circumferential side of the first sub-housing 110 and the other circumferential side of the second sub-housing 120 are driven to rotate toward each other, to implement cooperative connection between the first sub-housing 110 and the second sub-housing 120.

In some embodiments, the first sub-housing 110 and the second sub-housing 120 detachably cooperate. In other words, the first sub-housing 110 and the second sub-housing 120 are rotatably connected and also form detachable cooperation. In this way, the first sub-housing 110 and the second sub-housing 120 can be fastened, so that a relative location between the first sub-housing 110 and the second sub-housing 120 is stable, to ensure location stability of the housing 100. This facilitates use of the housing 100 to support and protect the first component 220 and the second component 210, to prolong the service lives of the first component 220 and the second component 210, and improve location stability of the first component 220 and the second component 210.

In addition, the first sub-housing 110 and the second sub-housing 120 are set to detachably cooperate, so that difficulty in assembling and disassembling the first sub-housing 110 and the second sub-housing 120 can be further reduced, to reduce difficulty in assembling and disassembling the housing 100, and facilitate maintenance of the first component 220 and the second component 210.

In some embodiments, as shown in FIG. 6, one of the first sub-housing 110 and the second sub-housing 120 is provided with third connection portions 112, and the other one of the first sub-housing 110 and the second sub-housing 120 is provided with fourth connection portions 122 directly facing the third connection portions 112. A first fastener 150 connects the third connection portion 112 and the fourth connection portion 122, so that the first sub-housing 110 and the second sub-housing 120 are detachable. Herein, when the first sub-housing 110 is provided with the third connection portions 112, the second sub-housing 120 is provided with the fourth connection portions 122; and when the second sub-housing 120 is provided with the third connection portions 112, the first sub-housing 110 is provided with the fourth connection portions 122. In this way, when the first fastener 150 connects the third connection portion 112 and the fourth connection portion 122, detachable cooperation between the first sub-housing 110 and the second sub-housing 120 can be implemented, the first sub-housing 110 and the second sub-housing 120 are fastened, and the relative location between the first sub-housing 110 and the second sub-housing 120 can be stable, to ensure location stability of the housing 100 and reduce difficulty in assembling the housing 100.

In some embodiments, as shown in FIG. 9, FIG. 10, and FIG. 12, the third connection portion 112 is provided with a third connection hole 1121, the fourth connection portion 122 is provided with a fourth connection hole 1221, and the first fastener 150 connects the third connection hole 1121 and the fourth connection hole 1221, so that the third connection portion 112 and the fourth connection portion 122 are fastened.

Optionally, the first fastener 150 may be a fastening bolt, a fastening screw, or a rivet.

Optionally, as shown in FIG. 5, FIG. 6, and FIG. 8, the first sub-housing 110 is provided with the plurality of third connection portions 112, and the plurality of third connection portions 112 are located on a side wall and an end wall of the first sub-housing 110. The second sub-housing 120 is provided with the plurality of fourth connection portions 122 directly facing the third connection portions 112. In this way, when the first fastener 150 connects the third connection portion 112 and the fourth connection portion 122, detachable cooperation between side walls of the first sub-housing 110 and the second sub-housing 120 and between end walls of the first sub-housing 110 and the second sub-housing 120 can be implemented, to improve connection strength between the first sub-housing 110 and the second sub-housing 120, so that the relative location between the first sub-housing 110 and the second sub-housing 120 is stable.

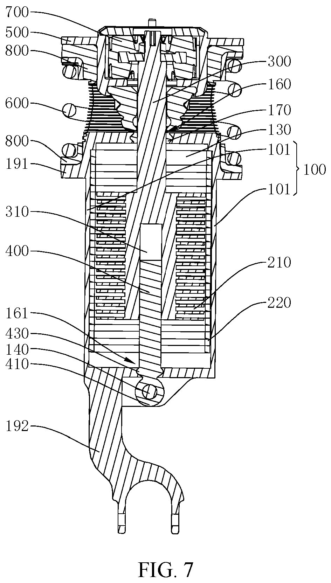

In some embodiments, as shown in FIG. 7, the housing 100 is provided with a first clearance through hole 160, the first clearance through hole 160 communicates with the accommodation cavity 130, the first clearance through hole 160 is configured to provide clearance for the center rod 300, and a cylindrical bearing 170 is disposed in the first clearance through hole 160. The first clearance through hole 160 for providing clearance for the center rod 300 that communicates with the accommodation cavity 130 is provided, so that it can be ensured that the center rod 300 can extend into the accommodation cavity 130 through the first clearance through hole 160. The cylindrical bearing 170 is disposed in the first clearance through hole 160, so that when the center rod 300 acts relative to the accommodation cavity 130, the bearing 170 can be used to guide the center rod 300, to ensure location accuracy of the center rod 300 during acting. In addition, this can further prevent the center rod 300 from being in contact with a hole wall of the first clearance through hole 160 in an acting process, to prevent the center rod 300 from interfering with the hole wall of the first clearance through hole 160, so that the center rod 300 can accurately act relative to the accommodation cavity 130.

In addition, providing the bearing 170 is more conducive to ensuring that an air gap between the permanent magnet and the coil is kept within a proper design range, ensuring stability of a system structure, and improving an anti-side-suction capability of the system.

It will be noted that, because the first clearance through hole 160 is formed in the housing 100, in a processing process of the first clearance through hole 160, a technical problem of low smoothness of the hole wall of the first clearance through hole 160 and poor location accuracy of the first clearance through hole 160 is likely to occur. In this case, if the center rod 300 directly cooperates with the first clearance through hole 160, a problem of interference between the center rod 300 and the first clearance through hole 160 in the acting process is likely to occur. Therefore, in this embodiment, the cylindrical bearing 170 is disposed in the first clearance through hole 160. In this way, the center rod 300 is used to guide the bearing 170, and the center rod 300 can be further prevented from interfering with the hole wall of the first clearance through hole 160 in the acting process, to ensure location accuracy of the center rod 300 during acting.

It will be further noted that acting of the center rod 300 relative to the accommodation cavity 130 may mean moving or rotating.

Optionally, the bearing 170 is detachably disposed in the first clearance through hole 160, so that the bearing 170 is separately processed, to ensure structural accuracy of the bearing 170, and ensure guiding performance of the bearing 170.

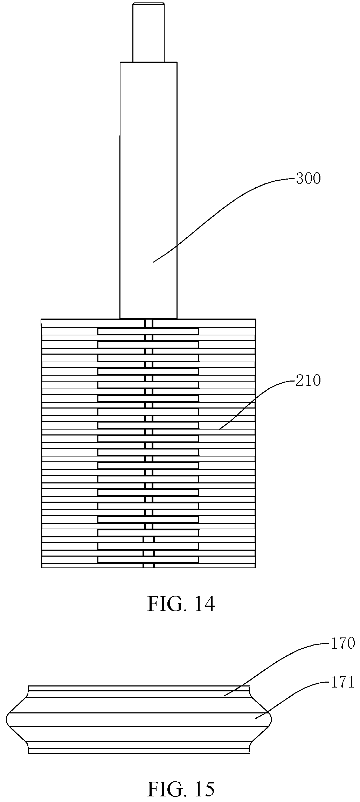

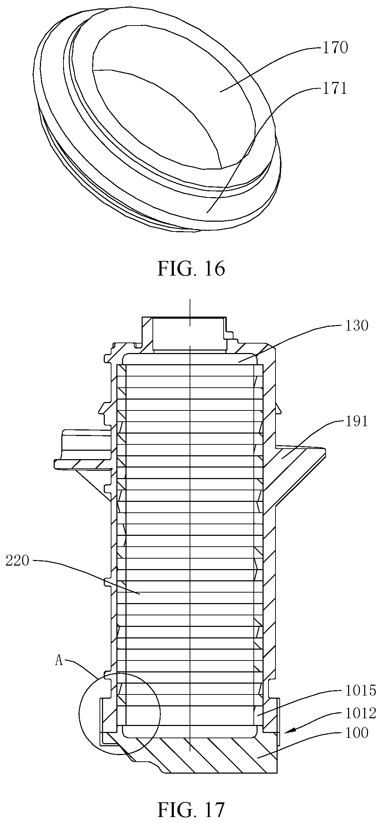

In some embodiments, as shown in FIG. 15 and FIG. 16, an outer periphery of the bearing 170 is provided with a protrusion portion 171, and the protrusion portion 171 is cooperatively connected in the first clearance through hole 160, so that cooperative connection between the bearing 170 and the first clearance through hole 160 is implemented, to facilitate use of the bearing 170 to guide the center rod 300. In addition, the bearing 170 is of a simple structure and is convenient to mount, and there is no need to add a mounting and fastening structure to fasten the bearing 170.

In some embodiments, as shown in FIG. 6 and FIG. 14, the second component 210 is disposed on the center rod 300. In this way, when the center rod 300 extends into the accommodation cavity 130, the second component 210 can be disposed in the accommodation cavity 130, so that the second component 210 can cooperate with the first component 220, to ensure working performance of the electromagnetic actuator 1000.

In addition, the second component 210 is disposed on the center rod 300, and the first component 220 is disposed in the housing 100, so that an electromagnetic solution in which the permanent magnet is disposed externally and a coil component is disposed internally can be formed, and a larger air gap diameter can be obtained under a constraint condition of limited space, to provide greater active thrust.

It will be noted that because the housing 100 in this embodiment is divided into the first sub-housing 110 and the second sub-housing 120 in the circumferential direction of the housing 100, when the housing 100 is used in the electromagnetic actuator 1000, arranging the second component 210 on the first sub-housing 110 and the second sub-housing 120 requires dividing the second component 210 into two parts, which leads to failure in generating a magnetic induction line. Therefore, when the housing 100 is used in the electromagnetic actuator 1000, the second component 210 is disposed on the center rod 300, and the first component 220 is disposed on the first sub-housing 110 and the second sub-housing 120 and divided into two parts. When the housing 100 is used in a rotary motor, because the second component 210 is in a different direction, the second component 210 may be disposed on the first sub-housing 110 and the second sub-housing 120 and divided into two parts, or may be disposed on the center rod 300.

In some embodiments, as shown in FIG. 6, FIG. 9, and FIG. 11, the first sub-housing 110 is provided with a first clearance slot 113, the second sub-housing 120 is provided with a second clearance slot 123, and the first clearance slot 113 and the second clearance slot 123 cooperate to define the first clearance through hole 160. In this way, the first clearance through hole 160 that communicates with the accommodation cavity 130 is formed in the housing 100, difficulty in forming the first clearance through hole 160 can be reduced, difficulty in cooperation between the bearing 170 and the center rod 300 and the first clearance through hole 160 can be reduced, and assembly efficiency of the housing 100 is improved.

In addition, the foregoing arrangement can further facilitate assembly of the second component 210 on the center rod 300 in the accommodation cavity 130.

In conclusion, it will be understood that after the housing 100 is divided into the first sub-housing 110 and the second sub-housing 120 in the circumferential direction of the housing 100, a middle dividing plane of the housing 100 is a plane passing an axis of the bearing 170.

It will be noted that, for a cylindrical motor housing, the middle dividing plane may evenly divide the cylindrical motor housing into two bilaterally symmetrical parts. For a motor housing in another shape (for example, square, pentagon, or the like), the middle dividing plane may divide the housing 100 into two asymmetrical parts.

In other words, when the housing 100 is formed as a cylindrical motor housing, the first sub-housing 110 and the second sub-housing 120 are substantially symmetrical in structure; and when the housing 100 is formed as a motor housing in another shape, the first sub-housing 110 and the second sub-housing 120 are substantially asymmetrical in structure.

In some embodiments, as shown in FIG. 6 and FIG. 7, the housing 100 further includes the guide rod 400, and the other one of the first component 220 and the second component 210 cooperate with the guide rod 400. This avoids deviation of the other one of the first component 220 and the second component 210 in a moving process, in other words, ensures that the other one of the first component 220 and the second component 210 can move relatively in a predetermined direction, and ensures accuracy of movement of the other one of the first component 220 and the second component 210, so that it is ensured, to some extent, that a relative axial distance between the housing 100 and the other one of the first component 220 and the second component 210 remains constant in a mutual moving process.

In some embodiments, as shown in FIG. 7, one end of the center rod 300 that is located in the accommodation cavity 130 is provided with a guide hole 310. The guide rod 400 and the guide hole 310 move for cooperation, to facilitate use of the guide rod 400 to guide a moving direction of the center rod 300, and ensure accuracy of movement of the center rod 300.

In some embodiments, as shown in FIG. 7, the guide rod 400 is disposed on the rotation shaft 140. Herein, when the end portion of the first sub-housing 110 and the end portion of the second sub-housing 120 are rotatably connected, the guide rod 400 is disposed on the rotation shaft 140, so that the end portion of the guide rod 400 and the housing 100 are rotatably connected, and difficulty in cooperation between the guide rod 400 and the housing 100 is reduced, to facilitate use of the housing 100 to support the guide rod 400, and improve location stability of the guide rod 400.

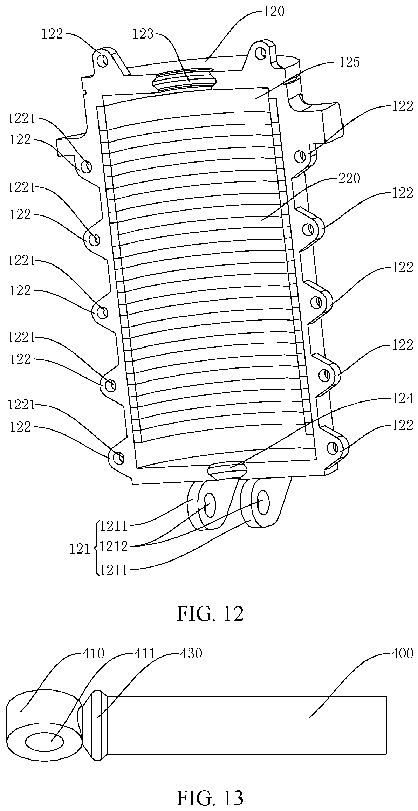

In some embodiments, as shown in FIG. 7 and FIG. 13, the guide rod 400 is provided with a through hole 411, and the rotation shaft 140 passes through the through hole 411, so that the guide rod 400 is disposed on the rotation shaft 140.

In some embodiments, as shown in FIG. 13, a mounting boss 410 is disposed at an end portion of the guide rod 400, the mounting boss 410 is provided with the through hole 411, and the rotation shaft 140 passes through the through hole 411, to implement cooperative connection between the rotation shaft 140 and the guide rod 400.

In conclusion, the first sub-housing 110, the second sub-housing 120, and the guide rod 400 in this embodiment are connected together through the rotation shaft 140. The first sub-housing 110, the second sub-housing 120, and the guide rod 400 may rotate relatively around the rotation shaft 140. During specific assembly of the housing 100, the rotation shaft 140 first sequentially passes through the plurality of first connection lugs 1111, the plurality of second connection lugs 1211, and the end portion of the guide rod 400, to implement rotation cooperation between the first sub-housing 110, the second sub-housing 120, and the guide rod 400. Then, the bearing 170 is sleeved on the center rod 300, and the center rod 300 is sleeved on the guide rod 400. The guide rod 400, the bearing 170 and the center rod 300 are rotated around the rotation shaft 140, so that the guide rod 400, the bearing 170 and the center rod 300 are close to one of the first sub-housing 110 or the second sub-housing 120, and the bearing 170 is ensured to cooperate in the third clearance slot 114 or the fourth clearance slot 124. The other one of the first sub-housing 110 or the second sub-housing 120 is controlled to rotate around the rotation shaft 140, so that the first sub-housing 110 and the second sub-housing 120 fit together. Finally, the first fastener 150 is used to connect the first sub-housing 110 and the second sub-housing 120, so that the first sub-housing 110 and the second sub-housing 120 are fastened. In the foregoing connection process, the second component 210 on the center rod 300 can be prevented from being in contact with the first component 220 on the first sub-housing 110 and the second sub-housing 120, to avoid damage to the first component 220 and the second component 210, and prolong the service lives of the first component 220 and the second component 210.

In addition, through the foregoing arrangement, the guide rod 400 and the housing 100 can form a split and detachable design, which is more conducive to mounting and fastening the first component 220 on an inner peripheral surface of the housing 100 without losing coaxiality between the guide rod 400 and the housing 100, and facilitates separate processing of the guide rod 400, to ensure smoothness of a surface of the guide rod 400, and ensure guiding performance of the guide rod 400.

In some embodiments, as shown in FIG. 6, FIG. 7, and FIG. 8, at least a partial structure of the guide rod 400 extends out of the accommodation cavity 130, and the partial structure of the guide rod 400 that extends out of the accommodation cavity 130 is provided with the through hole 411. In other words, the end portion of the guide rod 400 extends out of the first sub-housing 110 and the second sub-housing 120, and the end portion of the guide rod 400 is connected to the first sub-housing 110 and the second sub-housing 120. In this way, the guide rod 400 and the housing 100 are fastened, to facilitate use of the housing 100 to support the guide rod 400, and improve location stability of the guide rod 400, so as to ensure working performance of the guide rod 400, and facilitate use of the guide rod 400 to guide the moving direction of the center rod 300.

In addition, the end portion of the guide rod 400 extends out of the first sub-housing 110 and the second sub-housing 120, so that the guide rod 400 and the housing 100 can be connected outside the housing 100, to reduce difficulty in connecting the guide rod 400 and the housing 100, in other words, reduce cooperation difficulty of the guide rod 400.

In some embodiments, as shown in FIG. 7, the housing 100 is provided with a second clearance through hole 161, the second clearance through hole 161 communicates with the accommodation cavity 130, and the second clearance through hole 161 is used to provide clearance for the guide rod 400, so that the end portion of the guide rod 400 can extend out of the first sub-housing 110 and the second sub-housing 120 and be connected to the first sub-housing 110 and the second sub-housing 120, to reduce difficulty in connecting the guide rod 400 and the housing 100.

Optionally, as shown in FIG. 6, FIG. 8, FIG. 10, and FIG. 12, the first sub-housing 110 is provided with the third clearance slot 114, the second sub-housing 120 is provided with the fourth clearance slot 124, and the third clearance slot 114 and the fourth clearance slot 124 cooperate to define the second clearance through hole 161. In this way, the second clearance through hole 161 that communicates with the accommodation cavity 130 is formed in the housing 100, difficulty in forming the second clearance through hole 161 can be reduced, difficulty in cooperation between the guide rod 400 and the second clearance through hole 161 can be reduced, and assembly efficiency of the housing 100 is improved.

Optionally, as shown in FIG. 7 and FIG. 13, the guide rod 400 is provided with a guide protrusion 430, and the guide protrusion 430 is cooperatively connected in the second clearance through hole 161, to implement cooperative connection between the guide rod 400 and the second clearance through hole 161, and implement positioning of the guide rod 400, so that location stability of the guide rod 400 is ensured.

In some other embodiments, as shown in FIG. 8, in the circumferential direction of the housing 100, the one side of the first sub-housing 110 and the one side of the second sub-housing 120 are rotatably connected. The end portion of the guide rod 400 extends to the sides at the end portions of the first sub-housing 110 and the second sub-housing 120 in the axial direction and is connected to the first sub-housing 110 and the second sub-housing 120. Herein, when the one side of the first sub-housing 110 and the one side of the second sub-housing 120 are rotatably connected, the end portion of the guide rod 400 is connected to the end portions of the first sub-housing 110 and the second sub-housing 120 in the axial direction. In this way, the first sub-housing 110 and the second sub-housing 120 are rotatably connected, and it can be ensured that the guide rod 400 can effectively cooperate with the center rod 300, to facilitate use of the guide rod 400 to guide the moving direction of the center rod 300.

In some embodiments, as shown in FIG. 8, in the circumferential direction of the housing 100, the one side of the first sub-housing 110 and the one side of the second sub-housing 120 are rotatably connected. A mounting plate 420 is disposed at the end portion of the guide rod 400, and the mounting plate 420 is provided with a fifth connection hole 421. The first sub-housing 110 and the second sub-housing 120 each are provided with a sixth connection hole 180 directly facing the fifth connection hole 421. A second fastener connects the fifth connection hole 421 and the sixth connection hole 180, so that the guide rod 400 is fastened to the first sub-housing 110 and the second sub-housing 120, to facilitate use of the housing 100 to support the guide rod 400, improve location stability of the guide rod 400, and ensure working performance of the guide rod 400.

Optionally, the second fastener may be a fastening bolt, a fastening screw, or a rivet.

In conclusion, the first sub-housing 110 and the second sub-housing 120 in this embodiment are connected together through the rotation shaft 140. The first sub-housing 110 and the second sub-housing 120 may rotate relatively around the rotation shaft 140. During specific assembly of the housing 100, the rotation shaft 140 first sequentially passes through the plurality of first connection lugs 1111 and the plurality of second connection lugs 1211, to implement rotation cooperation between the first sub-housing 110 and the second sub-housing 120. Then, the center rod 300 is disposed in one of the first sub-housing 110 and the second sub-housing 120, the bearing 170 is sleeved on the center rod 300, and the center rod 300 is sleeved on the guide rod 400. The other one of the first sub-housing 110 and the second sub-housing 120 is rotated around the rotation shaft 140, so that the other one of the first sub-housing 110 and the second sub-housing 120 is close to the one of the first sub-housing 110 or the second sub-housing 120, and the bearing 170 is ensured to cooperate in the third clearance slot 114 and the fourth clearance slot 124. In this way, the first sub-housing 110 and the second sub-housing 120 fit together. Finally, the first fastener 150 is used to connect the first sub-housing 110 and the second sub-housing 120, and the second fastener is used to connect to the guide rod 400, so that the first sub-housing 110 and the second sub-housing 120 are fastened. In the foregoing connection process, the second component 210 on the center rod 300 can also be completely prevented from being in contact with the first component 220 on the first sub-housing 110 and the second sub-housing 120, to avoid damage to the first component 220 and the second component 210, and prolong the service lives of the first component 220 and the second component 210.

In some embodiments, the electromagnetic actuator 1000 in this embodiment is formed as a cylindrical linear motor. The cylindrical linear motor has a relatively closed structure, good sealing performance, and no single-sided magnetic pull, to ensure working performance of the electromagnetic actuator 1000.

It will be noted that, when the electromagnetic actuator 1000 is formed as a cylindrical linear motor, the first sub-housing 110 and the second sub-housing 120 of the housing 100 each form a semi-cylindrical shape. In this way, the first sub-housing 110 and the second sub-housing 120 can cooperate to form a complete cylindrical motor housing.

In some embodiments, as shown in FIG. 7, a spring 600 is disposed on the electromagnetic actuator 1000. The spring 600 is configured to provide a partial damping force and withstand partial vibration impact, to improve working performance of the electromagnetic actuator 1000, and ensure comfort of the vehicle 20000.

Optionally, as shown in FIG. 7, an upper support 500 and the mounting base 191 are further disposed on the electromagnetic actuator 1000. The upper support 500 is connected to a side of the center rod 300 that is away from the accommodation cavity 130, and the mounting base 191 is connected to the outer peripheral wall of the housing 100. Accommodation space for accommodating the spring 600 is formed between the upper support 500 and the mounting base 191. The spring 600 is placed in the accommodation space, so that the spring 600 is fastened through cooperation between the upper support 500 and the mounting base 191. In this way, when the electromagnetic actuator 1000 is used in a suspension system 10000 of the vehicle 20000, the vehicle 20000 is excited by a road surface, and the center rod 300 and the housing 100 move relatively, the spring 600 can be used to implement buffering and vibration absorption. In addition, the spring 600 can further play a damping role, to improve vibration-damping effect of the electromagnetic actuator 1000, and improve comfort of the vehicle 20000.

In some embodiments, as shown in FIG. 7, the spring 600 is arranged between the upper support 500 and the mounting base 191, an upper end of the spring 600 abuts against the upper support 500, and a lower end of the spring 600 abuts against the mounting base 191, so that during relative movement between the center rod 300 and the housing 100, the spring 600 can be compressed or stretched, to use the spring 600 to provide a partial damping force and withstand partial vibration impact, and improve comfort of the vehicle 20000.

In some embodiments, as shown in FIG. 7, a bushing 700 is disposed on the side of the center rod 300 that is away from the accommodation cavity 130. The bushing 700 is connected to the upper support 500. Buffer blocks 800 are disposed on both two opposite side surfaces of the upper support 500 and the mounting base 191, and the spring 600 is disposed between the two buffer blocks 800.

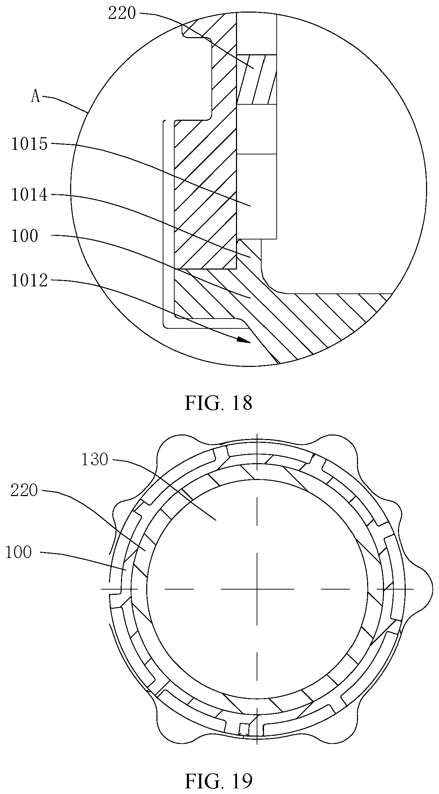

In some embodiments, as shown in FIG. 17, FIG. 18, FIG. 19, and FIG. 20, the first component 220 is connected to the housing 100, an elastic limiting member 1015 is disposed between the housing 100 and the second component 210, and the elastic limiting member 1015 separately abuts against the housing 100 and the second component 210, to ensure that the electromagnetic actuator 1000 can buffer vibration of the second component 210 in an operating process, prolong the service life of the second component 210, and reduce noise generated during working of the electromagnetic actuator 1000.

In some embodiments, the elastic limiting member 1015 is formed as a spring 600 and/or a cushion. Herein, the elastic limiting member 1015 is formed as a spring 600, or the elastic limiting member 1015 is formed as a cushion, or the elastic limiting member 1015 is formed as a spring 600 and a cushion, so that the elastic limiting member 1015 is used to buffer vibration of the second component 210, prolong the service life of the second component 210, and reduce noise generated during working of the electromagnetic actuator 1000.

It will be noted that a specific implementation form of the elastic limiting member 1015 in this embodiment includes but is not limited to a form of an elastic member such as a rubber pad, a polyurethane pad, a helical spring, a leaf spring, or a coil spring. This embodiment also imposes no limitation on a quantity of elastic limiting members 1015 and a layering configuration of the elastic limiting member 1015. For example, a form in which a plurality of layers of cushions are used or a plurality of springs are disposed in the circumferential direction falls within the scope of an embodiment that can be implemented in this embodiment.

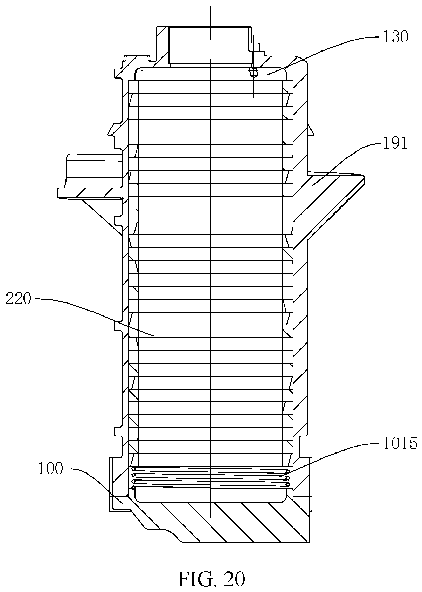

In some embodiments, as shown in FIG. 20, the elastic limiting member 1015 is a helical spring, and the helical spring is arranged between the housing 100 and the second component 210. During actual use, to buffer movement of the second component 210, it needs to be ensured that the helical spring is in a compressed state after assembly is completed. Therefore, a compression amount of the helical spring can be ensured through press-fitting of the end cover 1012.

In some embodiments, as shown in FIG. 17, FIG. 10, and FIG. 20, the second component 210 is located inside the housing 100, and is distributed along an inner radial circumference of the housing 100, and the elastic limiting member 1015 is located at a lower portion of the second component 210 and an upper side of the end cover 1012.

The second component 210 includes a plurality of layers of magnets. One layer of magnet forms a whole ring, all the layers of magnets are stuck to an inner wall of the housing 100, and the elastic limiting member 1015 is disposed at a bottom of a lowest layer of magnet. A lower end of the elastic limiting member 1015 is connected to a top of a rabbet of the end cover 1012. Because the elastic limiting member 1015 has specific elasticity, it is ensured that the elastic limiting member 1015 can buffer vibration of the magnet in the operating process of the electromagnetic actuator 1000.

It will be noted that a size of the elastic limiting member 1015 is not fixed, and may be adjusted based on a size of the electromagnetic actuator 1000, which has an advantage of high adaptability.

In addition, the elastic limiting member 1015 in this embodiment may integrate a function of a sealing module, to seal a gap between the end cover 1012 and the housing 100.

In a specific example, in an assembly process, an outer surface of the second component 210 is first coated with glue, and then the second component 210 is assembled inside the housing 100 in layers in the axial direction of the electromagnetic actuator 1000. After assembly of the second component 210 at the lowest layer is completed, the elastic limiting member 1015 is assembled, and finally the end cover 1012 is assembled. When the elastic limiting member 1015 is a helical spring, pre-compression of the helical spring may be completed.

It will be further noted that pre-pressure of the helical spring in this embodiment should not be excessively large, to avoid generating excessive pressure on the magnet. In an implementation process, the pre-pressure may be controlled by a height of the extension portion 1014 on the end cover 1012.

In some embodiments, two adjacent sub-housings 101 of the plurality of sub-housings 101 are rotatably connected. Herein, regardless of whether the plurality of sub-housings 101 are disposed oppositely in the circumferential direction of the housing 100 or disposed oppositely in the axial direction of the housing 100, two adjacent sub-housings 101 are rotatably connected, to reduce difficulty in assembling the housing 100, reduce difficulty in assembling the first component 220 and the second component 210, and prevent, to some extent, the first component 220 and the second component 210 from colliding with the housing 100 in the assembly process.

In some embodiments, the plurality of sub-housings 101 are detachably connected. In this way, the plurality of sub-housings 101 can be fastened, so that a relative location between the plurality of sub-housings 101 is stable, to ensure location stability of the housing 100. This facilitates use of the housing 100 to support and protect the first component 220 and the second component 210, to prolong the service lives of the first component 220 and the second component 210, and improve location stability of the first component 220 and the second component 210.

In addition, the plurality of sub-housings 101 are set to detachably cooperate, so that difficulty in assembling and disassembling the plurality of sub-housings 101 can be further reduced, to reduce difficulty in assembling and disassembling the housing 100, and facilitate maintenance of the first component 220 and the second component 210.

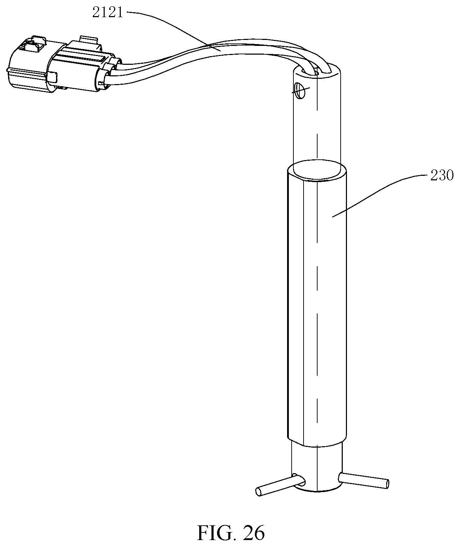

In some embodiments, as shown in FIG. 20 to FIG. 26, the electromagnetic actuator 1000 includes the center rod 300, and a partial structure of the center rod 300 extends out of the housing 100, so that the center rod 300 and an external component are fastened, and difficulty in connecting the center rod 300 and the external component is reduced, to ensure working performance of the electromagnetic actuator.

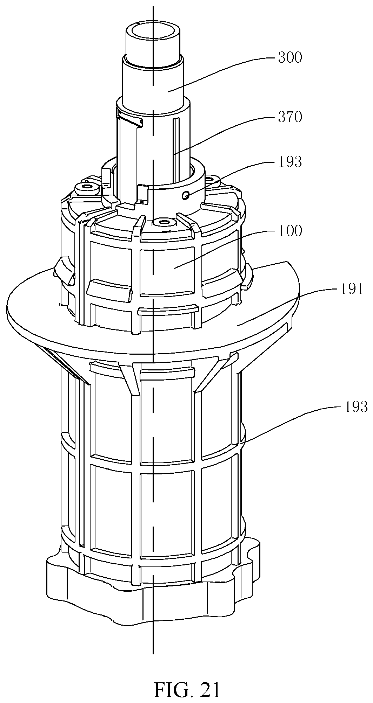

In some embodiments, as shown in FIG. 21 and FIG. 22, the second component 210 includes iron core assemblies 211 and winding assemblies 212, where the iron core assembly 211 is disposed on the center rod 300, and the winding assembly 212 is disposed on the iron core assembly 211, to facilitate use of the center rod 300 to support the iron core assembly 211 and the winding assembly 212, and improve location stability of the iron core assembly 211 and the winding assembly 212. In addition, the iron core assembly 211 and the winding assembly 212 can cooperate with the first component 220, to ensure working performance of the electromagnetic actuator 1000.

In conclusion, the second component 210 is disposed on the center rod 300, the first component 220 is disposed on the housing 100, and the first component 220 and the second component 210 are in coupling cooperation, so that the center rod 300 and the housing 100 can move relatively, to ensure working performance of the electromagnetic actuator 1000.

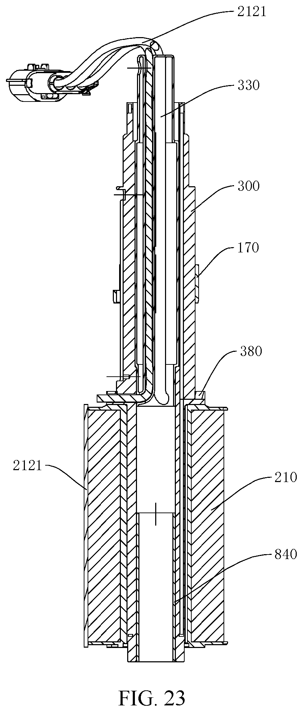

In some embodiments, as shown in FIG. 22 and FIG. 23, the center rod 300 is provided with a wire passing channel 330, and a connection wire 2121 of the winding assembly 212 passes through the wire passing channel 330 and extends out of the housing 100, so that the connection wire 2121 of the winding assembly 212 is led from the inside of the housing 100 to the outside of the housing 100, to facilitate lead-out of the connection wire 2121 of the winding assembly 212, and reduce electrical connection difficulty of the winding assembly 212. In addition, the center rod 300 can be further used to protect the connection wire 2121, to prolong service life of the connection wire 2121, and improve use safety of the connection wire 2121.

In some embodiments, a quick-change connecting member is disposed at an end portion of the electromagnetic actuator 1000, to implement quick plugging and unplugging of the connection wire 2121 and an electronic control member.

In some embodiments, as shown in FIG. 22, FIG. 23, and FIG. 26, a wire lead-out apparatus 230 is disposed in the center rod 300, and a wire passing channel 330 is provided in the wire lead-out apparatus 230, so that the wire passing channel 330 is provided in the center rod 300, to reduce difficulty in forming the wire passing channel 330.

It will be noted that an overall structure of the electromagnetic actuator 1000 in this embodiment is based on a conventional hydraulic-damping vibration damper, where an intermediate damper is replaced by a linear motor, which mainly includes the first component 220 (mover component), the second component 210 (stator component), and the upper support 500 based on structural composition of the electromagnetic actuator 1000. The first component 220 and the second component 210 form the linear motor, and the connection wire 2121 of the second component 210 is led to the outside of the housing 100 through the center rod 300.

In a specific example, the second component 210 is a part of the stator component. The stator component is disposed on an inner side of the entire electromagnetic actuator 1000, including connection wires 2121, the wire lead-out apparatus 230, the detection module 900, the center rod 300, a first limiting member 380, the iron core assemblies 211, the winding assemblies 212, the guide bearing 840, a limiting nut 850, the bearing 170, and an assembly nut 830, where the connection wires 2121, the limiting nut 850, the guide bearing 840, the first limiting member 380, the wire lead-out apparatus 230, the bearing 170, and the assembly nut 830 are all assembled on the center rod 300 to form a center component integrating a plurality of functions such as limiting, positioning, anti-rotation, heat dissipation, guiding, and wire lead-out. The iron core assemblies 211 and the winding assemblies 212 form the second component 210.

In some embodiments, both the iron core assembly 211 and the winding assembly 212 are circular ring-shaped. The second component 210 is formed by stacking several iron core assemblies 211 and winding assemblies 212 in a configuration in which one layer of the iron core assembly 211 is stacked on one layer of the winding assembly 212, is sleeved on the center rod 300 to finally form a cylindrical shape, and is fastened to the center rod 300 by using the limiting nut 850. This design facilitates manufacturing of the iron core assembly 211 and winding of the winding assembly 212. The detection module 900 is fastened to the assembly slot 950 of the center rod 300 to precisely position a relative location between the mover component and the stator component, so as to implement accurate control. The connection wire 2121 is fastened to the center rod 300 through the wire lead-out apparatus 230.

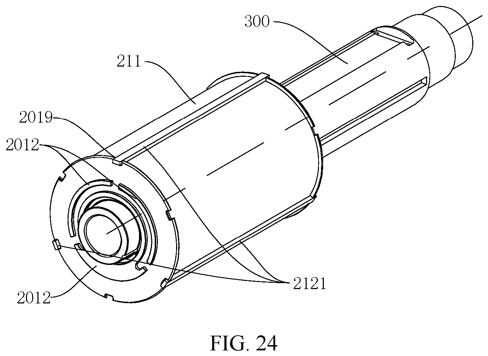

In some embodiments, as shown in FIG. 24, first reinforcing ribs 2012 are disposed on an outer peripheral wall of the iron core assembly 211, routing channels are provided in the first reinforcing ribs 2012, and the routing channels are used to guide connection wires 2121 of different phases of the winding assembly 212 to wire passing channels 330 of the center rod 300. Herein, the routing channel is provided on an inner side of the first reinforcing rib 2012, and the routing channel facilitates lead-out of the connection wire 2121 of the winding assembly 212, to reduce electrical connection difficulty of the winding assembly 212.

In addition, providing the first reinforcing rib 2012 can reduce difficulty in forming the routing channel, and the routing channel can further define a location of the connection wire 2121, to improve location stability of the connection wire 2121.

In some embodiments, the first reinforcing rib 2012 protrudes toward an outer periphery of the iron core assembly 211, to form the routing channel on a side of the first reinforcing rib 2012 that faces an inner circumference of the iron core assembly 211.

In some embodiments, as shown in FIG. 24, a plurality of notches 2019 and several first reinforcing ribs 2012 that may restrict a wire lead-out direction are evenly arranged on a circumference of the iron core assembly 211. The connection wires 2121 of different phases of the winding assembly 212 are led out from specified notches 2019 along the routing channels in the first reinforcing ribs 2012.

In addition, according to a principle that in three-phase wires, wires of the same phase need to be connected together, connection wires 2121 of the winding assembly 212 of the same phase are led out from the same notch 2019. In this way, the connection wires 2121 of the same phase can be connected from an outer side of the iron core assembly 211 from top to bottom (as shown in FIG. 24), tool operation space is not limited, and it is easy to intuitively find problems during subsequent examination and repair, to reduce repair costs.

It will be noted that, because the notch 2019 limits the wire lead-out direction, and a cylindrical pin between the iron core assembly 211 and the center rod 300 restricts rotation of the iron core assembly 211 around the center rod 300, the connection wire 2121 of the winding assembly 212 is relatively fastened with small location deviation and reliable connection.

In some embodiments, as shown in FIG. 22, FIG. 23, FIG. 24, and FIG. 25, three connection wires 2121 respectively extend out from three wire passing channels 330 in the wire lead-out apparatus 230, and three outlets of the three wire passing channels 330 are evenly distributed in the circumferential direction. The center rod 300 is provided with three wire lead-out ports 311. The three outlets of the wire passing channels 330, the three wire lead-out ports 311, and the three notches 2019 are in one-to-one correspondence. During assembly, the wire lead-out apparatus 230 is assembled in the center rod 300. The three connection wires 2121 pass through the wire lead-out apparatus 230 and the wire lead-out ports 311 to be connected to the winding assembly 212.

Through the above arrangement, after being led out from the outer side of the iron core assembly 211, the connection wire 2121 passes into an inner side of the center rod 300, passes through the wire passing channel 330, and reaches the outer side of the housing 100. The lead-out wire can be fastened in the entire process, where the wire passing channel 330 serves to fasten and protect the connection wire 2121, so that a problem that there is a risk of being squeezed and scratched in the conventional technologies is well resolved.

In some embodiments, as shown in FIG. 22, the first limiting member 380 is sleeved above the center rod 300, and the first limiting member 380 and an outlet of the center rod 300 jointly fasten the connection wire 2121.

In some embodiments, the first limiting member 380 is made of a rubber material, and can buffer impact of neighboring members on the connection wire 2121 in an extreme working condition, to protect the connection wire 2121 and ensure reliability of an electrical system.

In this embodiment, the mover component of the electromagnetic actuator 1000 is disposed on an outer side of the entire structure, and includes the bearing 170, the housing 100, the first component 220, the second limiting member 390, the guide rod 400, and the mounting bracket 192. The mounting bracket 192 is assembled at a wheel end and is connected to the housing 100 through several bolts to jointly form a closed operating environment inside the electromagnetic actuator 1000. The guide rod 400 serves a guiding function. The second limiting member 390 is sleeved on the guide rod 400, so that impact of the first component 220 on the second component 210 can be buffered in an extreme working condition, to well protect the second component 210. The first component 220 is evenly distributed on the inner side of the housing 100 to provide a fixed magnetic field. The housing 100 mainly serves a protection function, and a localized protruding feature on the housing 100 (for example, the mounting base 191 and the second reinforcing rib 195) mainly serves to support the spring 600 and perform overall heat dissipation.

Through the foregoing arrangement, during a moving process of the electromagnetic actuator 1000, the first component 220 moves up and down in the axial direction along a center line with the center rod 300 via the housing 100 and the mounting bracket 192 by using the bearing 170 and the guide bearing 840. Because the whole housing 100 is sealed inside, and the housing 100 is moving, the winding assembly 212 needs to reach the outer side of the housing 100 through the center rod 300 during wire lead-out. An outer side of an upper end of the center rod 300 has relative movement with the bearing 170, an inner side of a lower end of the center rod 300 is nested with the guide bearing 840, and the guide bearing 840 has relative movement with the mounting bracket 192. Therefore, as shown in FIG. 24, the winding assembly 212 is sleeved in a lower portion of the center rod 300 and the winding assembly 212 performs wire lead-out from the outer side, to avoid a region for relative movement between the bearing 170 and the mounting bracket 192 in the lower portion the center rod 300. The connection wire 2121 passes into the center rod 300, passes through the wire lead-out apparatus 230, and reaches the outer side of the housing 100, to avoid a region for relative movement between an upper portion of the center rod 300 and the bearing 170. Through this design, the connection wire 2121 is prevented from being squeezed or scratched in the operating process.

In some embodiments, a tower top is disposed above the electromagnetic actuator 1000, and the tower top includes the upper support 500, the assembly nut 830, the spring 600, a dust cover 820, and a cooling structure 810. The electromagnetic actuator 1000 is assembled to the tower top through cooperation between the assembly nut 830 and a first threaded section 831 on the center rod 300 of the electromagnetic actuator 1000. The tower top is fastened to the vehicle body, and the center rod 300 passes through the middle of the upper support 500. The connection wire 2121 also passes through the vehicle body to a front cabin, and cooperates with an electronic control end through the quick-change connecting member, to connect to electronic control of the motor and finally implement control of an electromagnetic vibration damper.

The spring 600 can buffer impact of the road surface. The dust cover 820 can prevent dust from entering the inside of the electromagnetic actuator 1000. The upper support 500 cooperates with the vehicle body to fasten one end of the electric electromagnetic actuator 1000 to the vehicle body. The cooling structure 810 can perform a heat exchange cycle with cooling liquid in the center rod 300 to reduce a temperature of the cooling liquid.

In some embodiments, after the winding assembly 212 and the iron core assembly 211 are assembled on the center rod 300, the limiting nut 850 and a second threaded section 851 cooperate to thread the iron core assembly 211 to the center rod 300. This design ensures that the entire iron core assembly 211 is fastened to the center rod 300 in a designed state.

In conclusion, in a wire lead-out structure of the electromagnetic actuator 1000 in this embodiment, a relative relationship between neighboring members is used for an ingenious design to resolve a problem of difficult wire lead-out, which has advantages of safety and reliability, convenient disassembly and assembly, compact space design, and the like.

In some embodiments, as shown in FIG. 21 to FIG. 25, the center rod 300 is provided with the first anti-rotation portion 370, the housing 100 is provided with a second anti-rotation portion, and the first anti-rotation portion 370 cooperates with the second anti-rotation portion to limit the degree of freedom of rotation of the center rod 300, to avoid large rotation of the center rod 300 and the housing 100, ensure that the center rod 300 and the housing 100 can effectively move relatively, and ensure working performance of the electromagnetic actuator 1000.

In some embodiments, as shown in FIG. 21 to FIG. 25, the first anti-rotation portion 370 is a long strip slot extending in the axial direction of the center rod 300, and the second anti-rotation portion is fastened to the housing 100 and extends into the first anti-rotation portion 370, to limit the degree of freedom of rotation of the center rod 300 through cooperation between the first anti-rotation portion 370 and the second anti-rotation portion, avoid relative rotation between the center rod 300 and the housing 100, and ensure working performance of the electromagnetic actuator 1000.

In some embodiments, as shown in FIG. 21, the housing 100 is provided with the anti-rotation hole 193, the second anti-rotation portion is an anti-rotation column, and the anti-rotation column passes through the anti-rotation hole 193 and extends into the first anti-rotation portion 370, to implement cooperation between the first anti-rotation portion 370 and the second anti-rotation portion, and facilitate limitation of the degree of freedom of rotation of the center rod 300.

In some embodiments, the anti-rotation column is fastened to the anti-rotation hole 193, to ensure location stability of the anti-rotation column, and facilitate limitation of the degree of freedom of rotation of the center rod 300 through cooperation between the first anti-rotation portion 370 and the second anti-rotation portion.

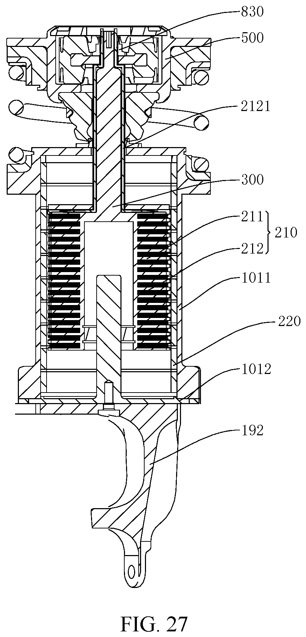

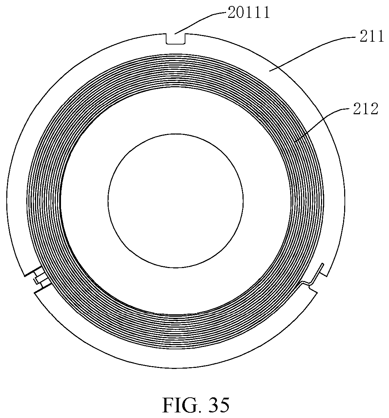

In some embodiments, as shown in FIG. 27 to FIG. 35, the winding assembly 212 has a first lead-out wire end 2018, and at least a partial structure of the first lead-out wire end 2018 is located between the iron core assembly 211 and the housing 100, to implement wire lead-out from the outer side of the winding assembly 212, and reduce wire lead-out difficulty of the winding assembly 212 and difficulty in arranging the connection wire 2121.

In addition, through the foregoing arrangement, internal space of the iron core assembly 211 is further freed up, to facilitate a cooling design.

In some embodiments, the first lead-out wire end 2018 is connected to the connection wire 2121, to ensure working performance of the winding assembly 212.

It will be noted that the electromagnetic actuator 1000 in this embodiment belongs to the suspension system 10000 of the vehicle 20000, and replaces a conventional vibration damper of the vehicle to be mounted at a location of the conventional vibration damper of the vehicle. Main functions of the electromagnetic actuator 1000 are to reduce vibration transmitted by the road surface and control energy flow, so that vehicle comfort and energy utilization are improved. Compared with the conventional vibration damper, the electromagnetic actuator 1000 has a complete linear motor structure that is capable of linear movement to replace a hydraulic damping structure of the conventional vibration damper.

The wire lead-out structure is for a linear motor part of the electromagnetic actuator 1000. The linear motor is a motor in which the first component 220 and the second component 210 may perform linear displacement relatively. The linear motor includes a mover component and a stator component in a typical motor.

In some embodiments, as shown in FIG. 27 to FIG. 35, the electromagnetic actuator 1000 in this embodiment includes the upper support 500, the assembly nut 830, the center rod 300, the connection wires 2121, the housing 100, the first component 220, the second component 210, the mounting bracket 192, and the like. The upper support 500 is locked with the center rod 300 by using the assembly nut 830. The connection wires 2121 include three phases A, B, and C. The connection wires 2121, the center rod 300, and the second component 210 form the stator component of the electromagnetic actuator 1000. The first component 220 and the housing 100 form the mover component of the electromagnetic actuator 1000. The mounting bracket 192 serves to connect to the suspension system 10000.

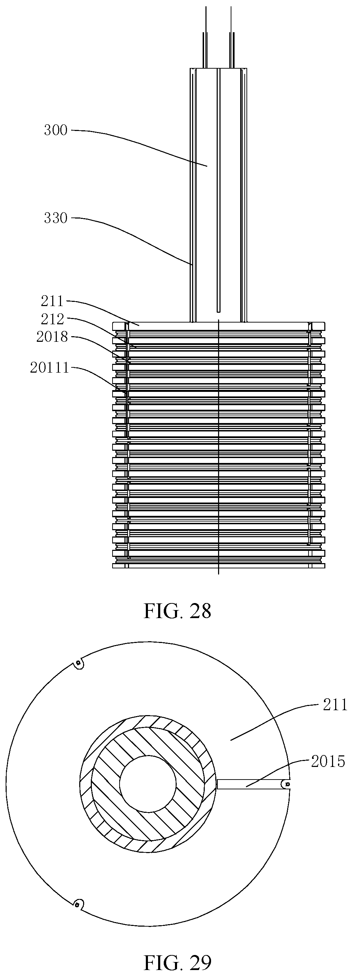

In some embodiments, as shown in FIG. 28 and FIG. 29, the iron core assembly 211 has a tooth slot, and the winding assembly 212 is disposed in the tooth slot. A wire end lead-out slot 2015 is provided on a surface of each tooth slot and is used for a wire end of the winding assembly 212 in each tooth slot to extend out between the iron core assembly 211 and the housing 100, so that the at least a partial structure of the first lead-out wire end 2018 of the winding assembly 212 can be located between the iron core assembly 211 and the housing 100, to implement wire lead-out from the outer side of the winding assembly 212, and reduce wire lead-out difficulty of the winding assembly 212 and difficulty in arranging the connection wire 2121.

In some embodiments, as shown in FIG. 28, an outer surface of the iron core assembly 211 is provided with a recess 20111 to be used for cross-phase connection between the winding assemblies 212.

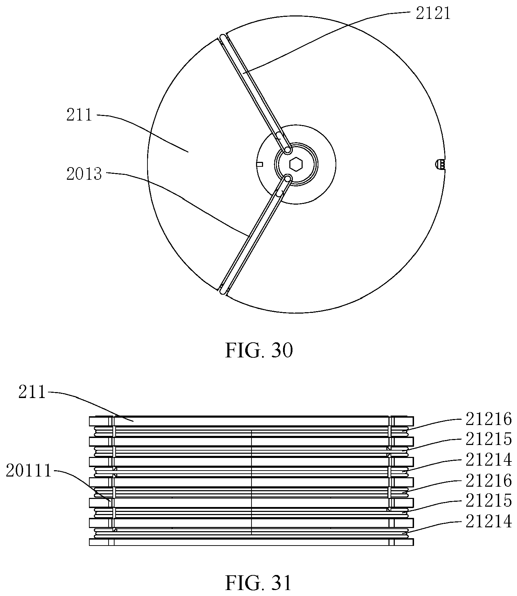

Optionally, as shown in FIG. 31, the winding assembly 212 includes a first-phase winding 21214, a second-phase winding 21215, and a third-phase winding 21216. A first lead-out wire end 2018 at one end of a first-phase winding 21214 needs to be connected to that at one end of a first-phase winding 21214, a first lead-out wire end 2018 at one end of a second-phase winding 21215 needs to be connected to that at one end of a second-phase winding 21215, and a first lead-out wire end 2018 at one end of a second-phase winding 21216 needs to be connected to that at one end of a second-phase winding 21216, to form a series structure. In this embodiment, the outer surface of the iron core assembly 211 is provided with the recess 20111, to facilitate passage of first lead-out wire ends 2018 between phases, and an operation such as welding or crimping is required to join the first lead-out wire ends 2018. The recess 20111 enables the first lead-out wire ends 2018 to be connected without obstruction around, so that operation space is large, implementation difficulty is low, which facilitates mass production.

In some embodiments, as shown in FIG. 30, a wire arrangement slot 2013 is provided at a top of the iron core assembly 211. After wiring between the first lead-out wire ends 2018 is completed, the connection wires 2121 finally reach an upper surface of the iron core assembly 211. The three-phase wires are directly buried in the wire arrangement slot 2013 on the upper surface to ensure smooth wiring.

In some embodiments, the center rod 300 is provided with the wire passing channel 330, and the connection wire 2121 passes through the wire passing channel 330 and extends out of the housing 100.

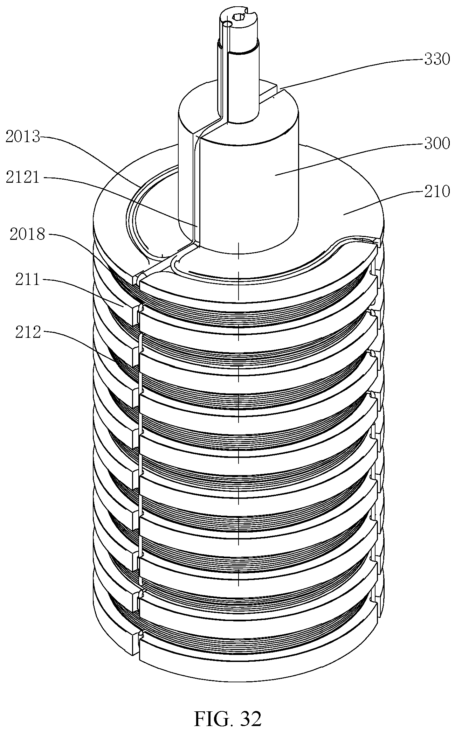

In some embodiments, as shown in FIG. 28 and FIG. 32, the wire passing channel 330 is formed on an outer wall of the center rod 300. In this way, the connection wire 2121 does not need to pass in and out, and fits perfectly with the outer wall of the center rod 300, to reduce connection difficulty of the connection wire 2121.

In some embodiments, the connection wire 2121 may be fastened through gluing or injection molding, or covered with a protective casing, to enhance a degree of fitting between the connection wire 2121 and the center rod 300. An operation is convenient, and operation space is sufficient.

In some embodiments, as shown in FIG. 30 and FIG. 32, the wire arrangement slot 2013 may be straight, helical, or curved, and there may be one or more wire arrangement slots 2013. A plurality of wire arrangement slots 2013 may converge into one wire arrangement slot 2013, or one wire arrangement slot 2013 may branch into a plurality of wire arrangement slots 2013. All of the above fall within the scope in this embodiment.

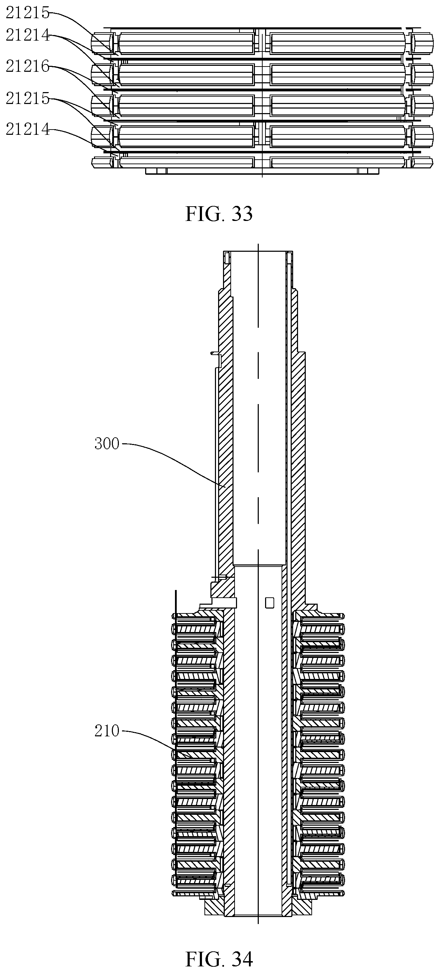

Further, as shown in FIG. 33, an arrangement order of the first-phase winding 21214, the second-phase winding 21215, and the third-phase winding 21216 may be arbitrarily varied, all of which have wiring operations.

In addition, as shown in FIG. 27, FIG. 34, and FIG. 35, the iron core assembly 211 and the center rod 300 may be integrated or split. The outer surface of the iron core assembly 211 is provided with the recess 20111, and the recess 20111 is used for cross-phase connection between the winding assemblies 212.

In conclusion, in this embodiment, the connection wire 2121 is buried in an outer wall of the iron core assembly 211, does not interfere with the first component 220, and also avoids inner walls of the upper support 500 and the assembly nut 830, so that assembly of the upper support 500 and the center rod 300 is not affected, and there is not an interference problem. This facilitates examination and repair of a lead wire of the winding assembly 212, provides sufficient operation space, and is friendly to arrangement of the connection wire 2121. In addition, the internal space of the iron core assembly 211 is freed up, to facilitate the cooling design.

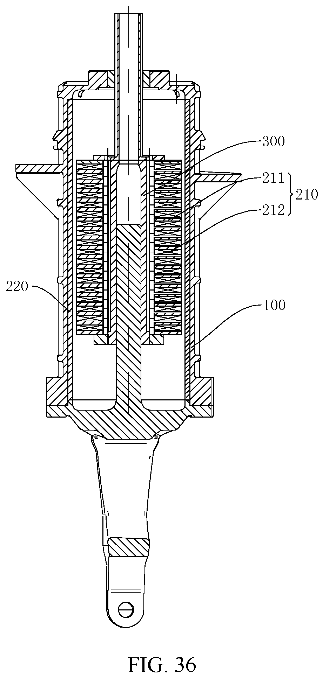

In some embodiments, as shown in FIG. 36 to FIG. 40, the winding assembly 212 has a second lead-out wire end 214, and at least a partial structure of the second lead-out wire end 214 is located between the iron core assembly 211 and the center rod 300, to implement wire lead-out from an inner side of the winding assembly 212, reduce wire lead-out difficulty of the winding assembly 212, reduce occupied space of the second component 210, and reduce difficulty in forming the second component 210.

In some embodiments, the second lead-out wire end 214 is connected to the connection wire 2121, to ensure working performance of the winding assembly 212.

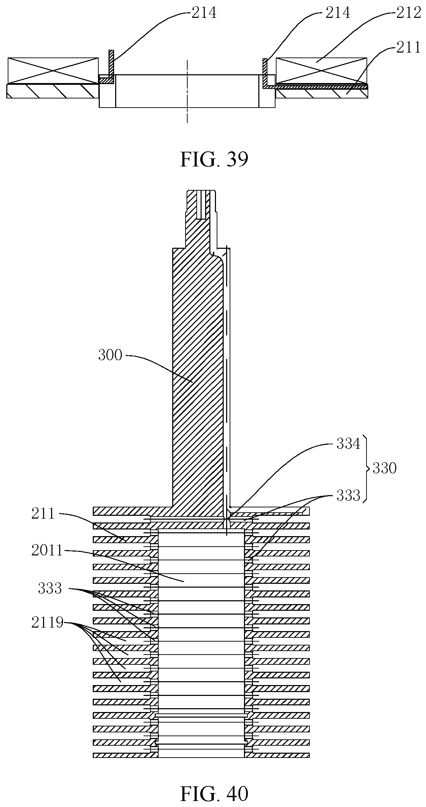

In some embodiments, as shown in FIG. 40, the wire passing channel 330 includes a radial hole 333 and an axial hole 334, and the radial hole 333 communicates with the axial hole 334. Herein, the wire passing channel 330 includes the radial hole 333 extending in a radial direction of the electromagnetic actuator 1000 and the axial hole 334 extending in the axial direction of the electromagnetic actuator 1000. The radial hole 333 communicates with the axial hole 334, so that the connection wire 2121 can effectively pass through the wire passing channel 330 and extend out, to reduce difficulty in leading out the connection wire 2121.

In some embodiments, the connection wire 2121 passes through the axial hole 334 and the radial hole 333 to be connected to the second lead-out wire end 214 of the winding assembly 212, so that the second lead-out wire end 214 and the connection wire 2121 are connected.

In some embodiments, as shown in FIG. 36 to FIG. 40, the electromagnetic actuator 1000 in this embodiment includes the center rod 300, the iron core assemblies 211, the winding assemblies 212, the first component 220, and the housing 100. The center rod 300, the iron core assemblies 211, and the winding assemblies 212 together form the stator component of the electromagnetic actuator 1000, and the first component 220 and the housing 100 together form the mover component of the electromagnetic actuator 1000.

In some embodiments, the iron core assembly 211 is press-fitted or screwed on the center rod 300, the winding assembly 212 is wound around or placed on the iron core assembly 211, and the three-phase wires of the winding assembly 212 need to be led out from the iron core assembly 211 and led out from a top of the center rod 300, to be connected to a motor controller.

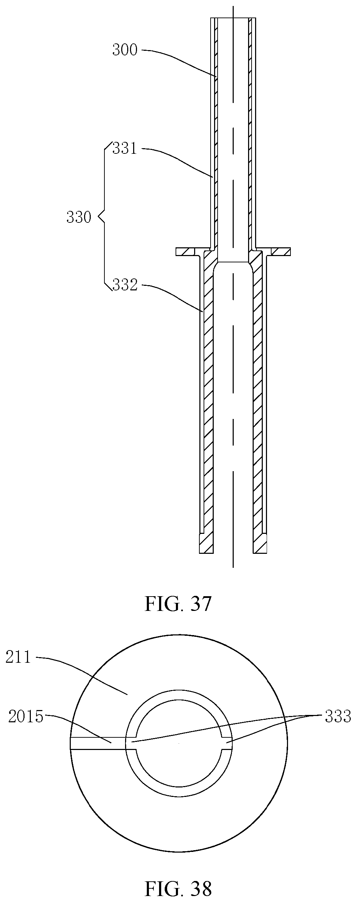

In some embodiments, as shown in FIG. 38 and FIG. 39, the iron core assembly 211 is provided with the wire end lead-out slot 2015 and the radial hole 333. An outer wire end of the winding assembly 212 passes through the wire end lead-out slot 2015 from an outermost edge of the iron core assembly 211 back to the inside to reach the radial hole 333, and is internally led out through the radial hole 333. An inner wire end of the winding assembly 212 may be directly led out through the radial hole 333, so that the at least a partial structure of the second lead-out wire end 214 is disposed between the iron core assembly 211 and the center rod 300.

It will be noted that, each iron core assembly 211 and each winding assembly 212 on the second component 210 are led out in this configuration, and wire ends are connected based on a design of the three-phase wires.

It will be further noted that this embodiment is different from a case in which at least a partial structure of the lead-out wire end of the winding assembly 212 is disposed between the iron core assembly 211 and the housing 100 in that occupied space is small, winding space of the winding assembly 212 is not affected, and a slot fill rate is greatly improved compared with that in an external wire lead-out configuration. In this way, in same space, more electromagnetic thrust can be obtained, and it is ensured to some extent that performance of the electromagnetic actuator 1000 can be greatly improved.

In some embodiments, the wire end lead-out slot 2015 may be a straight slot or an inclined slot. According to a requirement, there may be one or more wire end lead-out slots 2015. A plurality of wire end lead-out slots 2015 are usually evenly distributed to obtain better effect. In addition, a width of the wire end lead-out slot 2015 depends on a diameter of the wire used by the electromagnetic actuator 1000, and a notch shape of the wire end lead-out slot 2015 may be arc-shaped, square, or the like.

In some embodiments, a wire lead-out slot 331 at a guide rod end and a wire lead-out slot 332 at a winding section that communicate are provided in the axial direction of the center rod 300. Both the wire lead-out slot 331 at the guide rod end and the wire lead-out slot 332 at the winding section are provided on an outer wall surface of the center rod 300. Second lead-out wire ends 214 of the winding assembly 212 all converge into the wire lead-out slot 332 at the winding section for interphase wiring operations to finally complete wire lead-out at the winding section. The wire lead-out slot 331 at the guide rod end is provided on the center rod 300, so that the connection wire 2121 led out from the winding assembly 212 can be directly buried in the center rod 300 without changing an overall wire lead-out direction. In this way, a wire lead-out operation for the connection wire 2121 is convenient and quick without changing a natural direction of the connection wire 2121. In addition, there is no need to pass into internal space of the center rod 300 for wire lead-out, and a natural wire lead-out state of the three-phase wires is retained, so that damage to the connection wire 2121 is small, durability of the connection wire 2121 is effectively improved, and the internal space of the center rod 300 can be freed up for cooling arrangement, to improve performance of the electromagnetic actuator 1000.

It will be noted that, if a diameter of the connection wire 2121 used by the winding assembly 212 is small, the wire lead-out slot 332 at the winding section may not be provided, and wire lead-out may be directly performed against the outer wall of the center rod 300.

In some embodiments, as shown in FIG. 40, when the center rod 300 and the iron core assemblies 211 are an integrated member, the iron core assemblies 211 includes a plurality of placement slots 2119 spaced apart in the axial direction of the center rod 300, and the winding assemblies 212 are disposed in the plurality of placement slots 2119, to implement cooperative connection between the winding assemblies 212 and the iron core assemblies 211, and facilitate formation of the second component 210.

In some embodiments, as shown in FIG. 40, routing space 2011 is provided in a middle portion of the iron core assembly 211, and each placement slot 2119 is provided with a radial hole 333 communicating with the routing space 2011, to implement internal wire lead-out of the winding assembly 212.

In conclusion, in this embodiment, the slot fill rate of the electromagnetic actuator 1000 can be effectively improved, to improve performance of the electromagnetic actuator 1000. In addition, the connection wire 2121 is buried in a wall thickness of the center rod 300, no extra space is occupied, and the natural direction of the connection wire 2121 is not changed. This is conducive to prolonging the service life of the connection wire 2121, and the operation is convenient and quick.

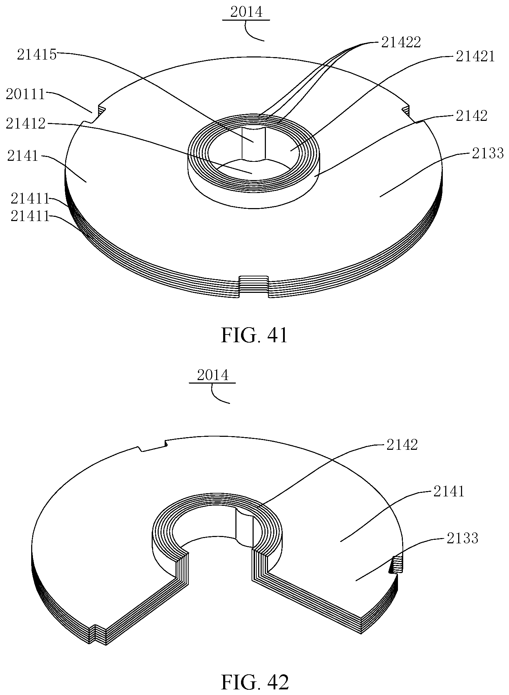

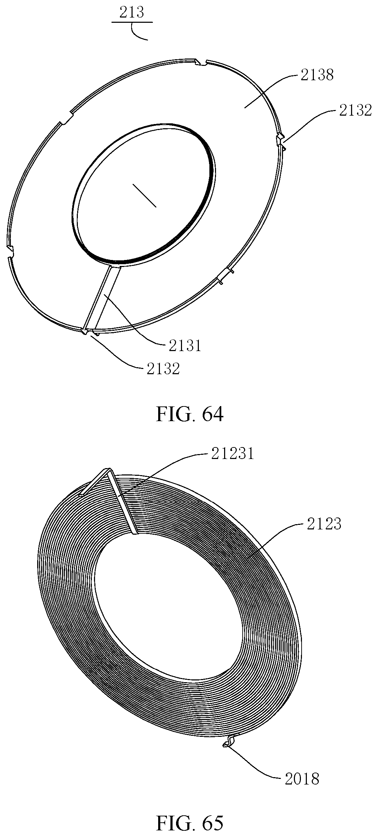

In some embodiments, as shown in FIG. 41 to FIG. 48, the iron core assembly 211 includes a plurality of stator magnetic cores 2014, the stator magnetic cores 2014 are arranged in the axial direction of the center rod 300, and the stator magnetic core 2014 includes a stator tooth portion 2141 and a stator yoke portion 2142. The stator tooth portion 2141 includes a plurality of first laminations 21411 stacked in the axial direction of the center rod 300, and the stator yoke portion 2142 has an annular shape and is provided on the stator tooth portion 2141. At least a part of the stator yoke portion 2142 is located on one side of the stator tooth portion 2141 so that a winding slot 2133 is formed between the stator tooth portion 2141 and the stator yoke portion 2142. The winding assembly 212 includes windings of a plurality of phases. Coils 2123 of the windings (for a specific structure of the coil 2123, refer to FIG. 65) are all placed in the winding slot 2133. In this way, the winding assembly 212 is disposed on the iron core assembly 211, to ensure working performance of the second component 210 and reduce difficulty in assembling the second component 210.

It will be noted that, the stator tooth portion 2141 is set to include the plurality of first laminations 21411 stacked in the axial direction of the center rod 300. Compared with a structure in which the stator tooth portion 2141 is set as a single conductor, the plurality of first laminations 21411 can effectively reduce an eddy current loss in the stator tooth portion 2141, to improve thrust and efficiency of the electromagnetic actuator 1000.

In some embodiments, the winding slot 2133 is formed in one axial side of the stator tooth portion 2141 and located on a radially outer periphery of the stator yoke portion 2142, to facilitate placement of the coil 2123 of the winding in the winding slot 2133.

In some embodiments, as shown in FIG. 41 to FIG. 48, the stator yoke portion 2142 is disposed on the one axial side of the stator tooth portion 2141, so that the winding slot 2133 is formed between that stator tooth portion 2141 and the stator yoke portion 2142, to facilitate placement of the coil 2123 of the winding in the winding slot 2133, reduce difficulty of cooperation between the winding assembly 212 and the iron core assembly 211, and ensure working performance of the second component 210.

In some embodiments, as shown in FIG. 41 to FIG. 46, the stator yoke portion 2142 includes a plurality of stacked second laminations 21422, and the plurality of second laminations 21422 are stacked in a radial direction of the center rod 300, to effectively reduce the eddy current loss in the stator tooth portion 2141.

In other words, the plurality of first laminations 21411 of the stator tooth portion 2141 are stacked in the axial direction of the center rod 300, and the plurality of second laminations 21422 of the stator yoke portion 2142 are stacked in the radial direction of the center rod 300. The axially laminated tooth portion and the radially laminated yoke portion can significantly reduce the eddy current loss in the stator tooth portion 2141.

In some embodiments, as shown in FIG. 41 and FIG. 42, the stator tooth portion 2141 and the stator yoke portion 2142 are made by stamping and laminating an integrated silicon steel sheet. An integrated stamped structure can also ensure thrust and efficiency of the electromagnetic actuator 1000, and reduce thrust fluctuation of the electromagnetic actuator 1000.

In addition, the integrated stamped structure further has advantages of fewer structural cross-sections, less gluing, high assembly accuracy, and no impact on thrust and efficiency of the electromagnetic actuator 1000.

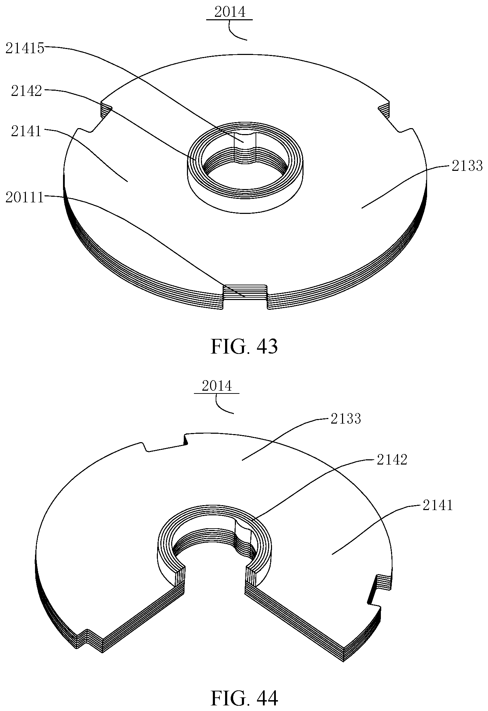

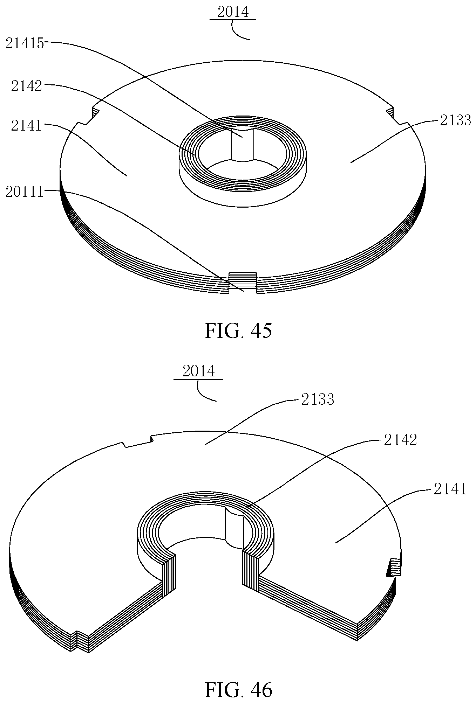

Certainly, in some other embodiments, as shown in FIG. 44 and FIG. 45, the stator yoke portion 2142 may alternatively be fastened to the stator tooth portion 2141 to form the stator magnetic core 2014. In other words, the stator magnetic core 2014 may alternatively be made by fastening a separate stator yoke portion 2142 and the stator tooth portion 2141.

In some embodiments, the stator yoke portion 2142 is connected to the stator tooth portion 2141, so that a relative location between the stator yoke portion 2142 and the stator tooth portion 2141 is stable, to ensure working performance of the stator magnetic core 2014.

In some embodiments, connection between the stator yoke portion 2142 and the stator tooth portion 2141 is reinforced through laser welding.

It will be noted that, the foregoing method of assembling the stator yoke portion 2142 and the stator tooth portion 2141 may enable the stator magnetic core 2014 to have advantages of separate lamination, a mature process, and the like, and the stator magnetic core 2014 is applicable to a complex iron core assembly 211 structure.

In other embodiments, as shown in FIG. 45 and FIG. 46, the stator yoke portion 2142 is axially inserted into and fastened in the axially laminated stator tooth portion 2141. In this way, the stator magnetic core 2014 can also be made by fastening a separate stator yoke portion 2142 and the stator tooth portion 2141.

In some embodiments, the stator yoke portion 2142 is inserted into the stator tooth portion 2141 and connection between the stator yoke portion 2142 and the stator tooth portion 2141 is reinforced through laser welding, so that specific assembly accuracy is ensured, and it is further ensured that the stator yoke portion 2142 and the stator tooth portion 2141 are securely connected.

In addition, the foregoing cooperation form greatly reduces an eddy current loss in the iron core assembly 211, and can further improve mounting accuracy, reduce impact on thrust and efficiency of the linear motor, and weaken thrust fluctuation.

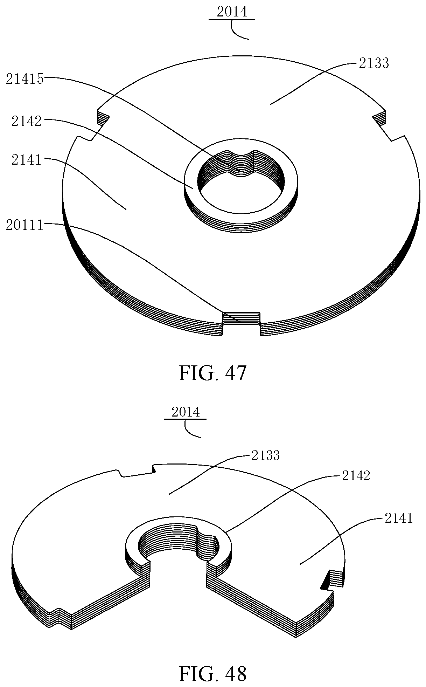

In some embodiments, as shown in FIG. 47 and FIG. 48, the stator yoke portion 2142 includes a plurality of stacked second laminations 21422, and the plurality of second laminations 21422 are stacked in the axial direction of the center rod 300. In other words, it is not limited to that the plurality of second laminations 21422 are stacked in the radial direction of the center rod 300. The plurality of second laminations 21422 may alternatively be set to be stacked in the axial direction of the center rod 300. Because an axial stamping and laminating process for the silicon steel sheet is well established, this technical solution has high process feasibility.

In conclusion, the stator magnetic core 2014 is made by fastening an axially laminated silicon steel sheet to an axially laminated silicon steel sheet.

In some embodiments, the stator yoke portion 2142 and the stator tooth portion 2141 are connected through laser welding.

In the foregoing cooperation configuration, the stator yoke portion 2142 and the stator tooth portion 2141 can be laminated separately, mounting accuracy in the axial direction is high, thrust and efficiency of the linear motor are not affected, and thrust fluctuation is weakened.

In some embodiments, as shown in FIG. 41 to FIG. 46, the stator yoke portion 2142 is a wound member, and the wound member is wound in the circumferential direction of the center rod 300. It will be noted that the wound member herein means that the stator yoke portion 2142 is formed by a whole silicon steel sheet helically wound around the axis, and a function of the wound member is equivalent to a function of weakening the eddy current loss in the stator tooth portion 2141 by the axially laminated silicon steel sheet. In other words, the wound member can greatly reduce an eddy current loss in the stator yoke portion 2142.

In some embodiments, as shown in FIG. 41 to FIG. 46, a first center hole 21412 is formed in the stator tooth portion 2141, and the stator yoke portion 2142 is located in the first center hole 21412, so that the stator yoke portion 2142 is disposed on the stator tooth portion 2141, and difficulty of cooperation between the stator tooth portion 2141 and the stator yoke portion 2142 is reduced.

In some embodiments, as shown in FIG. 41 to FIG. 46, a second center hole 21421 is formed in the stator yoke portion 2142, and both the first center hole 21412 and the second center hole 21421 are formed as mounting holes for the stator magnetic core 2014 and the center rod 300, to facilitate assembly of the stator magnetic core 2014 on the center rod 300, and implement cooperative connection between the stator magnetic core 2014 and the center rod 300.

In some embodiments, as shown in FIG. 41 to FIG. 48, a positioning protrusion 21415 cooperating with the center rod 300 is formed on least one of the stator yoke portion 2142 and the stator tooth portion 2141. In this way, in an assembly process, the stator yoke portion 2142 and the stator tooth portion 2141 can form an interference fit with the center rod 300, to ensure connection strength and relative location stability of the iron core assembly 211 and the center rod 300, so that circumferential rotation of the iron core assembly 211 on a structure of the center rod 300 in a moving process is avoided, assembly accuracy of the stator yoke portion 2142 and the center rod 300 is improved, the eddy current loss is significantly reduced, and impact on thrust and efficiency of the linear motor is reduced.

In some embodiments, as shown in FIG. 41 to FIG. 48, positioning protrusions 21415 cooperating with the center rod 300 are formed on the stator yoke portion 2142 and the stator tooth portion 2141, so that the stator yoke portion 2142 and the stator tooth portion 2141 can closely cooperate with the center rod 300.

In some embodiments, as shown in FIG. 41 to FIG. 48, a recess 20111 is formed in the stator tooth portion 2141, and is used for cross-phase connection between the coils 2123.

In addition, the positioning protrusions 21415 cooperating with the center rod 300 are formed on both the stator yoke portion 2142 and the stator tooth portion 2141, so that the recess 20111 can be aligned, to reduce wire lead-out difficulty of the coil 2123.

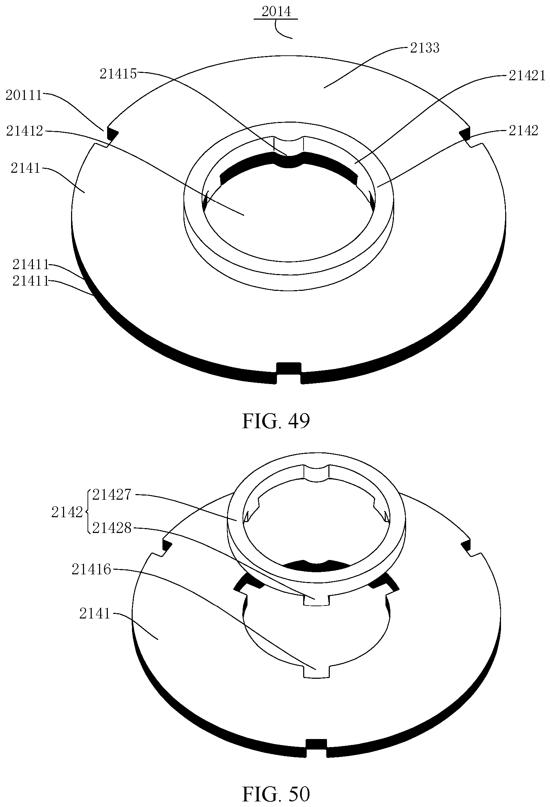

In some embodiments, as shown in FIG. 49 to FIG. 53, the stator yoke portion 2142 is formed as an integrated member. In other words, the stator yoke portion 2142 is not limited to being formed as a wound member, but may alternatively be formed as an integrated member to reduce difficulty in forming the stator yoke portion 2142.

In some embodiments, as shown in FIG. 49 to FIG. 53, the stator yoke portion 2142 includes a body 21427 and an insertion portion 21428, and the insertion portion 21428 is formed on one axial side of the body 21427 along the center rod 300, so that the stator yoke portion 2142 and the stator tooth portion 2141 are fastened by using the insertion portion 21428, and difficulty in connecting the stator yoke portion 2142 and the stator tooth portion 2141 is reduced.

In some embodiments, as shown in FIG. 49 to FIG. 53, the stator tooth portion 2141 is made of the axially laminated silicon steel sheet, the stator yoke portion 2142 is machined from a solid material, and a material of the stator yoke portion 2142 is a soft magnetic material. The positioning protrusions 21415 cooperating with the center rod 300 are formed on both the stator yoke portion 2142 and the stator tooth portion 2141, and the recess 20111 is formed in the stator tooth portion 2141 for cross-phase connection between the coils 2123.

In some embodiments, as shown in FIG. 49, FIG. 50, and FIG. 51, the insertion portion 21428 is formed as a boss on the body 21427, a first connection structure 21416 is formed on the stator tooth portion 2141, and the first connection structure 21416 may be formed as a dovetail slot. The boss is inserted into the dovetail slot and fastened to the stator tooth portion 2141, and connection strength between the stator yoke portion 2142 and the tooth yoke of the stator tooth portion 2141 is enhanced through laser welding, so that the stator yoke portion 2142 and the stator tooth portion 2141 are fastened.

In addition, through the foregoing structure, the stator tooth portion 2141 can further greatly reduce the eddy current loss in the iron core assembly 211, and thrust and efficiency of the linear motor are also ensured.

In some embodiments, first connection structures 21416 formed as dovetail slots are stamped by using the same trapezoidal punch, so that the slot of the first connection structure 21416 is wider as the slot is closer to an outer edge of the stator tooth portion 2141. In this way, when the insertion portion 21428 is inserted into the first connection structure 21416, because a notch width of the dovetail slot is less than a bottom width of the dovetail slot, it can be ensured that the insertion portion 21428 cannot slide off in the first connection structure 21416, so that fastening strength between the stator yoke portion 2142 and the stator tooth portion 2141 is enhanced.

In some embodiments, corner rounding is performed on opposite ends of a bottom of the dovetail slot toward the inside that is away from the dovetail slot. The rounding is formed by a punch with a rounded corner. Use of the punch with the rounded corner can prolong service life of the punch. In addition, a rounded corner is provided in the dovetail slot, so that interference between the insertion portion 21428 and the first connection structure 21416 in an assembly process can be further avoided, to permit that the insertion portion 21428 can be normally inserted into the first connection structure 21416 in the axial direction, and fastening between the stator yoke portion 2142 and the stator tooth portion 2141 can be completed.

In addition, when the insertion portion 21428 is inserted into the first connection structure 21416, because rounded corners are formed on a side surface of the insertion portion 21428 and a bottom end surface of the body 21427, the bottom end surface of the body 21427 cannot fit with an end surface of the stator tooth portion 2141. Therefore, in this embodiment, an inclined plane inclined toward a center line of the insertion portion 2142 is formed between the bottom end surface of the body 21427 and the side surface of the insertion portion 21428, so that when there are rounded corners on the side surface of the insertion portion 21428 and the bottom end surface of the body 21427, fitting between the stator yoke portion 2142 and the stator tooth portion 2141 can be permitted, to ensure reliability of the structure.

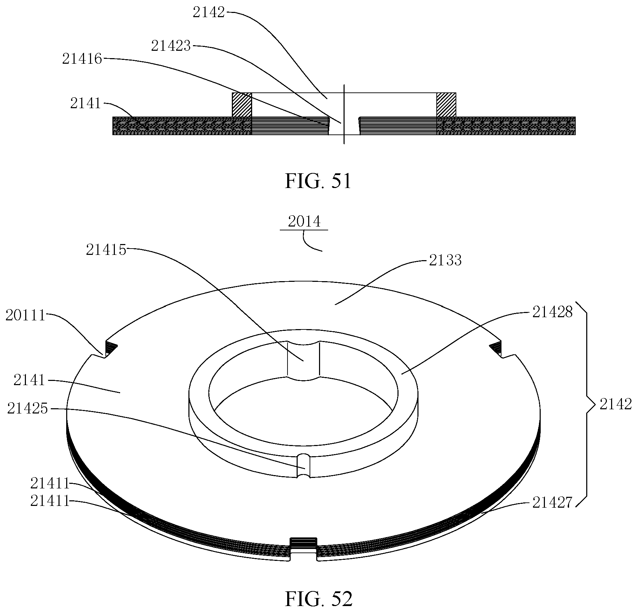

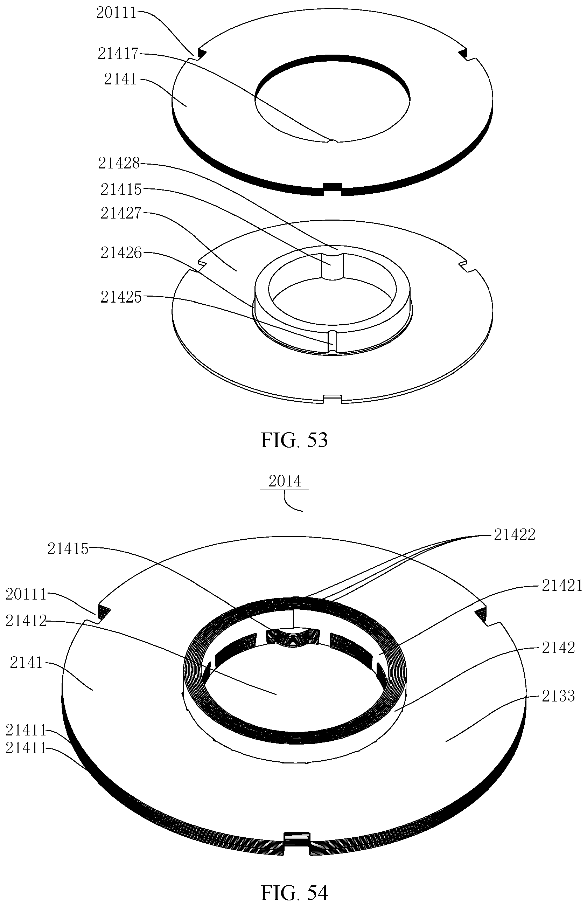

In some embodiments, as shown in FIG. 52 and FIG. 53, the stator yoke portion 2142 includes the body 21427 and the insertion portion 21428, and the body 21427 is disposed on an axial side of the plurality of first laminations 21411. A planar dimension of the body 21427 is equal to inner and outer diameters of the first lamination 21411, and the insertion portion 21428 is in insertion cooperation with the first center hole 21412. In this way, the stator yoke portion 2142 and the stator tooth portion 2141 can also be fastened.

Optionally, as shown in FIG. 52 and FIG. 53, a second anti-rotation protrusion 21417 is provided on the stator tooth portion 2141, an anti-rotation recess 21425 is provided in the stator yoke portion 2142, and the second anti-rotation protrusion 21417 cooperates in anti-rotation recess 21425, to implement fastening cooperation between the stator tooth portion 2141 and the stator yoke portion 2142, prevent rotation of the stator tooth portion 2141, permit alignment of the recesses 20111, and reduce wire lead-out difficulty of the coil 2123.

In some embodiments, after the stator yoke portion 2142 and the stator tooth portion 2141 are cooperatively connected through the second anti-rotation protrusion 21417 and the anti-rotation recess 21425, connection strength between the stator yoke portion 2142 and the stator tooth portion 2141 is enhanced through laser welding.

In some embodiments, as shown in FIG. 52 and FIG. 53, a first boss structure 21426 is provided at a joint between the body 21427 and the insertion portion 21428, so that the joint between the body 21427 and the insertion portion 21428 is prevented from being broken, and mechanical strength of the joint can be further enhanced.

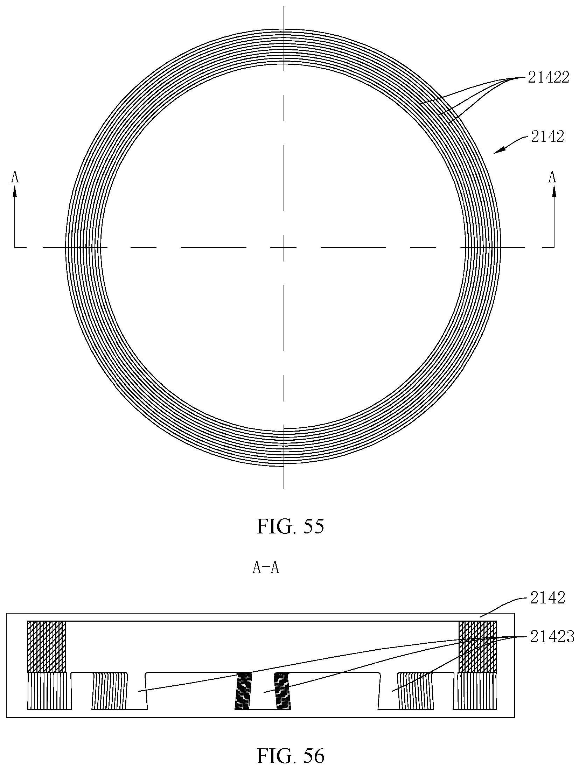

In some embodiments, as shown in FIG. 54 to FIG. 58, the first connection structure 21416 and the second connection structure 21423 are respectively formed on the stator yoke portion 2142 and the stator tooth portion 2141, and the first connection structure 21416 cooperates with the second connection structure 21423, to implement cooperative connection between the stator yoke portion 2142 and the stator tooth portion 2141.

In some embodiments, as shown in FIG. 54 to FIG. 58, the first connection structure 21416 and the second connection structure 21423 are in insertion cooperation, to implement insertion cooperation between the stator yoke portion 2142 and the stator tooth portion 2141, reduce difficulty in fastening the stator yoke portion 2142 and the stator tooth portion 2141, and ensure fastening quality, so that the relative location between the stator yoke portion 2142 and the stator tooth portion 2141 is stable.

In some embodiments, as shown in FIG. 54 to FIG. 58, a plurality of second connection structures 21423 are provided in a lower portion of the stator yoke portion 2142, the second connection structures 21423 are formed as column structures, and a thickness of a column is equal to a thickness of the stator tooth portion 2141. The stator tooth portion 2141 is provided with a plurality of first connection structures 21416 cooperating with the column structure, the first connection structure 21416 is formed as a dovetail slot, and the column structure is inserted into a dovetail slot in a corresponding location of the stator tooth portion 2141, so that the stator yoke portion 2142 and the stator tooth portion 2141 are fastened.

It will be noted that because the coil 2123 surrounds the stator yoke portion 2142 and is coiled around the stator tooth portion 2141, when the electromagnetic actuator 1000 operates, a magnetic line of force mainly moves in a radial direction of the stator tooth portion 2141 and an axial direction of the stator yoke portion 2142, where the stator tooth portion 2141 can greatly weaken the eddy current loss generated in the tooth portion by using the axially laminated silicon steel sheet, and the stator yoke portion 2142 weakens the eddy current loss in the stator yoke portion 2142 by using a circumferentially wound silicon steel sheet.

In some embodiments, the stator yoke portion 2142 is formed by a process of stamping followed by winding, where the columns are stamped with the same punch. The punch is trapezoidal, because if a square punch is used, a joint between the column structure and the stator yoke portion 2142 may form assembly interference with a local region of the stator tooth portion 2141; and if a rounded corner is not designed, service life of the punch may be greatly shortened, which leads to cost increase.

Therefore, in this embodiment, the same trapezoidal punch with the rounded corner is used to process the second connection structures 21423, so that process costs can be reduced and a process assembly requirement can be met.

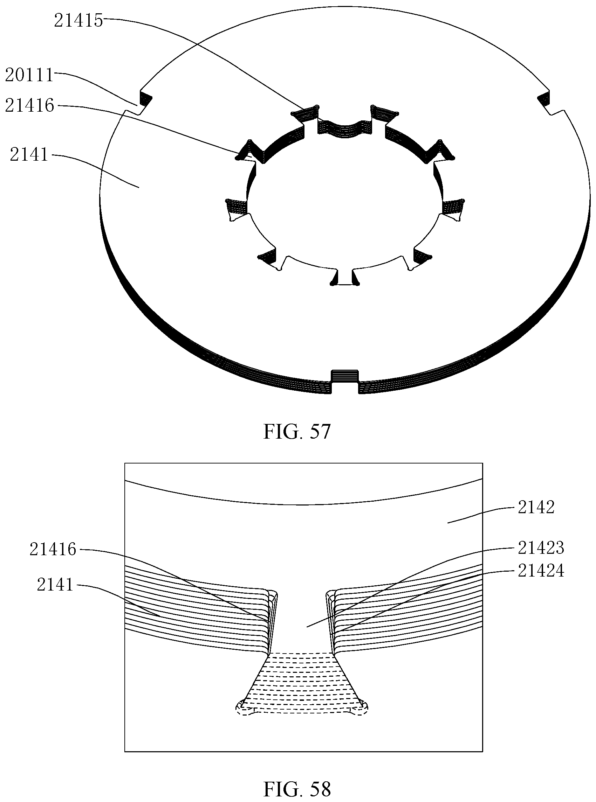

In addition, when the second connection structure 21423 cooperates with the first connection structure 21416, and the second connection structure 21423 is inserted into the dovetail slot of the stator tooth portion 214, because rounded corners are formed on a side surface of the second connection structure 21423 and a bottom end surface of the stator yoke portion 2142, there is a risk that the bottom end surface of the stator yoke portion 2142 cannot fit with the end surface of the stator tooth portion 2141. The trapezoidal punch is used, so that an inclined surface 21424 (as shown in FIG. 58) inclined toward a center line of the second connection structure 21423 can be formed on the bottom end surface of the stator yoke portion 2142 and the side surface of the second connection structure 21423. In this way, when there are rounded corners on the second connection structure 21423 and the bottom end surface of the stator yoke portion 2142, it can be ensured that the stator yoke portion 2142 can fit with the stator tooth portion 2141, to ensure reliability of the structure.

It will be further noted that, because the second connection structure 21423 is stamped by using the same punch, a width of the second connection structure 21423 that completes winding may vary in the radial direction, where the width of the second connection structure 21423 is larger as it is closer to a radial outer edge of the stator yoke portion 2142, so that the stator yoke portion 2142 has a trapezoidal dovetail shape.

In some embodiments, as shown in FIG. 57, the plurality of first connection structures 21416 formed as dovetail slots are formed at fixed locations of the stator tooth portion 2141 through stamping. When the second connection structure 21423 is inserted into the first connection structure 21416, because the notch width of the dovetail slot is less than the bottom width of the dovetail slot, it can be ensured that the second connection structure 21423 cannot slide off in the first connection structure 21416, so that fastening strength between the stator yoke portion 2142 and the stator tooth portion 2141 is enhanced.

In some embodiments, as shown in FIG. 57, a rounded corner is provided at a slot inner corner of the first connection structure 21416. If a structure cooperating with the rounded corner is provided on the second connection structure 21423, interference between the stator yoke portion 2142 and the stator tooth portion 2141 during mounting is avoided, to ensure that the second connection structure 21423 of the stator yoke portion 2142 can be normally inserted into the first connection structure 21416 of the stator tooth portion 2141, and fastening between the stator yoke portion 2142 and the stator tooth portion 2141 can be completed.

In conclusion, the stator yoke portion 2142 and the stator tooth portion 2141 in this embodiment are designed in combination with the column structure of the second connection structure 21423 and a dovetail slot structure of the first connection structure 21416, so that the helically wound stator yoke portion 2142 can have mechanical connection to the axially laminated stator tooth portion 2141. In addition, connection strength between the stator yoke portion 2142 and the stator tooth portion 2141 is enhanced through laser welding.

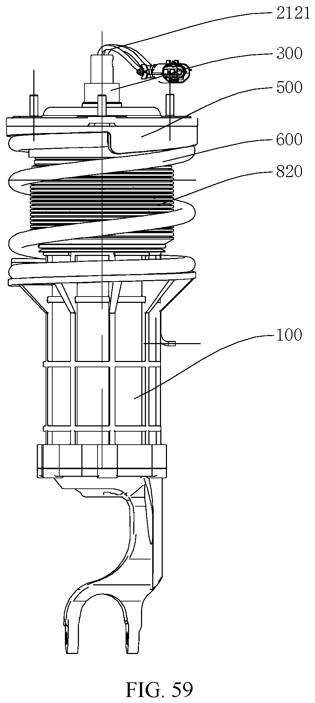

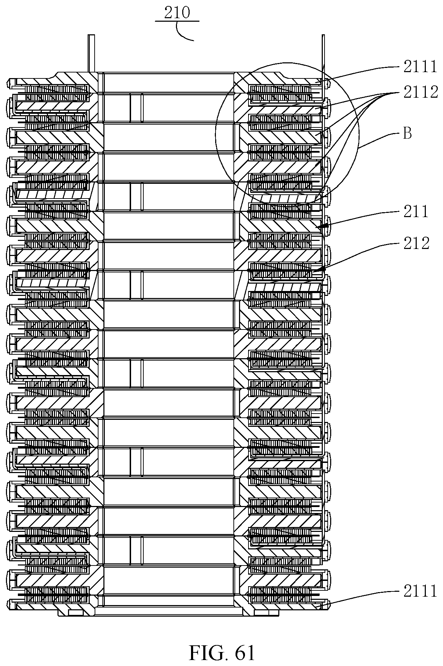

In some embodiments, as shown in FIG. 59 to FIG. 66, the iron core assembly 211 includes first-type iron cores 2111 and second-type iron cores 2112. In the axial direction of the center rod 300, there are a plurality of second-type iron cores 2112, and both ends of each of the plurality of second-type iron cores 2112 are provided with first-type iron cores 2111. An end surface of the first-type iron core 2111 that faces the second-type iron core 2112 is provided with a coil 2123. End surfaces on both sides of the second-type iron core 2112 are provided with coils 2123, and the coils 2123 located on both sides of the second-type iron core 2112 have the same quantity of phases. In this way, cooperative connection between the iron core assembly 211 and the winding assembly 212 is implemented, and difficulty in connecting coils 2123 of each phase is reduced.

In some embodiments, the coils 2123 at both ends of each second-type iron core 2112 are connected in series, and coils 2123 that are of the same phase and that are spaced apart in the axial direction of the center rod 300 are connected through welding by using the connection wire 2121, to implement welding connection between the coils 2123 of the same phase, and ensure performance of the winding assembly 212.

In some embodiments, as shown in FIG. 59 to FIG. 66, in this embodiment, through an ingenious design, the iron core assembly 211 is set to include the first-type iron core 2111 and the second-type iron core 2112, and coils 2123 on the same second-type iron core 2112 are coils of the same phase. The coils 2123 on the same second-type iron core 2112 are connected through welding, which comprehensively surpasses the conventional design in terms of arrangement space, production efficiency, processing difficulty, repair convenience, structural complexity, member consistency, and the like.

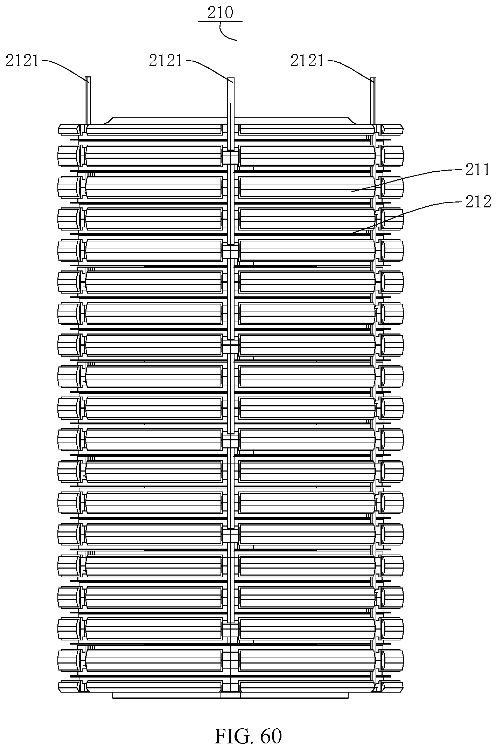

As shown in FIG. 60, FIG. 61, and FIG. 62, the second component 210 in this embodiment includes the connection wires 2121, the iron core assemblies 211, insulating frameworks 213, the coils 2123, insulating paper 2122, and the like. The connection wires 2121 include the three phases A, B, and C. The coil is a flat wire, to increase space utilization. The connection wire 2121 is bent and led out at a cut-off point of the coil 2123 through the recess 20111 on the surface of the iron core assembly 211 and a wire passing slot 2132 on a surface of the insulating framework 213. The first-type iron core 2111 is provided with the coil 2123 on one side.

Optionally, the second-type iron core 2112, the insulating framework 213, and the coil 2123 are assembled to form a middle portion of the second component 210 in the axial direction, and the first-type iron core 2111, the coil 2123, and the insulating framework 213 are assembled to form an end portion of the second component 210. The coil 2123 on the first-type iron core 2111 is an A-phase coil 2123.

In a specific example, a composition sequence on the second component 210 from a start end portion is the A-phase coil 2123, a B-phase coil 2123, and a C-phase coil 2123, two adjacent coils 2123 of different phases are separated by the insulating paper 2122, and coils 2123 of the same phase are connected in series. Coils on both sides inside the second component 210 are also connected in series. When the coils 2123 are connected, a lead-out wire of the coil 2123 is welded with the connection wire 2121 bent at the cut-off point of the coil 2123, to implement line connection and reduce wiring errors.

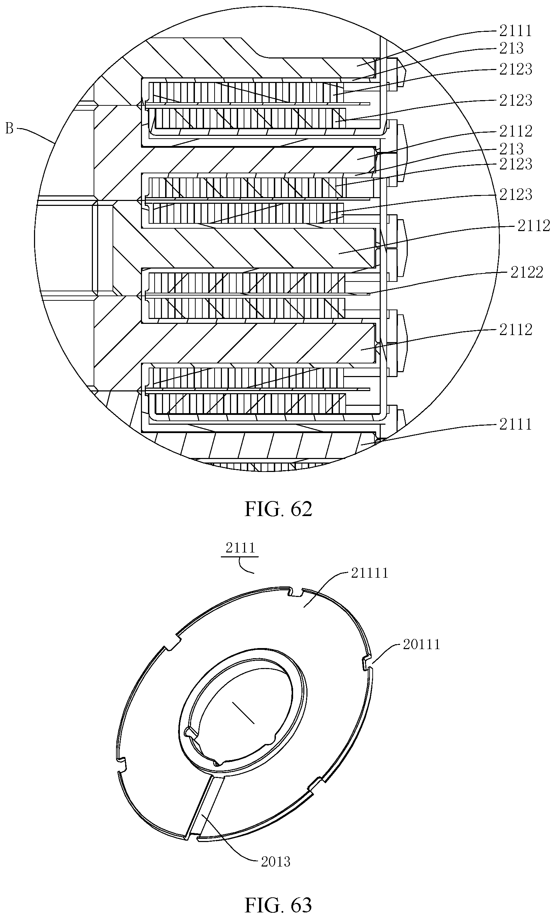

In some embodiments, as shown in FIG. 63, FIG. 64, and FIG. 65, the first-type iron core 2111 is provided with a first annular slot 21111, a wire arrangement slot 2013, and a recess 20111, and a structure of the insulating framework 213 is similar to a structure of the first-type iron core 2111. The insulating framework 213 is provided with a second annular slot 2138, a lead wire channel 2131, and the wire passing slot 2132. The insulating framework 213 is nested in the first annular slot 21111. A lead-out wire 21231 and the first lead-out wire end 2018 are formed on the coil 2123. When the coil 2123 is processed, the lead-out wire 21231 is bent at a right angle, is wound outward from the inside, and is bent twice at the cut-off point of the coil 2123 to form the first lead-out wire end 2018. During assembly, the coil 2123 is nested in the first annular slot 21111, and the lead-out wire 21231 extends to an outer side of the first-type iron core 2111 through the wire arrangement slot 2013 and the lead wire channel 2131 for wiring and connection to a power supply. This method has a simple structure, good consistency of a processing method, a simple processing process, few operation steps, and large operation space, and is conducive to reducing costs and improving production efficiency.

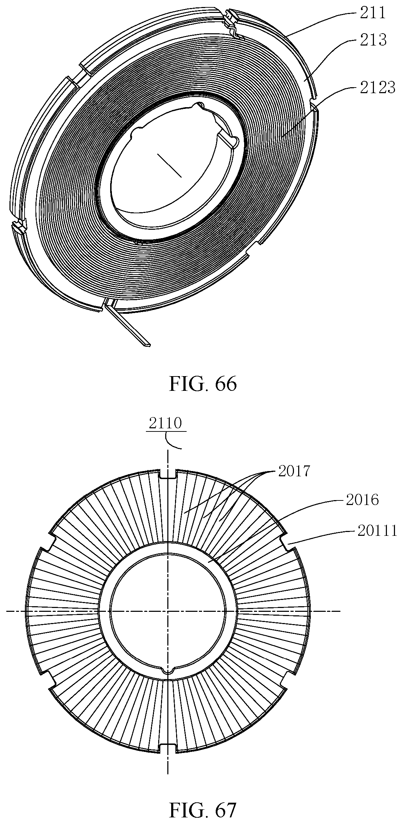

In some embodiments, as shown in FIG. 66, the second-type iron core 2112 is also provided with the insulating framework 213 and the coils 2123, and both sides of the second-type iron core 2112 have first annular slots 21111, wire arrangement slots 2013, and recesses 20111. The insulating framework 213 is nested in the first annular slot 21111, and the coils 2123 of the same phase are nested in the insulating framework 213. The two wire arrangement slots 2013 are spaced 180° apart. A coil 2123 on one side is connected in series with a first lead-out wire end 2018 of a coil 2123 on the other side at a welding point through a first lead-out wire end 2018, so that member structures are the same, the structure is simple, and production and processing efficiency is high, which facilitates mass production and cost control.

In addition, the end surfaces on both sides of the second-type iron core 2112 are provided with the coils 2123, to have high space utilization.

In some embodiments, based on different opening directions of lead wire channels 2131 of the insulating frameworks 213, there are two bending configurations of the lead wire of the coil 2123. For example, the lead-out wire 21231 is bent and led out from an upper portion of the coil 2123, or the lead-out wire 21231 is bent and led out from a lower portion of the coil 2123, where the coil 2123 has the same winding configuration and is wound outward from the inside. The winding configuration is simple.

In some embodiments, connection between the coils 2123 of the same phase is also series connection, and connection points are still welded. This offers good operability and a simple process, and facilitates production and processing. In addition, a welding point is located externally, which makes assembly and welding more intuitive, and helps avoid wiring errors and improve production efficiency. Moreover, this configuration provides large operation space, facilitates operation, and reduces man-hours.

In conclusion, the iron core assembly 211 in this embodiment is formed by stacking independent modules one by one, and the module units are separated by the insulating paper 2122. Basic components of each module are an iron core, the insulating framework 213, and the coil 2123. Each member has a simple processing process, a substantially same structure, and low structural complexity, and is convenient to assemble, which facilitates mass production and processing, reduces costs and man-hours, and improves production efficiency.

In some embodiments, as shown in FIG. 67 to FIG. 71, the iron core assembly 211 in this embodiment is mainly used in a linear motor assembly of an electromagnetic suspension. The iron core assembly 211 belongs to the stator component, provides support for the coil 2123, the insulating framework 213, and the like, provides a path for a magnetic field generated by the winding assembly 212, and withstands an interaction force generated between the magnetic field and dynamic magnetic steel. A plurality of iron core assemblies 211 and winding assemblies 212 are stacked and fastened in the axial direction to form the second component 210.

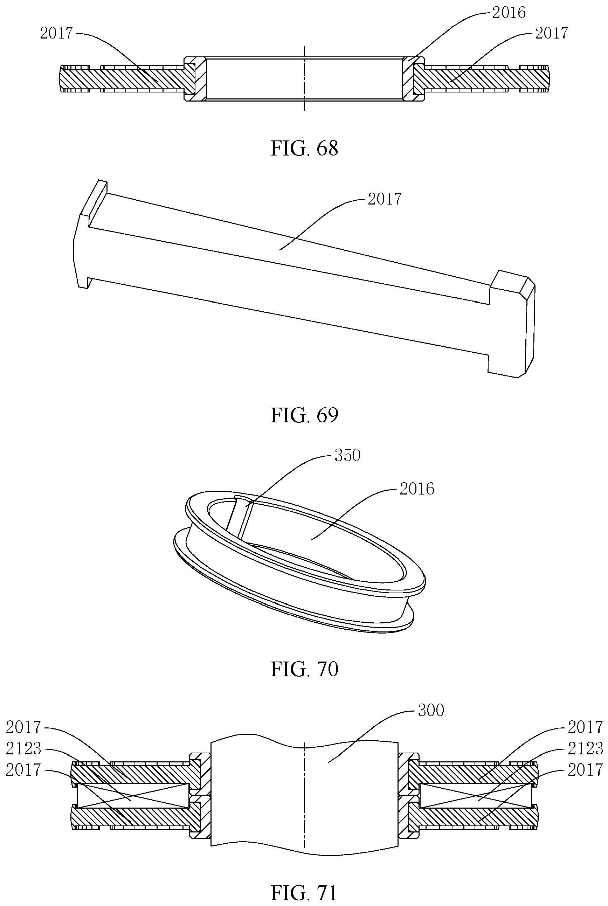

In some embodiments, as shown in FIG. 67 and FIG. 68, the iron core assembly 211 includes a third-type iron core 2110, the third-type iron core 2110 includes a support frame 2016 and a support iron core 2017, and a plurality of support iron cores 2017 are assembled and stacked in the circumferential direction to form a circular ring-shaped iron core. The circular ring-shaped iron core and the support frame 2016 form the laminated third-type iron core 2110.

In some embodiments, as shown in FIG. 68, FIG. 69, and FIG. 70, a convex structure is provided on an inner end of the support iron core 2017, and a support recess is provided on an outer cylindrical surface of the support frame 2016. The support recess cooperates with the convex structure of the support iron core 2017, to limit and support a root of the support iron core 2017, and ensure structural stability of the third-type iron core 2110.

It will be noted that, as shown in FIG. 71, because the coil 2123 and the support iron core 2017 are stacked in the axial direction, the support frame 2016 is further configured to withstand weight of the support iron core 2017, the coil 2123, and the like. The support recess is provided on the outer cylindrical surface of the support frame 2016, so that the weight is not directly withstood by the third-type iron core 2110, to improve reliability of the third-type iron core 2110.

In some embodiments, the support frame 2016 may be designed as an integral structure, or may be designed as a structure with an upper portion and a lower portion split and further connected through a fastener or the like.

In a specific example, the support frame 2016 adopts an integral design solution, to reduce difficulty in forming the support frame 2016 and improve structural strength of the support frame 2016.

In some embodiments, as shown in FIG. 67, a recess 20111 may be provided at an outer end of the support iron core 2017 according to a requirement, to be used for connection between different coils 2123.

A location of the recess 20111, a shape of the recess 20111, and a quantity of recesses 20111 may be adjusted according to a requirement. It is recommended that shapes of recesses 20111 of the same third-type iron core 2110 be unified, so that specifications of the support iron core 2017 can be reduced.

In some embodiments, as shown in FIG. 69, the support iron core 2017 is fan-shaped with a thin inner side and a thick outer side. In addition, a thickness of the support iron core 2017 needs to be as thin as possible on a premise that the support iron core 2017 meets requirements on a process, use, and the like. In addition, a shape of a piece of support iron core 2017 may be adjusted according to a requirement, for example, be provided with the recess 20111, but a cooperation relationship between the support iron cores 2017 in a circumferential shape and a requirement such as a shape of the third-type iron core 2110 need to be satisfied. In addition, the specifications of the support iron core 2017 need to be reduced as far as possible, to facilitate production and assembly.

In some embodiments, a magnetically conductive material is selected for the support iron core 2017, where a material with high resistivity is selected as far as possible. An insulating material is disposed on left and right side surfaces in a circumferential lamination direction. For example, insulating paint is coated. In addition, an adhesive substance needs to be further coated. Different support iron cores 2017 are reliably connected through the adhesive substance. A thickness of a coating material needs to be as thin as possible while meeting a requirement, to reduce space occupation and avoid excessive reduction of magnetic permeability of the third-type iron core 2110.

In some embodiments, if the adhesive substance meets an insulation requirement, an insulating material may not need to be coated.

In some embodiments, as shown in FIG. 70, the support frame 2016 is annular. A magnetically conductive material is selected for the support frame, where a material with high resistivity is selected as far as possible. A thickness of the support frame 2016 needs to be as thin as possible on a premise that requirements on a process, use, and the like are met.

In some embodiments, as shown in FIG. 70, a second positioning portion 350 is provided on an inner cylindrical surface of the support frame 2016, and a first positioning portion 340 is provided on the center rod 300 (for a specific structure of the first positioning portion 340, refer to FIG. 25). The first positioning portion 340 cooperates with the second positioning portion 350 so that the center rod 300 and the support frame 2016 are relatively stationary, to implement circumferential limiting of the third-type iron core 2110 and the center rod 300, prevent the third-type iron core 2110 from rotating around the center rod 300, and ensure working performance of the third-type iron core 2110.

In some embodiments, the first positioning portion 340 is formed as a recess provided in an outer peripheral wall of the center rod 300, the second positioning portion 350 is a positioning slot, and the anti-rotation rod 360 is disposed between the first positioning portion 340 and the second positioning portion 350, to limit locations of the center rod 300 and the support frame 2016, so that the center rod 300 and the support frame 2016 are relatively stationary, and difficulty in limiting the center rod 300 and the support frame 2016 is reduced.

Optionally, a shape of the second positioning portion and a quantity of second positioning portions 350 may be set according to a requirement.

In some embodiments, as shown in FIG. 71, third-type iron cores 2110 are stacked and mounted in the axial direction of the stator center rod, and a coil 2123 is disposed between the third-type iron cores 2110. After the electromagnetic actuator 1000 is powered on, the coil 2123 is energized to generate a magnetic field. If a current changes, the magnetic field also changes, and the change causes an induced current, namely, an eddy current, to be generated inside the third-type iron core 2110. The eddy current causes a heat loss and reduces working efficiency of the electromagnetic actuator 1000. The third-type iron core 2110 is set to be divided into a plurality of support iron cores 2017 in the circumferential direction and have an insulation design between the support iron cores 2017, so that a previously long eddy current circuit can be broken to be located only in a narrow circuit of each support iron core 2017. Through a small cross section, resistance on an eddy current path is increased, and the eddy current is reduced, to reduce an eddy current loss. In addition, the material with high resistivity is also selected to increase resistance on the eddy current path.

In some embodiments, because the support frame 2 is circumferentially continuous in structure, the eddy current loss is generated. Therefore, the thickness of the support frame 2 needs to be as thin as possible.

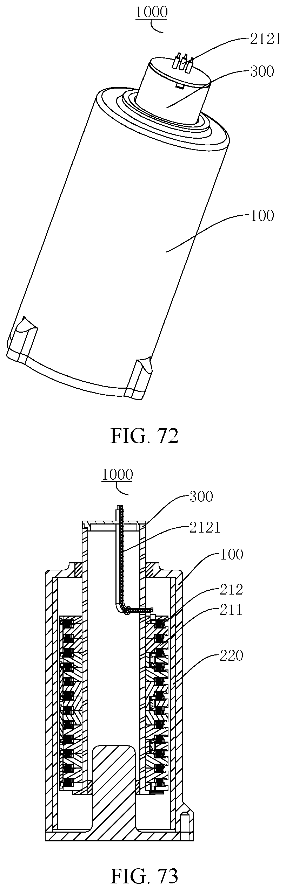

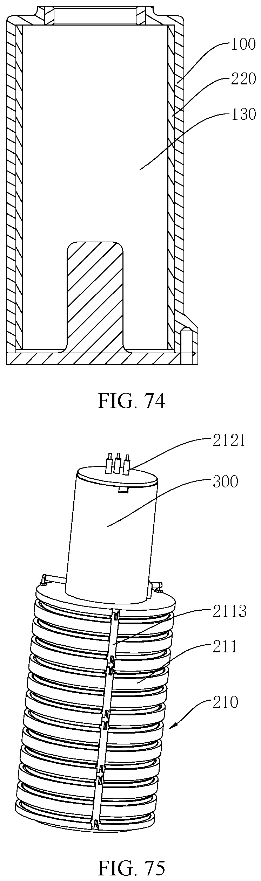

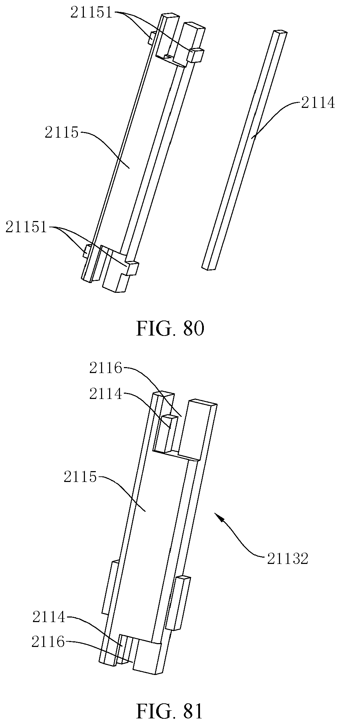

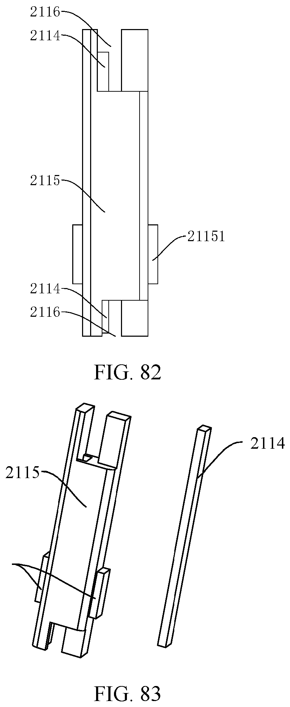

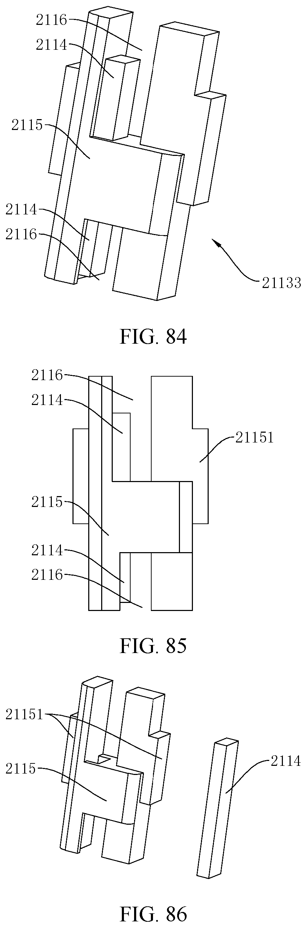

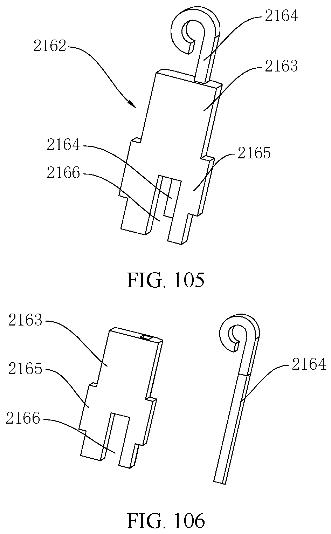

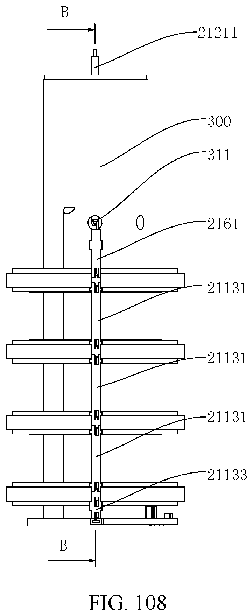

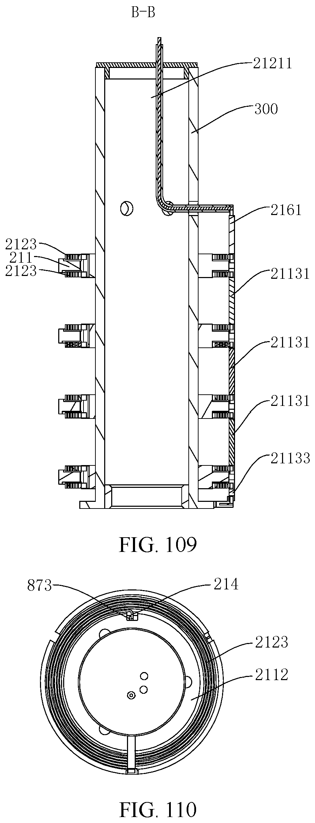

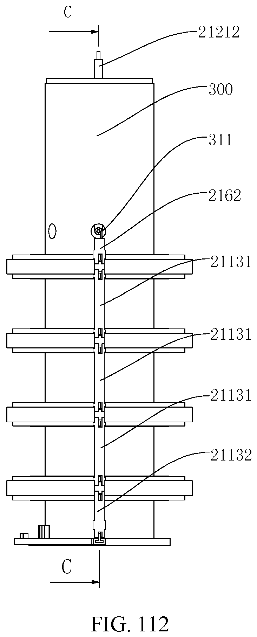

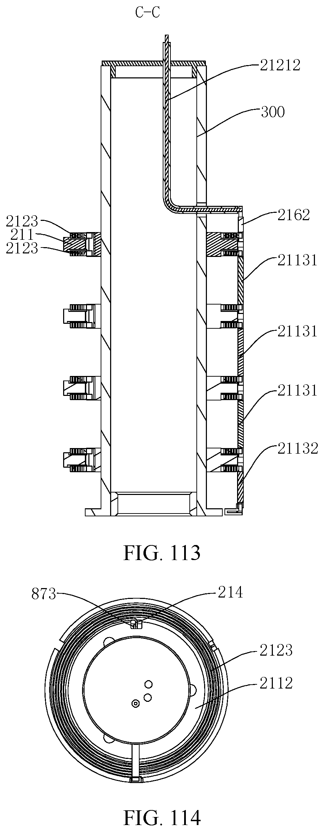

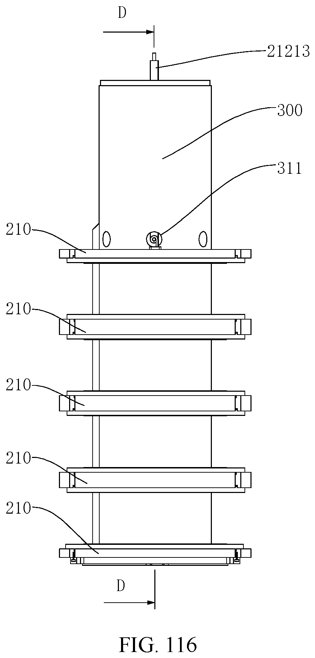

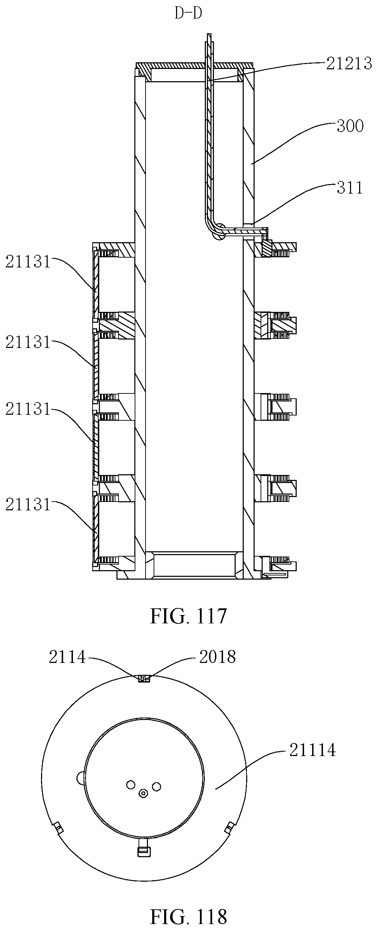

In some embodiments, as shown in FIG. 72 to FIG. 118, the electromagnetic actuator 1000 further includes a wiring component 2113, and the coils 2123 that are of the same phase and that are spaced apart in the axial direction of the center rod 300 are electrically connected through the wiring component 2113, so that the coils 2123 of the same phase are electrically connected, and difficulty in electrically connecting the coils 2123 of the same phase is reduced.

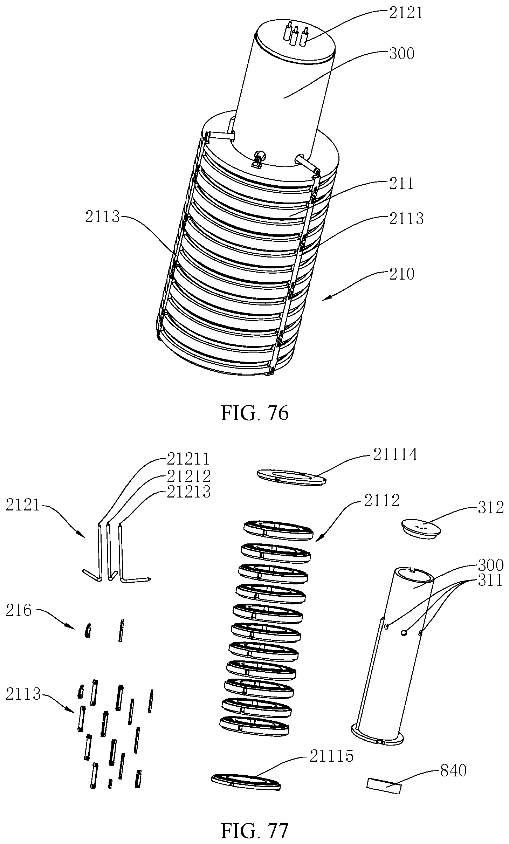

In some embodiments, as shown in FIG. 77 to FIG. 86, the wiring component 2113 includes a conductive member 2114 and an insulating layer 2115. The insulating layer 2115 wraps the conductive member 2114, and limiting members 2116 configured to position and electrically connect to the coil 2123 are disposed at both ends of the conductive member 2114. In other words, the limiting member 2116 is configured to position the coil 2123 and electrically connect to the coil 2123, so that the coils 2123 of the same phase are electrically connected, and location stability of the coil 2123 is ensured.

In addition, the insulating layer 2115 is set to wrap the conductive member 2114, so that service life of the conductive member 2114 is prolonged and use safety of the conductive member 2114 can be improved.

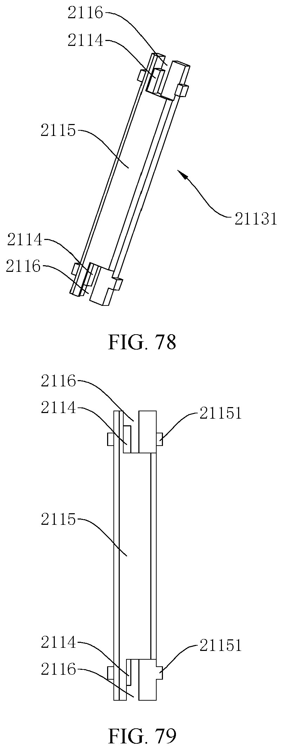

In some embodiments, as shown in FIG. 78 to FIG. 86, the limiting member 2116 is formed as a wire clamping recess provided around the conductive member 2114, to facilitate use of the limiting member 2116 to position the coil 2123 and electrically connect to the coil 2123, so that the coils 2123 of the same phase are electrically connected, and difficulty in electrically connecting the coils 2123 of the same phase is reduced.

It will be noted that a main innovation point in this embodiment is a winding wiring configuration applied to the electromagnetic actuator 1000. The winding wiring configuration is novel, concise, efficient, and reliable.

As shown in FIG. 72 to FIG. 77, the electromagnetic actuator 1000 in this embodiment includes the mover component and the stator component. The mover component and the stator component may perform linear movement relatively. The stator component includes members such as the center rod 300, the guide bearing 840, a sealing cover 312, a first iron core unit 21114, the plurality of second-type iron cores 2112, a second iron core unit 21115, the wiring component 2113, a wire lead-out component 216, the connection wires 2121, and the like. The first iron core unit 21114, the plurality of second-type iron cores 2112, the second iron core unit 21115, and the like are all sleeved on an outer side of the center rod 300. The guide bearing 840 is assembled inside the center rod 300. The sealing cover 312 is assembled at the top of the center rod 300 to play a limiting role and a sealing role.

In some embodiments, as shown in FIG. 77, the connection wires 2121 include a first-phase lead wire 21211, a second-phase lead wire 21212, and a third-phase lead wire 21213, and there are three wire lead-out ports 311 on the upper portion of the center rod 300. The first-phase lead wire 21211, the second-phase lead wire 21212, and the third-phase lead wire 21213 respectively pass through the three wire lead-out ports 311, to facilitate connection between the connection wires 2121 and the coil 2123.

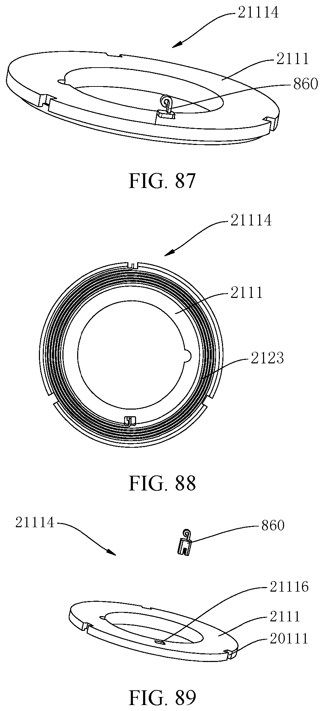

In some embodiments, as shown in FIG. 87 to FIG. 92, the first iron core unit 21114 includes a first-type iron core 2111, a coil 2123, and an inner wire lead-out apparatus 860. The coil 2123 is sleeved on the first-type iron core 2111. The coil 2123 is in a multi-layer annular shape formed by winding a conducting wire. A connector on a radially outer side is bent outward in an annular winding direction to form a first lead-out wire end 2018, and a connector on a radially inner side is bent inward in the annular winding direction to form a second lead-out wire end 214. The inner wire lead-out apparatus 860 is nested in the first-type iron core 2111 and is connected to the second lead-out wire end 214 of the coil 2123, to facilitate same-phase electrical connection.

In some embodiments, as shown in FIG. 89, a first internal mounting hole 21116 for assembling the inner wire lead-out apparatus 860 is provided in the first-type iron core 2111, so that the inner wire lead-out apparatus 860 is nested in the first-type iron core 2111.

In some embodiments, an outer layer of the coil 2123 is provided with insulating enamel to protect the coil 2123.

It will be noted that, because a bending direction of the first lead-out wire end 2018 and the second lead-out wire end 214 is the same as a winding direction of the coil 2123, and the bending is smooth and does not cause any damage to other features of the coil 2123, enamel of the first lead-out wire end 2018 and the second lead-out wire end 214 may be stripped to facilitate connection between the inner wire lead-out apparatus 860 and the second lead-out wire end 214.

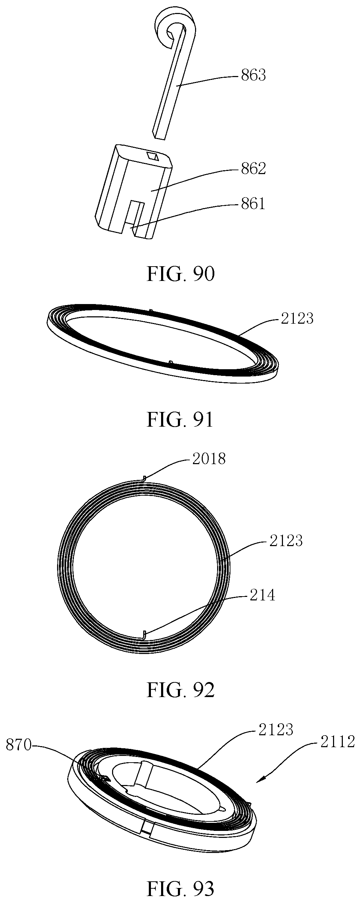

In some embodiments, as shown in FIG. 89 and FIG. 90, the inner wire lead-out apparatus 860 includes a first insulating member 862 and a first conducting wire 863, and a first assembly member 861 is disposed between the first insulating member 862 and a bottom of the first conducting wire 863. In the first iron core unit 21114, the second lead-out wire end 214 of the coil 2123 is clamped in the first assembly member 861 of the inner wire lead-out apparatus 860 and is connected to the first conducting wire 863, and a top of the first conducting wire 863 is connected to the third-phase lead wire 21213, so that the coil 2123 and the third-phase lead wire 21213 are connected, and difficulty in connecting the coil 2123 and the third-phase lead wire 21213 is reduced.

In some embodiments, as shown in FIG. 89, a plurality of recesses 20111 are provided on an outer side of the first-type iron core 2111, and the first lead-out wire end 2018 of the coil 2123 is located in one of the recesses 20111, to reduce connection difficulty of the first lead-out wire end 2018.

In some embodiments, as shown in FIG. 93, FIG. 94, and FIG. 95, the second-type iron core 2112 includes the second-type iron core 2112, two coils 2123, and an inner wiring apparatus 870. The two coils 2123 are respectively sleeved on two sides of the second-type iron core 2112. The inner wiring apparatus 870 is nested in the second-type iron core 2112 to implement electrical connection between the inner wiring apparatus 870 and the coils 2123.

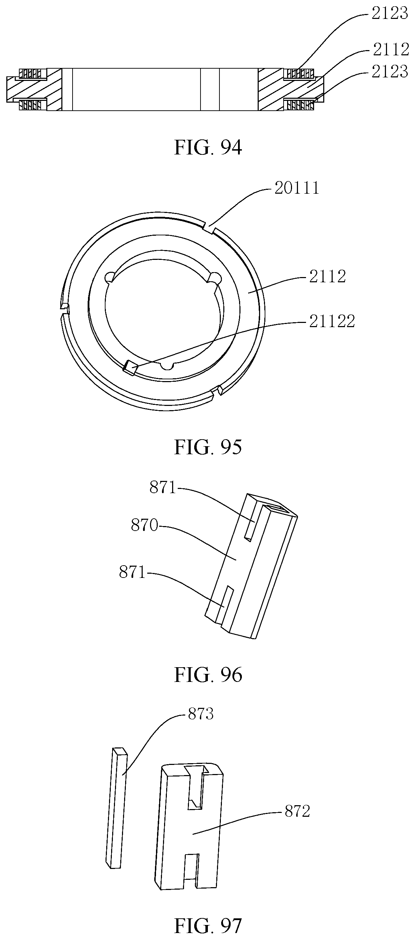

In some embodiments, as shown in FIG. 95, a second internal mounting hole 21122 for assembling the inner wiring apparatus 870 is provided in the second-type iron core 2112, so that the inner wiring apparatus 870 is nested in the second-type iron core 2112.

In some embodiments, as shown in FIG. 96 and FIG. 97, the inner wiring apparatus 870 includes a second insulating member 872 and a second conducting wire 873, and two second assembly members 871 are formed between the second insulating member 872 and a bottom of the second conducting wire 873. In the second-type iron core 2112, second lead-out wire ends 214 of upper and lower coils 2123 are respectively clamped in the two second assembly members 871 of the inner wiring apparatus 870 and are connected to the second conducting wire 873, so that the two coils 2123 on the same second-type iron core 2112 can be electrically connected through the inner wiring apparatus 870, to form a conductive path.

In some embodiments, as shown in FIG. 95, a plurality of recesses 20111 are provided on an outer side of the second-type iron core 2112, and the first lead-out wire ends 2018 of the two coils 2123 are both located in one of the recesses 20111, to reduce connection difficulty of the first lead-out wire ends 2018.

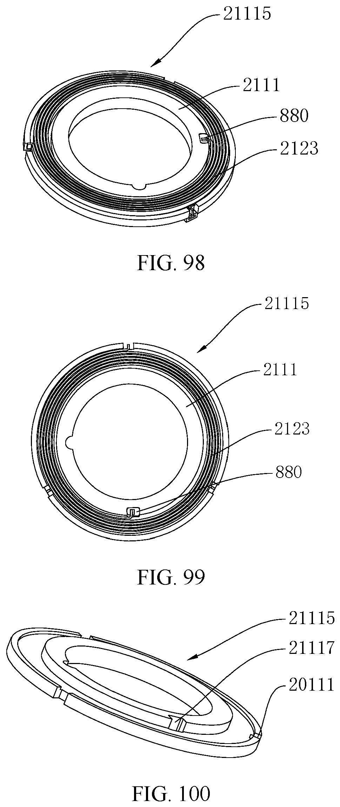

In some embodiments, as shown in FIG. 98, FIG. 99, and FIG. 100, the second iron core unit 21115 includes a first-type iron core 2111, a coil 2123, and a bottom wiring apparatus 880. The coil 2123 is sleeved above the first-type iron core 2111, the bottom wiring apparatus 880 is located below the first-type iron core 2111, a third internal mounting hole 21117 is provided inside the first-type iron core 2111, and an outer side of the first-type iron core 2111 is further provided with three recesses 20111.

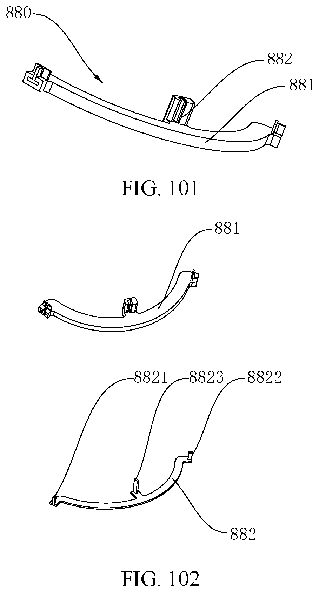

In some embodiments, as shown in FIG. 101 and FIG. 102, the bottom wiring apparatus 880 includes a third insulating member 881 and a third conducting wire 882, and a first-phase connector 8821, a second-phase connector 8822, and a third-phase connector 8823 are provided on the third conducting wire 882. In the second iron core unit 21115, the third-phase connector 8823 is nested in the third internal mounting hole 21117 inside the first-type iron core 2111 and is connected to a second lead-out wire end 214 of the coil 2123. The first-phase connector 8821 and the second-phase connector 8822 are respectively located in two of the recesses 20111 on the outer side of the first-type iron core 2111.

In some embodiments, as shown in FIG. 78 to FIG. 86, the wiring component 2113 includes a long wiring component 21131, a medium wiring component 21132, and a short wiring component 21133. The long wiring component 21131, the medium wiring component 21132, and the short wiring component 21133 have the same function and similar features. A length of the long wiring component 21131 is greater than a length of the medium wiring component 21132, and the length of the medium wiring component 21132 is greater than a length of the short wiring component 21133.

In some embodiments, as shown in FIG. 78, FIG. 79, and FIG. 80, a first limiting feature 21151 is further disposed on the insulating layer 2115 of the wiring component 2113, to facilitate positioning of the wiring component 2113.

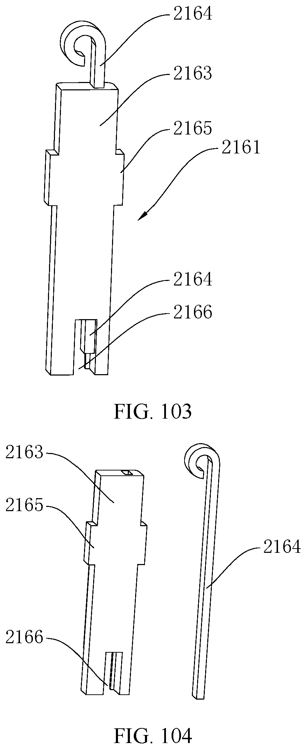

In some embodiments, as shown in FIG. 103 to FIG. 106, the wire lead-out component 216 includes a long wire lead-out component 2161 and a short wire lead-out component 2162, and wiring apparatuses of the long wire lead-out component 2161 and the short wire lead-out component 2162 have the same function and similar features. A length of the long wire lead-out component 2161 is greater than a length of the short wire lead-out component 2162.

In some embodiments, as shown in FIG. 103 to FIG. 106, both the long wire lead-out component 2161 and the short wire lead-out component 2162 include a fourth insulating member 2163 and a fourth conducting wire 2164, and a wire clamping recess 2166 is formed at bottoms of the fourth insulating member 2163 and the fourth conducting wire 2164. The recess 2166 is configured to connect to the coil 2123.

In some embodiments, as shown in FIG. 103 to FIG. 106, a second limiting feature 2165 is disposed on the fourth insulating member 2163, to facilitate positioning of the wire lead-out component 216.

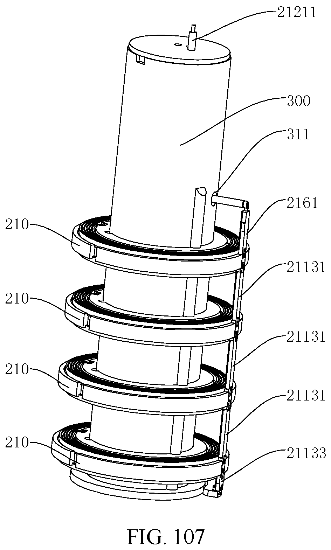

In some embodiments, as shown in FIG. 107 to FIG. 110, a plurality of second-type iron cores 2112, a plurality of long wiring components 21131, a short wiring component 21133, and a long wire lead-out component 2161 form a first-phase structure of the second component 210. In the first-phase structure, first lead-out wire ends 2018 of coils 2123 of all the second-type iron core 2112 are located in the same direction as viewed from the top down. A first lead-out wire end 2018 of an upper coil 2123 of a first-layer second-type iron core 2112 is connected to the first-phase lead wire 21211 through a fourth conducting wire 2161 of the long wire lead-out component 2161 to form a first-phase winding wire lead-out structure. A first lead-out wire end 2018 of a lower coil 2123 of the first-layer second-type iron core 2112 is connected to a first lead-out wire end 2018 of an upper coil 2123 of a second-layer second-type iron core 2112 from the top down through a conductive member 2114 of a first long wiring component 21131, a first lead-out wire end 2018 of a lower coil 2123 of the second-layer second-type iron core 2112 is connected to a first lead-out wire end 2018 of an upper coil 2123 of a third-layer second-type iron core 2112 from the top down through a conductive member 2114 of a second long wiring component 21131, and so on, until a first lead-out wire end 2018 of a lower coil 2123 of a last-layer second-type iron core 2112 is connected to the first-phase connector 8821 of the bottom wiring apparatus 880, to form the first-phase structure of the second component 210.

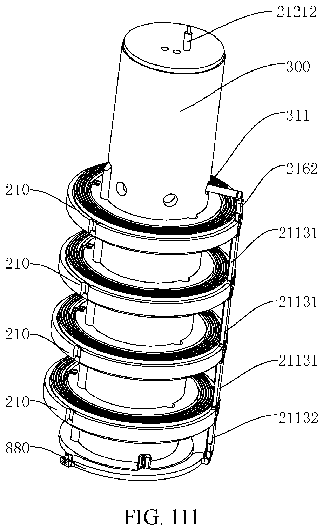

In some embodiments, as shown in FIG. 111 to FIG. 114, a plurality of second-type iron cores 2112, a plurality of long wiring components 21131, a medium wiring component 21132, and a short wire lead-out component 2162 form a second-phase structure of the second component 210. In the second-phase structure, first lead-out wire ends 2018 of coils 2123 of all the second-type iron core 2112 are located in the same direction as viewed from the top down and are staggered relative to the first-phase structure. Similar to the first-phase structure, a first lead-out wire end 2018 of an upper coil 2123 of a first-layer second-type iron core 2112 is connected to the second-phase lead wire 21212 through a fourth conducting wire 2164 of the short wire lead-out component 2162, to form a second-phase winding wire lead-out structure. A first lead-out wire end 2018 of a lower coil 2123 of the first-layer second-type iron core 2112 is connected to a first lead-out wire end 2018 of an upper coil 2123 of a second-layer second-type iron core 2112 from the top down through a conductive member 2114 of a first long wiring component 21131, a first lead-out wire end 2018 of a lower coil 2123 of the second-layer second-type iron core 2112 is connected to a first lead-out wire end 2018 of an upper coil 2123 of a third-layer second-type iron core 2112 from the top down through a conductive member 2114 of a second long wiring component 21131, and so on, until a first lead-out wire end 2018 of a lower coil 2123 of a last-layer second-type iron core 2112 is connected to the second-phase connector 8822 of the bottom wiring apparatus 880, to form the second-phase structure of the second component 210.

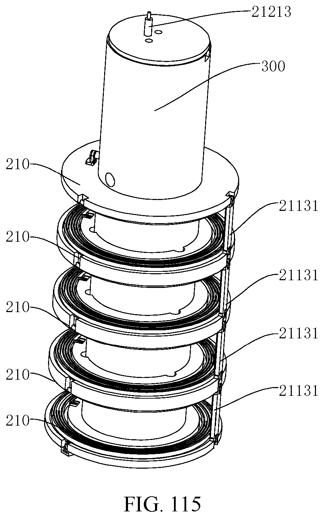

In some embodiments, as shown in FIG. 115 to FIG. 118, the first iron core unit 21114, a plurality of second-type iron cores 2112, the second iron core unit 21115, and a plurality of long wiring components 21131 form a third-phase structure of the second component 210. In the third-phase structure, first lead-out wire ends 2018 of all coils 2123 are located in the same direction as viewed from the top down, and are staggered relative to the first-phase structure and the second-phase structure. In the third-phase structure, the first iron core unit 21114 is located at a first layer, and the second lead-out wire end 214 of the coil 2123 of the first iron core unit 21114 is connected to the third-phase lead wire 21213 through the inner wire lead-out apparatus 860, to form a third-phase winding wire lead-out structure. A second layer to a penultimate layer includes the second-type iron cores 2112. A last layer includes the second iron core unit 21115. A first lead-out wire end 2018 of a lower coil 2123 of a first-layer second-type iron core 2112 is connected to a first lead-out wire end 2018 of an upper coil 2123 of a second-layer second-type iron core 2112 from the top down through a conductive member 2114 of a first long wiring component 21131, a first lead-out wire end 2018 of a lower coil 2123 of the second-layer second-type iron core 2112 is connected to a first lead-out wire end 2018 of an upper coil 2123 of a third-layer second-type iron core 2112 from the top down through a conductive member 2114 of a second long wiring component 21131, and so on, until a first lead-out wire end 2018 of a lower coil 2123 of a last-layer second-type iron core 2112 is connected to a first lead-out wire end 2018 of the coil 2123 of the bottom second iron core unit 21115 from the top down through a conductive member 2114 of a long wiring component 21131, where the third-phase connector 8823 of the bottom wiring apparatus 880 is already connected to the second lead-out wire end 214 of the coil 2123, to form the third-phase structure of the second component 210.

In conclusion, outer edges of the wiring component 2113 and the wire lead-out component 216 in this embodiment do not exceed an outer boundary of the iron core assembly 211, and both the wiring component 2113 and the wire lead-out component 216 have limiting features, so that positioning can be performed during assembly.

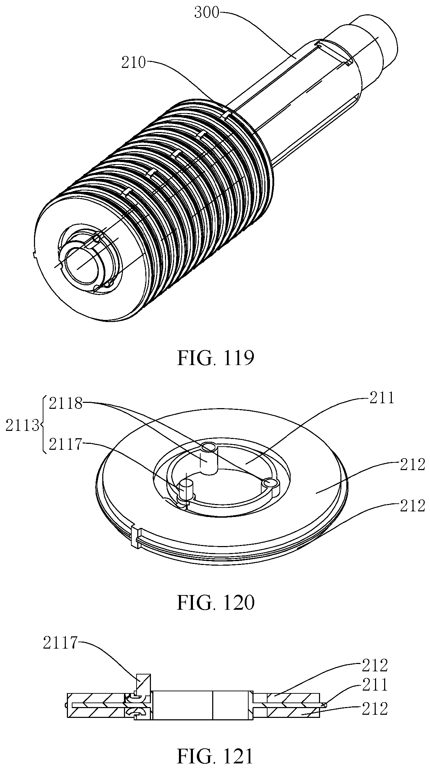

In some embodiments, as shown in FIG. 119 to FIG. 122, the wiring component 2113 includes a first connector 2117 and a second connector 2118, and the first connector 2117 and the second connector 2118 are in insertion cooperation. Both the first connector 2117 and the second connector 2118 are provided on the iron core assembly 211 and are electrically connected to the coil 2123. In other words, the wiring component 2113 is not limited to the method of forming the foregoing embodiment. The wiring component 2113 may alternatively include the first connector 2117 and the second connector 2118. The first connector 2117 and the second connector 2118 are provided on the iron core assembly 211 and are electrically connected to the coil 2123. In this way, after the first connector 2117 and the second connector 2118 are connected to an external component, electrical connection between the coil 2123 and an external structural member can be implemented, to reduce connection difficulty of the coil 2123.

In some embodiments, one of the first connector 2117 and the second connector 2118 is a jack, and the other one of the first connector 2117 and the second connector 2118 is a plug. The jack and the plug are in insertion cooperation, to implement electrical connection between the coil 2123 and the external structural member, and reduce connection difficulty of the coil 2123.

It will be noted that the wire lead-out structure in this embodiment is a related structure designed for wire lead-out of the winding assembly 212 from the inside of the electromagnetic actuator 1000 to the outside thereof.

The second component 210 is a part of the stator component of the electromagnetic actuator 1000. The stator component is located on an inner side of the entire structure, including the connection wires 2121, the wire passing channels 330, the center rod 300, the first limiting member 380, the winding assemblies 212, the iron core assemblies 211, the guide bearing 840, and the limiting nut 850, where the winding assemblies 212 and the iron core assemblies 211 form the second component 210 (for the specific structure of the electromagnetic actuator 1000, refer to FIG. 22).

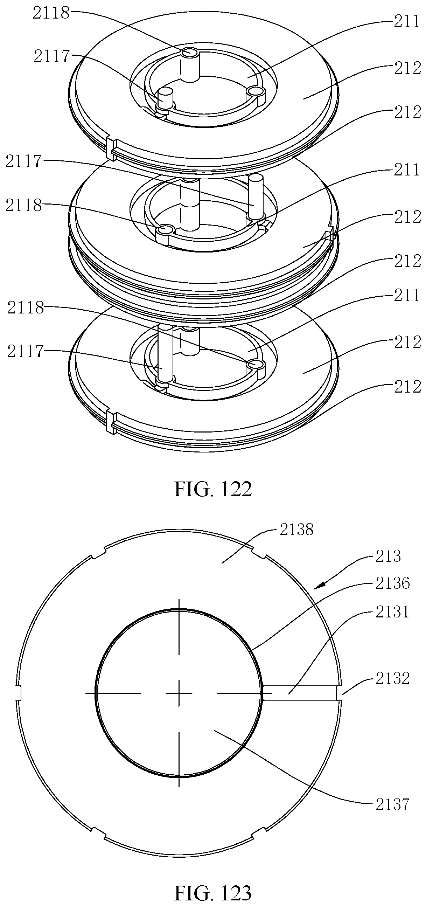

In some embodiments, as shown in FIG. 119, FIG. 120, and FIG. 121, both the winding assembly 212 and the iron core assembly 211 are circular ring-shaped, and winding assemblies 212 are assembled on both upper and lower surfaces of the iron core assembly 211. The second component 210 is formed by stacking several winding assemblies 212 and iron core assemblies 211 layer upon layer (as shown in FIG. 122). After stacking is completed, the second component 210 is sleeved on the center rod 300, and finally forms a cylindrical shape.

In some embodiments, three recesses 20111 are evenly distributed on an upper circumference of the iron core assembly 211, the three recesses 20111 respectively correspond to the three-phase wires of the motor, and three second connectors 2118 are provided on the iron core assembly 211. A winding wire of the winding assembly 212 extends out through one of the second connectors 2118 and is formed as a first connector 2117, so that the first connector 2117 is provided on the iron core assembly 211. The other two second connectors 2118 are through-type. On the corresponding other surface, there is also one second connector 2118 for wire lead-out with the other two wire lead-out ports being through-type. First connectors 2117 on both surfaces of the iron core assembly 211 are respectively formed as male and female fitting members that are convex and concave.

In some embodiments, the winding assemblies 212 and the iron core assemblies 211 are sequentially stacked in an order of three phases A, B, and C. That is, winding assemblies 212 of the same phase are not adjacent. Therefore, as shown in FIG. 122, a first connector 2117 on one surface of an iron core assembly 211 needs to pass through a plurality of iron core assemblies 211 assembled with winding assemblies 212 of other phases to be connected to an iron core assembly 211 assembled with a winding assembly 212 of the same phase. Therefore, the first connector 2117 is long.

It will be noted that in this embodiment, connection between the winding assemblies 212 of the same phase is implemented by using the first connector 2117, so that same-phase winding connection does not require welding and is firm and reliable. In addition, the first connector 2117 passes through an inner side of the iron core assembly 211 and does not affect mutual movement of the second component 210 and the first component 220, to avoid damage to the winding wire caused by movement between the second component 210 and the first component 220, and ensure performance of the coil 2123.

In some embodiments, the connection wire 2121 passes into the wire passing channel 330 from above and passes out from below. Three pipe outlets are provided below the wire passing channel 330, and the center rod 300 has three wire lead-out ports 311. The three pipe outlets of the wire passing channel 330, the three wire lead-out ports of the center rod 300, and the three second connectors 2118 on the iron core assembly 211 are in one-to-one correspondence. During assembly, the wire passing channels 330 are provided in the center rod 300. The connection wires 2121 sequentially pass through the wire passing channels 330 and the wire lead-out ports 311 of the center rod 300.

Through the foregoing arrangement, the lead-out wire can be fastened in the entire process. The center rod 300 serves to fasten and protect the wiring, so that the problem that there is the risk of being squeezed and scratched in the conventional technologies is well resolved. In addition, the first limiting member 380 is sleeved above the center rod 300. The first limiting member 380 and the outlet of the center rod 300 jointly fasten the connection wire 2121. In addition, the first limiting member 380 is made of rubber material, and can buffer impact of neighboring members on the connection wire 2121 in the extreme working condition, to protect the connection wire 2121 and ensure reliability of the electrical system.

In conclusion, in the wire lead-out structure of the electromagnetic actuator 1000 in this embodiment, the relative relationship between neighboring members is used for an ingenious design to resolve the problem of difficult wire lead-out, which has advantages of safety and reliability, convenient disassembly and assembly, compact space design, and the like.

In some embodiments, as shown in FIG. 60, FIG. 61, and FIG. 62, the insulating framework 213 is disposed between the iron core assembly 211 and the winding assembly 212, the lead wire channel 2131 is provided on an axial end surface of the insulating framework 213, and the lead wire channel 2131 extends in a radial direction of the iron core assembly 211. The insulating framework 213 is disposed between the iron core assembly 211 and the winding assembly 212, to implement insulation cooperation between the iron core assembly 211 and the winding assembly 212, and ensure performance of the second component 210.

In addition, the lead wire channel 2131 extending in the radial direction of the iron core assembly 211 is provided on the axial end surface of the insulating framework 213, so that the lead-out wire 21231 of the coil 2123 is led out to the outer side of the iron core assembly 211, to facilitate wiring of the coil 2123 and connection to the power supply.

In some embodiments, as shown in FIG. 123 to FIG. 127, an outer peripheral wall of the insulating framework 213 is provided with a plurality of wire passing slots 2132 that are evenly spaced apart, and at least one wire passing slot 2132 communicates with the lead wire channel 2131, so that the connection wire 2121 connecting to the coil 2123 is led out.

It will be noted that, the insulating framework 213 in this embodiment is provided, so that the iron core assembly 211, the winding assembly 212, and the insulating framework 213 can be formed as independent members, to reduce difficulty in designing the iron core assembly 211, the winding assembly 212, and the insulating framework 213. In addition, the insulating framework 213 in this embodiment has advantages of low processing difficulty, convenient repair, a simple structure, high consistency and the like in terms of both arrangement space and production efficiency.

In some embodiments, as shown in FIG. 123 to FIG. 127, the insulating framework 213 mainly includes the lead wire channel 2131, the second annular slot 2138, and the wire passing slot 2132.

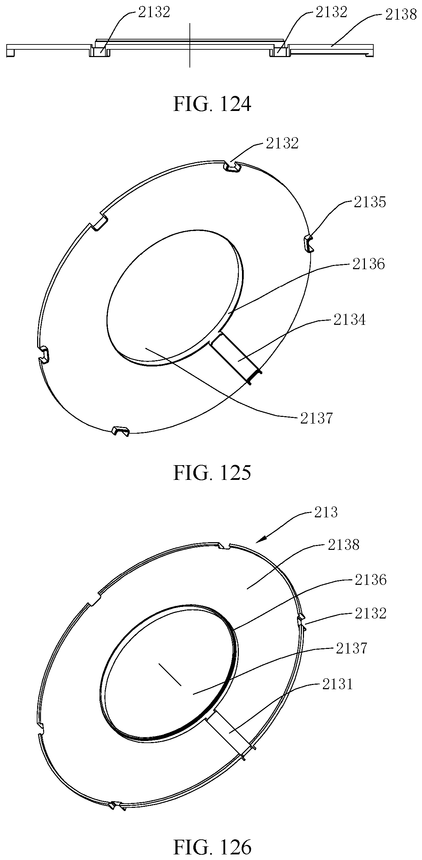

In some embodiments, as shown in FIG. 123 and FIG. 126, six wire passing slots 2132 are provided on an outer periphery of the insulating framework 213 in the circumferential direction of the outer periphery, and locations of the six wire passing slots 2132 are evenly distributed. That is, two slots are spaced 60° apart from each other. The second annular slot 2138 is provided on the surface of the insulating framework 213. Winding space is formed between the second annular slot 2138, an inner side wall 2136 of the second annular slot 2138, and an outer side wall of the second annular slot 2138, where the winding space is used to assemble the coil 2123.

In some embodiments, a second boss structure 2134 formed by the lead wire channel 2131 and an insulating portion 2135 formed by the wire passing slot 2132 are provided on an opposite side of a side that is of the insulating framework 213 and on which the second annular slot 2138 is provided. The second boss structure 2134 and the insulating portion 2135 are mainly configured to nest with a structural member on the iron core assembly 211, which greatly improves space utilization and reduces an occupied volume of the member, so that a volume of the entire structure can be reduced, and cooperation strength between the insulating framework 213 and the iron core assembly 211 can be ensured.

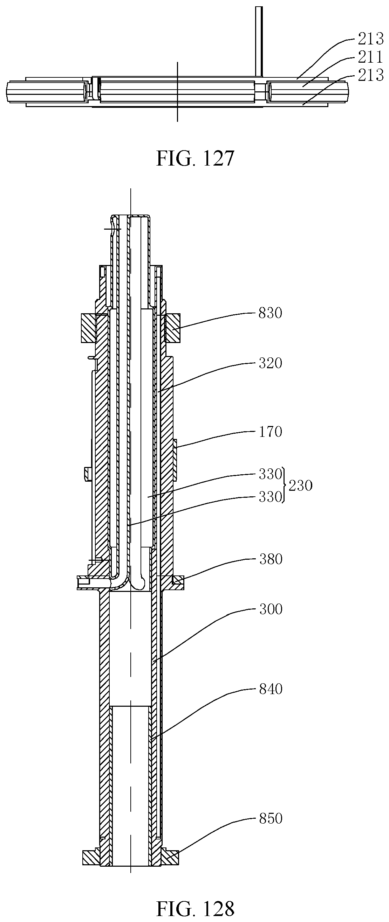

Through the foregoing arrangement, during use, the iron core assembly 211, the winding assembly 212, and the insulating framework 213 are assembled and combined into a single module (as shown in FIG. 127). The insulating framework 213 is nested in the first annular slot 21111 on the surface of the iron core assembly 211, where the second boss structure 2134 of the insulating framework 213 is combined with the wire arrangement slot 2013 in the first annular slot 21111. The insulating portion 2135 formed by the wire passing slot 2132 is aligned with the recess 20111 in the circumferential direction of the iron core assembly 211, so that when the coils 2123 are connected in series outside the iron core assembly 211, there is larger operation space, to facilitate subsequent welding and wiring between the coils 2123 and facilitate an operation.

It will be noted that, in some embodiments, the second component 210 is formed by stacking modules one by one, and the module is formed by assembling the iron core assembly 211, the winding assembly 212, and the insulating framework 213. Only on one side of a module located at the end portion of the second component 210 is provided with the winding assembly 212 and the insulating framework 213, and both ends of an iron core assembly 211 of a module located in the middle portion of the second component 210 in the axial direction are provided with winding assemblies 212 and insulating frameworks 213. During connection to a three-phase power supply, coils 2123 of a winding assembly 212 of the same module are in the same phase, and a lead wire location and a lead-out wire location of the coil 2123 are 180° apart. A lead wire of the coil 2123 passes through the lead wire channel 2131 on the insulating framework 213, then passes through the wire passing slot 2132, and extends to an outer periphery of the iron core assembly 211. Series wiring inside the module is performed at a part at which wire passing slots 2132 of the insulating frameworks 213 on both sides are connected, and wiring is performed through welding. Wiring is performed in the wire passing slot 2132, to have large operation space.

In addition, because the lead wire channel 2131 is provided on the surface of the insulating framework 213, the structure of the insulating framework 213 is unique, so that assembly and wiring errors can be effectively avoided, and production efficiency is improved.

In some embodiments, during connection to the three-phase power supply, series wiring not only needs to be performed between winding coils inside the module, but also needs to be performed between modules connected to the same phase of the power supply. Both a spacing angle between lead wires and a spacing angle between the lead wire and a lead-out wire are multiples of 60°. Therefore, the six evenly distributed wire passing slots 2132 are provided on the insulating framework 213 in the circumferential direction of the outer periphery, which improves universality and utilization of the member, to greatly improve production efficiency, reduce costs, and facilitate mass production.

In some embodiments, an assembly hole 2137 is provided in a center of the insulating framework 213, to facilitate assembly and cooperation between the insulating framework 213 and the iron core assembly 211. In an axial direction of the assembly hole 2137, an outer edge of the insulating framework 213 protrudes from the first annular slot 21111, and an inner edge of the insulation fixing 213 protrudes from the first annular slot 21111, to implement insulation between the coil winding and a stator iron core.

In some embodiments, the inner side wall 2136 surrounds an outer periphery of the assembly hole 2137, to form a hollow cylinder with a specific wall thickness between the assembly hole 2137 of the insulating framework 213 and the second annular slot 2138.

In some embodiments, a stepped limiting platform is provided on a surface of the hollow cylinder, and two adjacent coils 2123 of different phases are separated by insulating paper 2122. The insulating paper 2122 is nested in a part of the hollow cylinder with a small wall thickness, to facilitate fastening of the insulating paper 2122. In addition, the structure is compact and material utilization is high.

In some embodiments, the center rod 300 is provided with a first limiting structure, the iron core assembly 211 is provided with a limiting portion, and the limiting portion cooperates with the first limiting structure to limit rotation of the iron core assembly 211 relative to the center rod 300, so that location stability of the iron core assembly 211 is improved, and the center rod 300 and the housing 100 can effectively move relatively under coupling cooperation between the first component 220 and the second component 210, to ensure working performance of the electromagnetic actuator 1000.

In some embodiments, the limiting portion on the iron core assembly 211 will be understood as the foregoing positioning protrusion 21415.

In some embodiments, a cylindrical pin is disposed between the iron core assembly 211 and the center rod 300 to limit rotation of the iron core assembly 211 relative to the center rod 300.

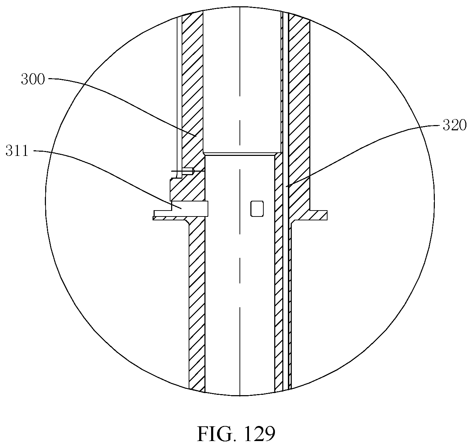

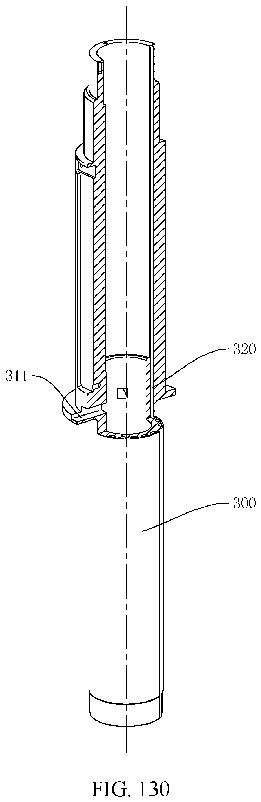

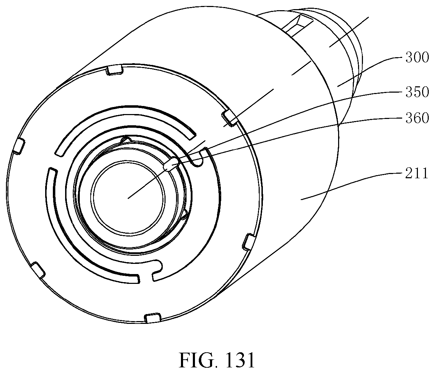

In some embodiments, as shown in FIG. 128 to FIG. 131, the center rod 300 is provided with the first positioning portion 340 (for the specific structure of the first positioning portion 340, refer to FIG. 25), the iron core assembly 211 is provided with the second positioning portion 350, and the first positioning portion 340 cooperates with the second positioning portion 350, so that the center rod 300 and the iron core assembly 211 are relatively stationary, to implement circumferential limiting of the iron core assembly 211 and the center rod 300, prevent the iron core assembly 211 from rotating around the center rod 300, and ensure working performance of the iron core assembly 211.

In some embodiments, as shown in FIG. 128 to FIG. 131, the first positioning portion 340 is formed as a recess provided in the outer peripheral wall of the center rod 300, the second positioning portion 350 is formed as a recess provided in the iron core assembly 211, and the anti-rotation rod 360 is disposed between the first positioning portion 340 and the second positioning portion 350, to limit locations of the center rod 300 and the iron core assembly 211, so that the center rod 300 and the iron core assembly 211 are relatively stationary, difficulty in limiting the center rod 300 and the iron core assembly 211 is reduced, and it is ensured that wire lead-out of the coil 2123 is consistent with a design state.

It will be noted that, through the foregoing arrangement, a problem that when the center rod 300 cooperates with the tower top, the iron core assembly 211 rotates with the assembly nut 830 around a center axis of the center rod 300 and cannot be tightened can be further avoided.

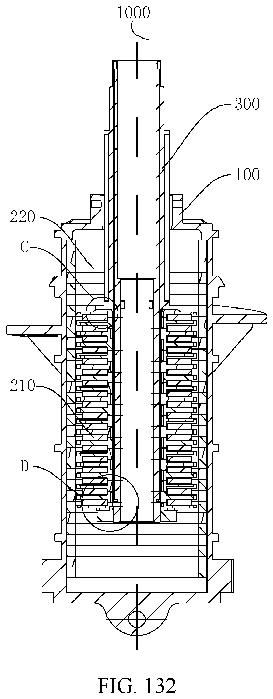

In some embodiments, as shown in FIG. 132 to FIG. 136, the electromagnetic actuator 1000 further includes the first limiting member 380 and the second limiting member 390, and the first limiting member 380 and the second limiting member 390 are spaced apart on the center rod 300 in the axial direction of the center rod 300. The first limiting member 380 and the second limiting member 390 separately abut against the iron core assembly 211 to limit axial displacement of the iron core assembly 211, to prevent the iron core assembly 211 from moving relative to the center rod 300 in the axial direction of the center rod 300. In this way, the iron core assembly 211 is more stably disposed on the center rod 300, and the magnetic core 211 is prevented from falling off the center rod 300, to permit stable and reliable mounting of the iron core assembly 211 on the center rod 300.

In some embodiments, as shown in FIG. 132 to FIG. 136, the first limiting member 380 and the second limiting member 390 are separately configured to abut against the inner wall of the housing 100, to limit a moving range of the housing 100. Herein, in a moving process of the housing 100, the first limiting member 380 and the second limiting member 390 may separately abut against the inner wall of the housing 100, to limit the moving range of the housing 100 and ensure stability of the location to which the housing 100 moves, so that working performance of the electromagnetic actuator 1000 is ensured.

In some embodiments, as shown in FIG. 132 to FIG. 136, the center rod 300 and one of the first limiting member 380 and the second limiting member 390 are an integrated member, and the center rod 300 and the other one of the first limiting member 380 and the second limiting member 390 are split members. The integrated member can reduce a quantity of members of the electromagnetic actuator 1000 and reduce structural complexity of the electromagnetic actuator 1000.

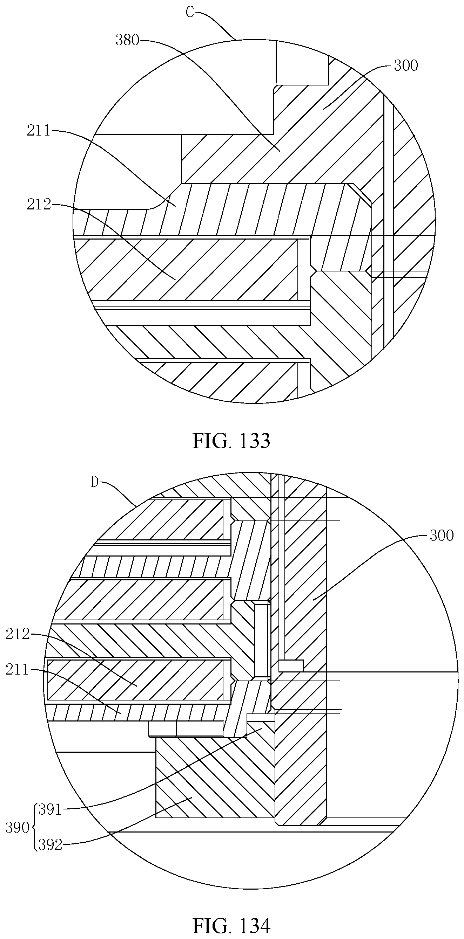

In some embodiments, as shown in FIG. 132 and FIG. 133, the first limiting member 380 and the center rod 300 are an integrated member. A relative location between the first limiting member 380 and the center rod 300 is unchanged. Therefore, this facilitates cooperation between the first limiting member 380 and the iron core assembly 211 when the iron core assembly 211 is sleeved on the center rod 300, to define a location of the iron core assembly 211 in the axial direction of the center rod 300 by using the first limiting member 380.

In some embodiments, as shown in FIG. 132 and FIG. 133, the center rod 300 is provided with a protrusion portion that protrudes radially outward, to define the first limiting member 380, so that the first limiting member 380 and the center rod 300 are an integrated member, and connection between the first limiting member 380 and the center rod 300 is omitted.

In some embodiments, the other one of the first limiting member 380 and the second limiting member 390 threadedly cooperates with the center rod 300. Herein, when the center rod 300 and the one of the first limiting member 380 and the second limiting member 390 are an integrated member, the other one of the first limiting member 380 and the second limiting member 390 threadedly cooperates with the center rod 300, to fasten the other one of the first limiting member 380 and the second limiting member 390 to the center rod 300, and ensure location stability of the other one of the first limiting member 380 and the second limiting member 390, so that the first limiting member 380 cooperates with the second limiting member 390 to limit axial displacement of the iron core assembly 211.

In some embodiments, the second limiting member 390 is formed as a threaded member, and the threaded member threadedly cooperates with the center rod 3000, so that the second limiting member 390 can be detachably disposed on the center rod 300.

In some embodiments, as shown in FIG. 132 and FIG. 134, the other one of the first limiting member 380 and the second limiting member 390 includes a first part 391 and a second part 392. The first part 391 cooperates with the center rod 300. In the radial direction of the center rod 300, the second part 392 is located on a radially outer side of the first part 391. In the axial direction of the center rod 300, an axial length of the first part 391 is greater than an axial length of the second part 392, a part of the second part 392 abuts against the iron core assembly 211, and the other part of the second part 392 is spaced apart from the iron core assembly 211. The axial length of the first part 391 is set to be greater than the axial length of the second part 392, to increase a cooperation area between the first part 391 and the center rod 300. In this way, the other one of the first limiting member 380 and the second limiting member 390 can be securely disposed on the center rod 300. In addition, the iron core assembly 211 includes a wire lead-out slot and a wire harness. Therefore, the axial length of the first part 391 is set to be greater than the axial length of the second part 392, so that the axial length of the second part 392 can be small, to facilitate clearance of the harness.

In addition, the second part 392 is located on the radially outer side of the first part 391, so that a part of the second part 392 abuts against the iron core assembly 211, to limit axial displacement of the iron core assembly 211 by using the other one of the first limiting member 380 and the second limiting member 390.

In addition, the other part of the second part 392 is spaced apart from the iron core assembly 211, to facilitate heat dissipation of the iron core assembly 211. In addition, there is a gap between the other part of the second part 392 and the iron core assembly 211, to avoid stress concentration.

It will be explained herein that the inner side and the outer side are defined relative to the axis of the center rod 300. The first part 391 is closer to the center rod 300 and the second part 392 is farther away from the center rod 300. Therefore, in the radial direction of the center rod 300, the second part 392 is located on the radially outer side of the first part 391.

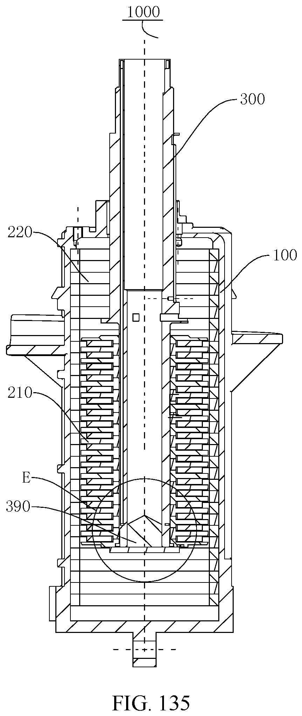

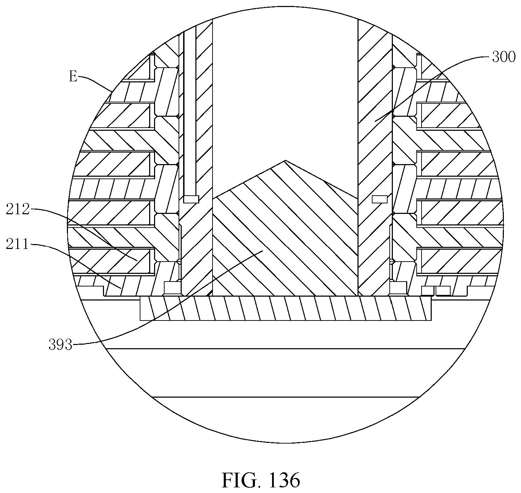

In some embodiments, as shown in FIG. 135 and FIG. 136, the other one of the first limiting member 380 and the second limiting member 390 is mounted to an end portion of the center rod 300 and partially extends into the center rod 300, so that the other one of the first limiting member 380 and the second limiting member 390 is detachably disposed in the center rod 300. In this way, after the iron core assembly 211 is sleeved on the center rod 300 in the axial direction of the center rod 300, at least one of the first limiting member 380 and the second limiting member 390 is mounted on the center rod 300, to limit displacement of the iron core assembly 211 in the axial direction of the center rod 300 after the iron core assembly 211 is mounted in place.

In some embodiments, the second part 392 of the other one of the first limiting member 380 and the second limiting member 390 is formed as a mounting structure with a buffer member. In this way, when the other one of the first limiting member 380 and the second limiting member 390 is fastened and mounted to the center rod 300, the other one of the first limiting member 380 and the second limiting member 390 can further play a buffering role.

In some embodiments, the first limiting member 380 and the second limiting member 390 are made of a rubber material, so that the first limiting member 380 and the second limiting member 390 can play a buffering role.

In some embodiments, as shown in FIG. 135 and FIG. 136, the second limiting member 390 is mounted to the end portion of the center rod 300 and partially extends into the center rod 300. The second limiting member 390 includes a piston portion 393, and the piston portion 393 is made of an elastic material. When the piston portion 393 is extended into the center rod 300, the piston portion 393 is elastically deformed and compressed to have an interference fit with the center rod 300, to fasten the piston portion 393 to the center rod 300.

A partial structure of the second limiting member 390 protrudes from the piston portion 393 in the radial direction of the center rod 300, and a partial structure of the second limiting member 390 cooperates with the iron core assembly 211 to limit displacement of the iron core assembly 211 in the axial direction of the center rod 300.

In some embodiments, the first limiting member 380 and the second limiting member 390 are further formed as a limiting component of the second component 210, to limit relative displacement of the second component 210.

In some embodiments, in the operating process of the electromagnetic actuator 1000, the iron core assembly 211 and the housing 100 perform linear movement relatively, the first limiting member 380 may serve as a lower limit to limit movement of the housing 100 at the same time, and the second limiting member 390 may serve as an upper limit to limit movement of the housing 100 at the same time.

In a specific embodiment, the first limiting member 380 serves to limit a press-fitting depth of the iron core assembly 211. After press-fitting is completed, the second limiting member 390 is connected to a bottom of the center rod 300, to prevent the iron core assembly 211 from falling down in the axial direction.

It will be noted that specific implementations of the first limiting member 380 and the second limiting member 390 include but are not limited to a nut, a piston, an integrated stepped surface, and the like.

In some embodiments, as shown in FIG. 128, FIG. 129, and FIG. 130, the center rod 300 is provided with at least one cooling chamber 320 for accommodating a cooling medium, so that the center rod 300 can be filled with the cooling medium, to facilitate heat dissipation of the iron core assembly 211 by using the cooling medium, so that it is ensured that the electromagnetic actuator 1000 can operate efficiently for a long time, and damage to internal members of the electromagnetic actuator 1000 is avoided.

In some embodiments, an inner wall of the center rod 300 is hollow to form the cooling chamber 320. Before assembly, the cooling medium is added from a filling port 323 (for a specific structure of the filling port 323, refer to FIG. 25). Then, the filling port 323 is sealed, so that the cooling chamber 320 becomes a sealed cavity. When the electromagnetic actuator 1000 operates, heat of the iron core assembly 211 is transferred through the center rod 300 to the cooling medium, and the cooling medium transfers the heat to air through a heat exchange cycle, so that it is ensured that the electromagnetic actuator 1000 operates efficiently for a long time, and damage to the internal members is avoided.

In addition, in this design, no additional member such as a cooling pipe is added, and the entire cooling solution is compact in structure.

In some embodiments, a projection of at least a part of the cooling chamber 320 in the radial direction overlaps the iron core assembly 211. In this way, the at least a part of the cooling chamber 320 can directly face the iron core assembly 211 in the radial direction, to facilitate heat dissipation of the iron core assembly 211 by using the cooling medium in the cooling chamber 320, so that it is ensured that the electromagnetic actuator 1000 can operate efficiently for a long time, and damage to the internal members of the electromagnetic actuator 1000 is avoided.

In some embodiments, at least a part of the cooling chamber 320 is located outside the accommodation cavity 130, to facilitate conveyance of the cooling medium toward the cooling chamber 320, and further help reduce a temperature of the cooling medium, so that heat dissipation performance of the cooling medium is ensured.

In some embodiments, the electromagnetic actuator 1000 further includes a first cooling pipe. The first cooling pipe is disposed in the cooling chamber 320, and a first cooling cavity is formed between the first cooling pipe and the cooling chamber 320. One of the first cooling cavity and the first cooling pipe is configured to communicate with a first water inlet, and the other one of the first cooling cavity and the first cooling pipe is configured to communicate with a first water outlet (this example is not shown in the figure). In this way, the cooling medium may circulate and flow between the first cooling cavity and the first cooling pipe, to facilitate heat dissipation of the iron core assembly 211 by using the cooling medium, and ensure heat dissipation performance of the cooling medium.

In some embodiments, the first cooling pipe is spaced apart from an inner wall of the cooling chamber 320 so that a connection channel is formed between the first cooling pipe and the cooling chamber 320, where the connection channel is used for communication between the first cooling cavity and the first cooling pipe. In this way, when one of the first cooling cavity and the first cooling pipe communicates with the first water inlet and the other one of the first cooling cavity and the first cooling pipe communicates with the first water outlet, it can be ensured that the cooling medium between the first water inlet and the first water outlet can sequentially flow through the first cooling cavity and the first cooling pipe, to facilitate circulatory flow of the cooling medium, and facilitate heat dissipation of the iron core assembly 211 by using the cooling medium.

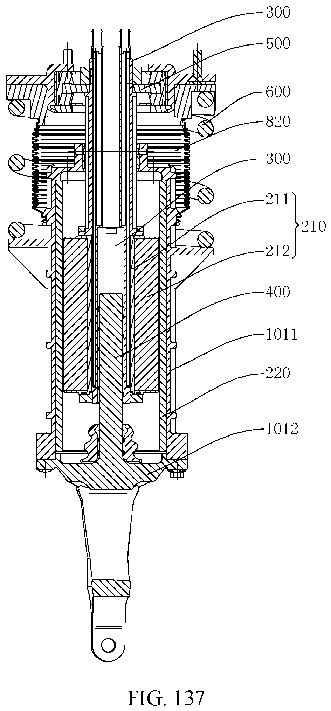

In some embodiments, as shown in FIG. 137 to FIG. 140, the electromagnetic actuator 1000 further includes a second cooling pipe 32111 and a third cooling pipe 32121. Both the second cooling pipe 32111 and the third cooling pipe 32121 are disposed in the cooling chamber 320 and communicate with the cooling chamber 320. One of the second cooling pipe 32111 and the third cooling pipe 32121 is configured to communicate with a second water inlet 3211, and the other one of the second cooling pipe 32111 and the third cooling pipe 32121 is configured to communicate with a second water outlet 3212. In this way, the cooling medium can enter the cooling chamber 320 through the second water inlet 3211 and be discharged from the cooling chamber 320 through the second water outlet 3212, to facilitate circulatory flow of the cooling medium.

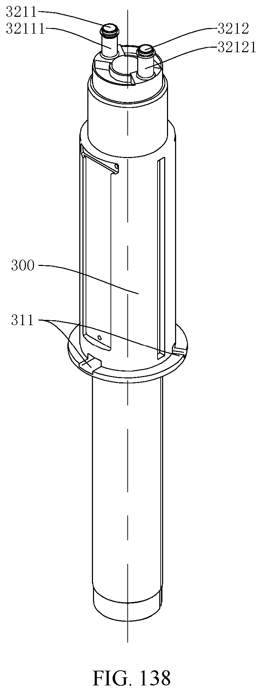

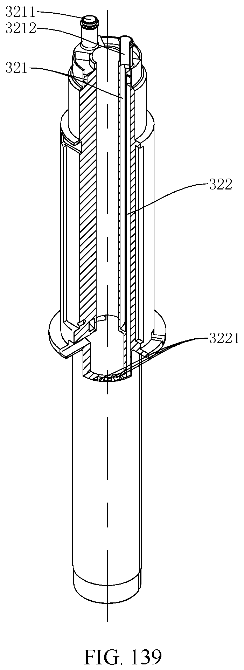

In some embodiments, as shown in FIG. 138 and FIG. 139, the second cooling pipe 32111 communicates with the second water inlet 3211, and the third cooling pipe 32121 communicates with the second water outlet 3212. In this way, the cooling medium can enter the cooling chamber 320 through the second cooling pipe 32111 and be discharged from the cooling chamber 320 through the third cooling pipe 32121, to facilitate circulatory flow of the cooling medium.

In some embodiments, as shown in FIG. 139 and FIG. 140, there are a plurality of cooling cavities 320 and the cooling chamber 320 includes the first cooling chamber 321 and a second cooling chamber 322. In the axial direction of the center rod 300, the first cooling chamber 321 is located on a side of the iron core assembly 211. At least a part of the second cooling chamber 322 is provided directly facing the iron core assembly 211. In this way, the projection of the at least a part of the cooling chamber 320 in the radial direction overlaps the iron core assembly 211, to facilitate heat dissipation of the iron core assembly 211 by using the cooling medium in the cooling chamber 320, so that it is ensured that the electromagnetic actuator 1000 can operate efficiently for a long time, and damage to the internal members of the electromagnetic actuator 1000 is avoided.

Through the strange arrangement, the first cooling chamber 321 and the second cooling chamber 322 can be used to separately dissipate heat from different parts of the electromagnetic actuator 1000, and interact with each other, to finally ensure that the electromagnetic actuator 1000 keeps operating efficiently. The center rod 300 plays a role of rapid heat conduction and heat dissipation in the entire cooling process.

In some embodiments, the second cooling chamber 322 is formed as a closed chamber and is filled with the cooling medium.

In some embodiments, as shown in FIG. 139 and FIG. 140, there are a plurality of second cooling chambers 322 spaced apart in the circumferential direction of the center rod 300, and each second cooling chamber 322 includes a plurality of sub-chambers 3221 spaced apart in the circumferential direction of the center rod 300, to ensure the heat dissipation performance of the cooling chamber 320.

In some embodiments, in the axial direction of the center rod 300, end portions of the plurality of sub-chambers 3221 of each second cooling chamber 322 communicate, so that the cooling medium in each second cooling chamber 322 can circulate and flow between the plurality of sub-chambers 3221, to ensure heat dissipation performance of the second cooling chamber 322.

In some embodiments, at least a partial structure of the cooling chamber 320 is formed as a heat pipe, so that the cooling chamber 320 has a heat dissipation capability, to reduce the temperature of the cooling medium and ensure cooling effect of the cooling medium.

In some embodiments, the center rod 300 is provided with a cooling structure 810 (for a specific structure of the cooling structure 810, refer to FIG. 22). The cooling structure 810 is provided at a part of the center rod 300 that extends out of the accommodation cavity 130, to reduce the temperature of the cooling medium by using the cooling structure 810, and ensure cooling effect of the cooling medium.

In some embodiments, the cooling structure 810 includes a heat dissipator, to improve heat dissipation performance of the cooling structure 810, so that the temperature of the cooling medium is reduced by using the cooling structure 810, and cooling effect of the cooling medium is ensured.

In some embodiments, the cooling structure 810 includes a cooling pipe, and a third water inlet and a third water outlet that communicate with the outside are formed in the cooling pipe. The third water inlet and the third water outlet are used to convey an external cooling medium with a low temperature into the cooling structure 810, to reduce the temperature of the cooling medium in the cooling structure 810. This can further ensure heat dissipation performance of the cooling structure 810, so that the cooling structure 810 can effectively reduce the temperature of the cooling medium, to ensure cooling effect of the cooling medium.

In some embodiments, as shown in FIG. 137, the guide rod 400 is disposed on the housing 100, and a guide hole 310 is formed in the center rod 300. The guide rod 400 cooperates with the guide hole 310, to avoid deviation of the housing 100 in the moving process, that is, ensure that the housing 100 can move in the predetermined direction, and ensure accuracy of movement of the housing 100.

In some embodiments, the guide rod 400 is provided with a cooling cavity, and the cooling cavity is configured to accommodate cooling liquid. In this way, the cooling liquid can be used for heat dissipation of the iron core assembly 211, so that it is ensured that the electromagnetic actuator 1000 can operate efficiently for a long time, and damage to the internal members of the electromagnetic actuator 1000 is avoided.

In some embodiments, a volume of the cooling cavity is greater than a volume of the cooling liquid. In other words, the cooling liquid does not fill the entire cooling cavity, so that the cooling liquid in the cooling cavity can perform a process of gas-liquid transformation, to ensure cooling performance of the cooling liquid.

In some embodiments, a projection of the cooling cavity in the radial direction at least partially overlaps the iron core assembly 211. In this way, the cooling cavity can directly face the iron core assembly 211 in the radial direction, to facilitate heat dissipation of the iron core assembly 211 by using the cooling liquid in the cooling cavity, so that it is ensured that the electromagnetic actuator 1000 can operate efficiently for a long time, and damage to the internal members of the electromagnetic actuator 1000 is avoided.

In some embodiments, the iron core assembly 211 that overlaps the projection of the cooling cavity in the radial direction partially overlaps a projection of the cooling chamber 320 in the radial direction. In other words, a part of the iron core assembly 211 directly faces both the cooling cavity on the guide rod 400 and the cooling chamber 320 on the center rod 300, to maximize heat dissipation performance of the iron core assembly 211.

The following describes a vibration-damping apparatus 5000 in an embodiment of this application.

The vibration-damping apparatus 5000 according to this embodiment of this application includes an electromagnetic actuator 1000.

The electromagnetic actuator 1000 is the foregoing electromagnetic actuator 1000. A specific structure of the electromagnetic actuator 1000 is not described herein again. The electromagnetic actuator 1000 is configured to be connected between the wheel 2000 and a vehicle body.

It will be understood from the foregoing structure that in the vibration-damping apparatus 5000 in this embodiment of this application, the foregoing electromagnetic actuator 1000 is used, so that working performance of the vibration-damping apparatus 5000 can be ensured.

In some embodiments, one of the wheel 2000 and the vehicle body is configured to be connected to the other one of the first component 220 and the second component 210, and the other one of the wheel 2000 and the vehicle body is configured to be connected to the housing 100. In this way, the wheel 2000 and the vehicle body can move relatively, to achieve functions of buffering and vibration absorption, and ensure working performance of the vibration-damping apparatus 5000, which facilitates improvement of comfort of the vehicle 20000.

In some embodiments, the housing 100 is configured to be connected to the wheel 2000, and the other one of the first component 220 and the second component 210 is configured to be connected to the vehicle body. In this way, the electromagnetic actuator 1000 is connected between the wheel 2000 and the vehicle body, to facilitate use of the electromagnetic actuator 1000 for buffering and vibration absorption, to ensure working performance of the vibration-damping apparatus 5000.

In some embodiments, as shown in FIG. 20 to FIG. 26, the vibration-damping apparatus 5000 further includes the center rod 300, and a partial structure of the center rod 300 extends out of the housing 100, so that the center rod 300 and the vehicle body are fastened, and difficulty in connecting the center rod 300 and the vehicle body is reduced. In this way, the electromagnetic actuator 1000 can be connected between the wheel 2000 and the vehicle body, to ensure working performance of the vibration-damping apparatus 5000, which facilitates improvement of comfort of the vehicle 20000.

In some embodiments, as shown in FIG. 21 and FIG. 22, the second component 210 includes the iron core assemblies 211 and the winding assemblies 212, where the iron core assembly 211 is disposed on the center rod 300, the winding assembly 212 is disposed on the iron core assembly 211, and the first component 220 is connected to the housing 100. In this way, the second component 210 and the first component 220 can move relatively, to facilitate use of the vibration-damping apparatus 5000 to buffer impact transmitted by a road surface. In addition, noise input by the road surface and the wheel 2000 can be isolated, to ensure comfort of the vehicle 20000.

In some embodiments, the center rod 300 is configured to be connected to the vehicle body through the upper support 500, so that the vibration-damping apparatus 5000 and the vehicle body are connected, and difficulty in connecting the vibration-damping apparatus 5000 and the vehicle body is reduced.

In some embodiments, the upper support 500 is configured to be integrated with the vehicle body, so that the vibration-damping apparatus 5000 and the vehicle body are connected, and difficulty in connecting the vibration-damping apparatus 5000 and the vehicle body is reduced.

In some embodiments, as shown in FIG. 7, the mounting base 191 is formed on the housing 100, and the vibration-damping apparatus 5000 further includes the spring 600. One end of the spring 600 is configured to be connected to the mounting base 191, and the other end of the spring 600 is configured to be connected to the vehicle body. The spring 600 is configured to provide a partial damping force and withstand partial vibration impact, to improve working performance of the vibration-damping apparatus 5000, and ensure comfort of the vehicle 20000.

In some embodiments, the spring 600 includes at least one of an air spring and a helical spring, to ensure working performance of the spring 600, and ensure that the spring 600 can effectively provide a partial damping force and withstand partial vibration impact.

In some embodiments, as shown in FIG. 22, the housing 100 has the end cover 1012, and the mounting bracket 192 is disposed on the end cover 1012. The mounting bracket 192 is configured to be connected to the wheel 2000, and the mounting bracket 192 is integrally formed with the end cover 1012, so that electromagnetic actuator 1000 and the wheel 2000 are connected, in other words, the vibration-damping apparatus 5000 and the wheel 2000 are connected, and difficulty in connecting the vibration-damping apparatus 5000 and the wheel 2000 is reduced, to facilitate use of the vibration-damping apparatus 5000 to buffer impact transmitted by the road surface. In addition, noise input by the road surface and the wheel can be isolated, to ensure comfort of the vehicle 20000.

In some embodiments, a clearance structure for a steering shaft is formed on the mounting bracket 192, so that the mounting bracket 192 can effectively avoid the steering shaft, to ensure performance of the steering shaft.

In some embodiments, the vibration-damping apparatus 5000 further includes a vibration damper, and the vibration damper is disposed in parallel with the electromagnetic actuator 1000, to maximize improvement of damping effect of the vibration-damping apparatus 5000.

The following describes a suspension system 10000 in an embodiment of this application with reference to the accompanying drawings of this specification.

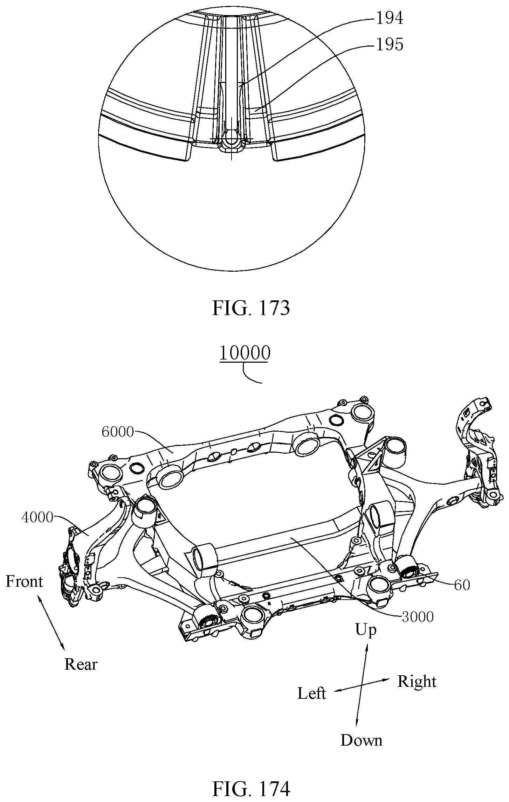

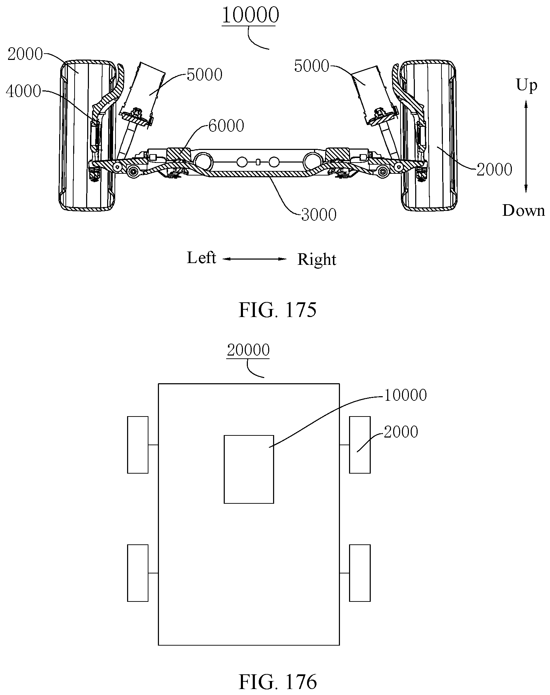

As shown in FIG. 174 and FIG. 175, the suspension system 10000 according to this embodiment of this application includes a vibration-damping apparatus 5000.

The vibration-damping apparatus 5000 is the foregoing vibration-damping apparatus 5000, and a specific structure of the vibration-damping apparatus 5000 is not described herein again.

It will be understood from the foregoing structure that in the suspension system 10000 in this embodiment of this application, the vibration-damping apparatus 5000 is used, so that working performance of the suspension system 10000 can be ensured.

In some embodiments, at least one wheel 2000 is configured to be disposed corresponding to the vibration-damping apparatus 5000, to facilitate use of the vibration-damping apparatus 5000 to buffer impact transmitted by a road surface. In addition, noise input by the road surface and the wheel 2000 can be isolated, to ensure comfort of the vehicle 20000.

In some embodiments, the suspension system 10000 further includes a controller. The controller is configured to control the electromagnetic actuator 1000, so that the electromagnetic actuator 1000 can operate effectively to buffer impact transmitted by the road surface. In addition, noise input by the road surface and the wheel 2000 can be isolated, to ensure comfort of the vehicle 20000.

In some embodiments, a plurality of wheels 2000 each are configured to be disposed corresponding to the vibration-damping apparatus 5000. In other words, the plurality of wheels 2000 each are provided with a corresponding vibration-damping apparatus 5000, to facilitate use of the vibration-damping apparatus 5000 to buffer impact transmitted by the road surface. In addition, noise input by the road surface and the wheel 2000 can be isolated, to ensure comfort of the vehicle 20000.

In some embodiments, the suspension system 10000 further includes a controller. The controller is configured to control the plurality of wheels 2000, so that a plurality of corresponding vibration-damping apparatuses 5000 can all buffer impact transmitted by the road surface, to ensure comfort of the vehicle 20000.

In some embodiments, the suspension system 10000 further includes a plurality of controllers, and the plurality of controllers are disposed in a one-to-one correspondence with the plurality of wheels 2000. Herein, each wheel 2000 corresponds to one controller, to facilitate use of the controller to independently control a vibration-damping apparatus 5000 corresponding to the wheel 2000, and ensure performance of the vibration-damping apparatus 5000.

In some embodiments, the suspension system 10000 further includes a plurality of controllers, and one controller is configured to control at least one wheel 2000. In other words, one controller may control one wheel 2000 or a plurality of wheels 2000, so that the vibration-damping apparatus 5000 corresponding to each wheel 2000 can operate, to ensure performance of the vibration-damping apparatus 5000.

In some embodiments, as shown in FIG. 174 and FIG. 175, the suspension system 10000 further includes a leaf spring 3000, and both ends of the leaf spring 3000 are configured to be connected to a steering knuckle 4000. In this way, when the vehicle 20000 experiences bumping and vibration in a traveling process, the leaf spring 3000 can well buffer impact from the road surface through upward and downward bending deformation, so that a driver and a passenger feel comfortable when taking the vehicle 20000.

In some embodiments, an extension dimension of the leaf spring 3000 in a width direction of the vehicle 20000 is greater than a spacing between two coaxial vibration-damping apparatuses 5000 in the width direction of the vehicle 20000, to ensure performance of the leaf spring 3000.

In some embodiments, a first mounting point configured to be connected to the subframe 6000 and a second mounting point configured to be connected to the steering knuckle 4000 are formed on the leaf spring 3000, and the first mounting point is higher than the second mounting point, to increase a limit displacement amount of the leaf spring 3000 in an up-down direction during buffering deformation, so that the wheel 2000 of the vehicle 20000 is not prone to interference with a structure such as the subframe 6000 when jumping up. This well reduces fatigue damage to the leaf spring 3000, so that the leaf spring 3000 can stably perform a buffering function, and service life of the leaf spring 3000 is longer.

In some embodiments, in a height direction of the vehicle 20000, a distance between the first mounting point to the second mounting point is greater than maximum deflection of the leaf spring 3000 at the second mounting point. In this way, the leaf spring 3000 can be stably within a good tensile deformation range during use, to effectively delay fatigue damage to the leaf spring 3000, and prolong the service life of the leaf spring 3000.

The following describes a vehicle 20000 in an embodiment of this application with reference to the accompanying drawings of this specification.

As shown in FIG. 176, the vehicle 20000 according to this embodiment of this application includes a suspension system 10000.

The suspension system 10000 is the foregoing suspension system 10000, and a specific structure of the suspension system 10000 is not described herein again.

It will be understood from the foregoing structure that in the vehicle 20000 in this embodiment of this application, the suspension system 10000 is used, so that difficulty in assembling the vehicle 20000 can be effectively reduced, and working performance of the vehicle 20000 can be ensured.

Other components of the electromagnetic actuator 1000, the vibration-damping apparatus 5000, the suspension system 10000, and the vehicle 20000 according to embodiments of this application are known to a person of ordinary skill in the art, and are not described in detail herein again.

In the description of this specification, descriptions with reference to the term such as "embodiment", "example", or the like mean that specific features, structures or characteristics described with reference to the embodiment or example are included in at least one embodiment or example of this application. In this specification, example expressions of the terms do not necessarily refer to the same embodiment or example. Moreover, the specific feature, structure, material, or characteristic described may be combined in any suitable manner in any one or more embodiments or examples.

Although embodiments of this application have been shown and described, a person of ordinary skill in the art will understand that various changes, modifications, substitutions and variations may be made to these embodiments without departing from the principle and the purpose of this application, and the scope of this application is defined by the claims and their equivalents.

## Claims

1. An electromagnetic actuator, comprising:
a first component;
a second component, the second component and the first component being coupled so that the first component and the second component are movable relative to each other; and
a detection module, the detection module being configured to detect relative displacement between the first component and the second component.

2. The electromagnetic actuator according to claim 1, further comprising a housing, wherein an accommodation cavity is formed in the housing, both the first component and the second component are disposed in the accommodation cavity, one of the first component and the second component is connected to the housing, and the first component and the second component are coupled so that the one of the first component and the second component moves along an axis with the housing.

3. The electromagnetic actuator according to claim 2, wherein the detection module comprises a laser sensor, and the laser sensor is disposed at a top or a bottom of the accommodation cavity.

4. The electromagnetic actuator according to claim 3, wherein the housing is configured to be fastened to an axle, the electromagnetic actuator further comprises a mounting bracket, the mounting bracket is mounted on an outer side of the housing and configured to connect the axle and the housing, the laser sensor is disposed in the mounting bracket, and a bottom wall of the accommodation cavity is provided with a clearance hole for providing clearance for an optical path of the laser sensor.

5. The electromagnetic actuator according to claim 2, further comprising a center rod, wherein the center rod is connected to the other one of the first component and the second component; and
the detection module comprises a first detection member and a second detection member coupled to the first detection member, the first detection member is disposed on one of the housing and the center rod, and the second detection member is disposed on the other one of the housing and the center rod.

6. The electromagnetic actuator according to claim 5, wherein the housing is configured to be fastened to an axle, and the center rod passes through a top wall of the housing to be connected to a vehicle body; and
the first detection member is disposed on the housing, and the second detection member is disposed on the center rod.

7. The electromagnetic actuator according to claim 5 or 6, wherein the first detection member is disposed on an outer side of the housing.

8. The electromagnetic actuator according to any one of claims 5 to 7, wherein a bearing is disposed between the center rod and the housing, and a part of a projection of the first detection member in a radial direction that overlaps the housing partially overlaps a projection of the bearing in the radial direction.

9. The electromagnetic actuator according to any one of claims 5 to 7, wherein a bearing is disposed between the center rod and the housing, and the first detection member is spaced apart from the bearing.

10. The electromagnetic actuator according to any one of claims 5 to 9, wherein a mounting bracket is disposed at a bottom of the housing, and a clearance channel communicating with the accommodation cavity is provided in the mounting bracket; and
at least a part of the second detection member is located in the clearance channel, and the first detection member is capable of moving into the clearance channel to be coupled to the second detection member.

11. The electromagnetic actuator according to any one of claims 5 to 10, wherein the second detection member forms an arc shape.

12. A vibration-damping apparatus, comprising the electromagnetic actuator according to any one of claims 1 to 11, wherein the electromagnetic actuator is configured to be connected between a wheel and a vehicle body.

13. A suspension system, comprising the vibration-damping apparatus according to claim 12.

14. A vehicle, comprising the suspension system according to claim 13.
